# EUROPÄISCHE PATENTSCHRIFT

(11) **EP 2 361 290 B1**
(45) Veröffentlichungstag und Bekanntmachung des Hinweises auf die Patenterteilung: **22.05.2013**
(21) Anmeldenummer: 09767953.4
(22) Anmeldetag: 26.11.2009
(51) Int. Cl.: C09K 19/30, C09K 19/42

(54) **FLÜSSIGKRISTALLANZEIGE**
LIQUID CRYSTAL DISPLAY
AFFICHAGE À BASE DE CRISTAUX LIQUIDES

(30) Priorität: 22.12.2008 DE 102008064170
(43) Veröffentlichungstag der Anmeldung: 31.08.2011
(73) Patentinhaber: Merck Patent GmbH, 64293 Darmstadt (DE)
(72) Erfinder: GOETZ, Achim, 64665 Alsbach-Hähnlein (DE); KLASEN-MEMMER, Melanie, 67259 Heuchelheim (DE); DEROW, Stephan, 64347 Griesheim (DE)
(86) Internationale Anmeldenummer: PCT/EP2009/008443
(87) Internationale Veröffentlichungsnummer: WO 2010/072302

(56) Entgegenhaltungen:
- EP-A1- 0 959 060
- EP-A1- 1 378 557
- EP-A1- 1 975 220
- WO-A1-89/08633
- US-A1- 2006 198 968
- US-B1- 6 576 303

## Beschreibung

Die vorliegende Erfindung betrifft Flüssigkristall (FK)-Medien zur Verwendung in FK-Anzeigen des PS- (polymer stabilized) oder PSA-(polymer sustained alignment) Typs.

Die derzeit verwendeten Flüssigkristallanzeigen (FK-Anzeigen) sind meist solche des TN-Typs (twisted nematic). Diese weisen allerdings den Nachteil einer starken Blickwinkelabhängigkeit des Kontrastes auf. Daneben sind sogenannte VA-Anzeigen (vertical alignment) bekannt, die einen breiteren Blickwinkel aufweisen. Die FK-Zelle einer VA-Anzeige enthält eine Schicht eines FK-Mediums zwischen zwei transparenten Elektroden, wobei das FK-Medium üblicherweise einen negativen Wert der dielektrischen (DK-) Anisotropie aufweist. Die Moleküle der FK-Schicht sind im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle parallel zu den Elektrodenflächen statt. Weiterhin sind OCB-Anzeigen (optically compensated bend) bekannt, die auf einem Doppelbrechungseffekt beruhen und eine FK-Schicht mit einer sogenannten "bend"-Orientierung und üblicherweise positiver (DK-) Anisotropie aufweisen. Bei Anlegen einer elektrischen Spannung findet eine Umorientierung der FK-Moleküle senkrecht zu den Elektrodenflächen statt. Darüber hinaus enthalten OCB-Anzeigen normalerweise einen oder mehrere doppelbrechende optische Retardationsfilme, um unerwünschte Lichtdurchlässigkeit der "bend"-Zelle im dunklen Zustand zu vermeiden. OCB-Anzeigen besitzen gegenüber TN-Anzeigen einen weiteren Blickwinkel und kürzere Schaltzeiten. Weiterhin sind IPS-Anzeigen (In-Plane Switching) bekannt, die eine FK-Schicht zwischen zwei Substraten enthalten, wovon nur eines eine Elektrodenschicht mit üblicherweise kammförmiger Struktur aufweist. Dadurch wird bei Anlegen einer Spannung ein elektrisches Feld erzeugt, welches eine signifikante Komponente parallel zur FK-Schicht aufweist. Dies bewirkt eine Umorientierung der FK-Moleküle in der Schichtebene. Des weiteren wurden sogenannte FFS-Anzeigen (Fringe-Field-Switching) vorgeschlagen (siehe u.a. S.H. Jung et al., Jpn. J. Appl. Phys., Band 43, No. 3, 2004, 1028), die ebenfalls zwei Elektroden auf dem gleichen Substrat beinhalten, wovon jedoch im Gegensatz zu IPS-Anzeigen nur eine als strukturierte (kammförmige) Elektrode ausgebildet ist, und die andere Elektrode unstrukturiert ist. Dadurch wird ein starkes sogenanntes "fringe field" erzeugt, also ein starkes elektrisches Feld nahe am Rand der Elektroden und in der gesamten Zelle ein elektrisches Feld, welches sowohl eine starke vertikale als auch eine starke horizontale Komponente aufweist. Sowohl IPS-Anzeigen als auch FFS-Anzeigen weisen eine geringe Blickwinkelabhängigkeit des Kontrastes auf.

In VA-Anzeigen des neueren Typs ist die einheitliche Ausrichtung der FK-Moleküle auf mehrere kleinere Domänen innerhalb der FK-Zelle beschränkt. Zwischen diesen Domänen, auch als Tilt-Domänen (engl. "tilt domains") bezeichnet, können Disklinationen existieren. VA-Anzeigen mit Tilt-Domänen weisen, verglichen mit herkömmlichen VA-Anzeigen, eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist. Stattdessen wird die Vorzugsrichtung des Kipp- oder Tiltwinkels (engl. "pretilt") durch eine spezielle Ausgestaltung der Elektroden kontrolliert. In den sogenannten MVA-Anzeigen (multidomain vertical alignment) wird dies üblicherweise dadurch erreicht, dass die Elektroden Erhebungen oder Vorsprünge (engl. "protrusions") aufweisen, die einen lokalen pretilt verursachen. Als Folge werden die FK-Moleküle beim Anlegen einer Spannung in verschiedenen, definierten Regionen der Zelle in unterschiedliche Richtungen parallel zu den Elektrodenflächen orientiert. Dadurch wird ein "kontrolliertes" Schalten erreicht und das Entstehen störender Disklinationslinien vermieden. Diese Anordnung verbessert zwar den Blickwinkel der Anzeige, führt aber zu einer Verringerung ihrer Lichtdurchlässigkeit. Ein Weiterentwicklung von MVA verwendet Protrusions nur auf einer Elektroden-Seite, die gegenüberliegende Elektrode weist hingegen Schlitze (engl. "slits") auf, was die Lichtdurchlässigkeit verbessert. Die geschlitzten Elektroden erzeugen beim Anlegen einer Spannung ein inhomogenes elektrisches Feld in der FK-Zelle, so dass weiterhin ein kontrolliertes Schalten erreicht wird. Zur weiteren Verbesserung der Lichtdurchlässigkeit können die Abstände zwischen den slits und protrusions vergrößert werden, was jedoch wiederum zu einer Verlängerung der Schaltzeiten führt. Beim sogenannten PVA (Patterned VA) kommt man ganz ohne Protrusions aus, indem man beide Elektroden auf den gegenüberliegenden Seiten durch Schlitze strukturiert, was zu einem erhöhten Kontrast und verbesserter Lichtdurchlässigkeit führt, aber technologisch schwierig ist und das Display empfindlicher gegen mechanische Einflüsse macht (Klopfen, engl. "tapping", etc.). Für viele Anwendungen, wie beispielsweise Monitore und vor allem TV-Bildschirme, ist jedoch eine Verkürzung der Schaltzeiten sowie eine Verbesserung des Kontrastes und der Luminanz (Transmission) der Anzeige gefragt.

Eine Weiterentwicklung stellen die sogenannten PS-Anzeigen (polymer stabilized) dar, die auch unter dem Begriff "PSA" (polymer sustained alignment) bekannt sind. Darin wird dem FK-Medium eine geringe Menge (zum Beispiel 0,3%, typischerweise <1%) einer polymerisierbaren Verbindung zugesetzt, welche nach Einfüllen in die FK-Zelle mit oder ohne angelegte elektrische Spannung zwischen den Elektroden in situ polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als "reaktive Mesogene" (RM) bezeichnet, zur FK-Mischung erwiesen. Mittlerweile wird das PSA-Prizip in diversen klassischen FK-Anzeigen angenwendet. So sind beispielsweise PSA-VA-, PSA-OCB-, PS-IPS/FFS- und PS-TN-Anzeigen bekannt. Die in-situ-Polymerisation der polymerisierbaren Verbindung(en) erfolgt zum Beispiel bei PSA-VA-Anzeigen üblicherweise bei angelegter elektrischer Spannung, bei PSA-IPS-Anzeigen mit oder ohne angelegte elektrische Spannung. Wie man in Testzellen nachweisen kann, führt das PSA-Verfahren zu einem pretilt in der Zelle. Bei PSA-OCB-Anzeigen kann man daher erreichen, dass die Bend-Struktur stabilisiert wird, so dass man ohne Offset-Spannung auskommt oder diese reduzieren kann. Im Falle von PSA-VA-Anzeigen wirkt sich dieser pretilt positiv auf die Schaltzeiten aus. Für PSA-VA-Anzeigen kann ein Standard-MVA- bzw -PVA Pixel- und Elektroden-Layout verwendet werden. Darüber hinaus kann man aber beispielsweise mit nur einer strukturierten Elektrodenseite und ohne Protrusions auskommen, was die Herstellung wesentlich vereinfacht und gleichzeitig zu einem sehr guten Kontrast bei sehr guter Lichtdurchlässigkeit führt. PSA-VA-Anzeigen sind beispielsweise in JP 10-036847 A, EP 1 170 626 A2, EP 1 378 557 A1, EP 1 498 468 A1, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C- Chien, Jpn. J. Appl. Phys. 43, 2004, 7643-7647 beschrieben. PS-IPS-Anzeigen sind zum Beispiel in US 6,177,972 und Appl. Phys. Lett. 1999, 75(21), 3264 beschrieben. PS-TN-Anzeigen sind zum Beispiel in Optics Express 2004, 12(7), 1221 beschrieben.

Insbesondere für Monitor- und vor allem TV-Anwendungen ist nach wie vor die Optimierung der Schaltzeiten, wie aber auch des Kontrastes und der Luminanz (also auch Transmission) der FK-Anzeige gefragt. Hier kann das PSA-Verfahren entscheidende Vorteile bringen. Insbesondere beim PSA-VA kann man ohne nennenswerte Einbußen sonstiger Parameter eine Verkürzung der Schaltzeiten erreichen, die mit einem in Testzellen messbaren pretilt korrelieren.

Es hat sich jedoch gezeigt, dass bei Verwendung in PSA-Anzeigen die aus dem Stand der Technik bekannten FK-Mischungen und RMs noch einige Nachteile aufweisen. So eignet sich bei weitem nicht jedes beliebige lösliche RM zur Verwendung in PSA-Anzeigen, und es ist oft schwierig, geeignetere Auswahlkriterien als eben das direkte PSA-Experiment mit pretilt-Messung zu finden. Noch kleiner wird die Auswahl, wenn eine Polymerisation mittels UV-Licht ohne den Zusatz von Photoinitiatoren gewünscht ist, was für bestimmte Anwendungen von Vorteil sein kann. Darüber hinaus sollte das gewählte "Materialsystem" FK-Mischung (nachfolgend auch als "FK-Hostmischung" bezeichnet) + polymerisierbare Komponente eine möglichst geringe Rotationsviskosität sowie möglichst gute elektrische Eigenschaften aufweisen, hierbei ist die sog. "Voltage Holding Ratio" (VHR oder HR) hervorzuheben. Im Zusammenhang mit PSA-Anzeigen ist insbesondere eine hohe VHR nach Bestrahlung mit UV-Licht von zentraler Bedeutung, da die UV-Belichtung ein notwendiger Teil des Herstellungsprozesses der Anzeige ist, aber natürlich auch als "normale" Belastung im fertigen Display auftritt.

Es ergibt sich jedoch das Problem, dass bei weitem nicht alle Kombinationen FK-Mischung + polymerisierbare Komponente für PSA-Anzeigen geeignet sind, weil sich zum Beispiel kein oder kein ausreichender Tilt einstellt, oder weil zum Beispiel die VHR für TFT-Display-Anwendungen unzureichend ist.

Insbesondere wäre es wünschenswert, neue Materialien für PSA-Anzeigen zur Verfügung zu haben, die einen besonders kleinen pretilt-Winkel erzeugen. Besonders wünschenswert wären Materialien, die während der Polymerisation bei gleicher Belichtungszeit einen niedrigeren pretilt-Winkel erzeugen als die bisher bekannten Materialien, und/oder durch deren Verwendung der mit den bekannten Materialien erzielbare (höhere) pretilt-Winkel bereits nach kürzerer Belichtungszeit erreicht werden kann. Dadurch könnten die Produktionszeit (tact time) der Anzeige verkürzt und die Kosten des Produktionsprozesses verringert werden.

Es besteht somit immer noch ein großer Bedarf an PSA-Anzeigen, insbesondere vom VA- und OCB-Typ, sowie FK-Medien und polymerisierbaren Verbindungen zur Verwendung in solchen Anzeigen, welche die oben beschriebenen Nachteile nicht oder nur in geringem Maße zeigen und verbesserte Eigenschaften besitzen. Insbesondere besteht ein großer Bedarf nach PSA-Anzeigen, sowie Materialien zur Verwendung in PSA-Anzeigen, die einen hohen spezifischen Widerstand bei gleichzeitig großem Arbeitstemperaturbereich, kurze Schaltzeiten auch bei tiefen Temperaturen und niedriger Schwellenspannung, einen niedrigen pretilt-Winkel, eine Vielzahl von Graustufen, einen hohen Kontrast und einen weiten Blickwinkel ermöglichen, sowie hohe Werte der "voltage holding ratio" (VHR) nach UV-Belastung aufweisen.

Der Erfindung liegt die Aufgabe zugrunde, neue FK-Medien für die Verwendung in PSA-Anzeigen bereitzustellen, welche die oben angegebenen Nachteile nicht oder in geringerem Maße aufweisen, die Einstellung eines niedrigen pretilt-Winkels ermöglichen, und vorzugsweise gleichzeitig sehr hohe spezifische Widerstände, hohe VHR-Werte, niedrige Schwellenspannungen und niedrige Schaltzeiten ermöglichen.

Diese Aufgabe wurde erfindungsgemäß gelöst durch FK-Medien und FK-Anzeigen wie in der vorliegenden Anmeldung beschrieben. Insbesondere wurde überraschend gefunden, dass die Verwendung erfindungsgemäßer FK-Medien in PSA-Anzeigen besonders niedrige pretilt-Winkel und die schnelle Einstellung der gewünschten Tiltwinkel ermöglichen. Dies konnte in Verbindung mit einem FK-Medium mittels pretilt-Messungen nachgewiesen werden. Insbesondere konnte ein pretilt ohne den Zusatz von Photoinitiator erreicht werden. Darüber hinaus zeigen die erfindungsgemäßen Materialien eine deutlich schnellere Generierung des pretilt-Winkels im Vergleich zu den aus dem Stand der Technik bekannten Materialien, wie durch belichtungszeitabhängige Messungen des pretilt-Winkels nachgewiesen werden konnte.

D1 (EP 0 959 060 A1), D2 (US 6,756,303 B1), D3 (EP 1 975 220 A1), D5 (WO 89/08633 A1) und D6 (US 2006/0198968 A1) offenbaren FK-Medien enthaltend Verbindungen der Formel I und deren Verwendung in FK-Anzeigen. D4 (EP 1 378 557 A1) offenbart FK-Anzeigen des PS- und PSA-Typs. Die vorstehend genannten Dokumente offenbaren jedoch nicht die Verwendung, FK-Medien oder FK-Anzeigen gemäß der vorliegenden Erfindung.

Gegenstand der Erfindung ist die Verwendung von FK-Mischungen enthaltend eine oder mehrere Verbindungen der Formel I, vorzugsweise in einer Konzentration ≥ 5%, 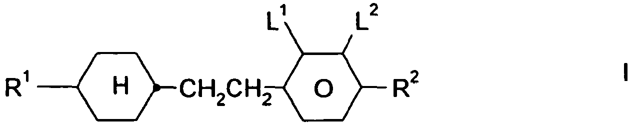 worin die einzelnen Reste folgende Bedeutung besitzen
- R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind, vorzugsweise Alkyl oder Alkoxy mit 1 bis 6 C-Atomen,
- L¹ und L²: jeweils unabhängig voneinander F, Cl, OCF₃, CF₃, CH₂F, CHF₂,
in FK-Anzeigen des PS-(polymer stabilized) oder PSA-(polymer sustained alignment) Typs.

Ein weiterer Gegenstand der Erfindung ist ein FK-Medium enthaltend eine erfindungsgemäße FK-Mischung wie vor- und nachstehend beschrieben, sowie eine oder mehrere polymerisierbare Verbindungen, vorzugsweise ausgewählt aus der Gruppe bestehend aus reaktiven Mesogenen.

Ein weiterer Gegenstand der Erfindung ist ein FK-Medium enthaltend eine erfindungsgemäße FK-Mischung wie vor- und nachstehend beschrieben, sowie ein Polymer erhältlich durch Polymerisation einer oder mehrerer polymerisierbarer Verbindungen, welche vorzugsweise aus der Gruppe bestehend aus reaktiven Mesogenen ausgewählt sind.

Ein weiterer Gegenstand der Erfindung ist ein FK-Medium enthaltend
- eine polymerisierbare Komponente A), enthaltend eine oder mehrere polymerisierbare Verbindungen, vorzugsweise ausgewählt aus reaktiven Mesogenen, sowie
- eine flüssigkristalline Komponente B), im Folgenden auch als "FK-Hostmischung" bezeichnet, bestehend aus einer erfindungsgemäßen FK-Mischung enthaltend eine oder mehrere Verbindungen der Formel I wie vor- und nachstehend beschrieben.

Ein weiterer Gegenstand der Erfindung ist ein FK-Medium enthaltend
- ein Polymer erhältlich durch Polymerisation einer polymerisierbaren Komponente A), enthaltend eine oder mehrere polymerisierbare Verbindungen, vorzugsweise ausgewählt aus reaktiven Mesogenen, sowie
- eine flüssigkristalline Komponente B), im Folgenden auch als "FK-Hostmischung" bezeichnet, bestehend aus einer erfindungsgemäßen FK-Mischung enthaltend eine oder mehrere Verbindungen der Formel I wie vor- und nachstehend beschrieben, worin die komzentration de polymerisierbaren Komponente A) ≤
5% beträgt.

Ein weiterer Gegenstand der Erfindung ist die Verwendung von erfindungsgemäßen FK-Mischungen und FK-Medien in PS- und PSA-Anzeigen, insbesondere die Verwendung in PS- und PSA-Anzeigen enthaltend ein FK-Medium, zur Erzeugung eines Tiltwinkels im FK-Medium durch in situ-Polymerisation der polymerisierbare(n) Verbindung(en) in der PSA-Anzeige, vorzugsweise unter Anlegen eines elektrischen oder magnetischen Feldes.

Ein weiterer Gegenstand der Erfindung ist eine FK-Anzeige enthaltend ein erfindungsgemäßes FK-Medium, insbesondere eine PS- oder PSA-Anzeige, besonders bevorzugt eine PSA-VA-, PSA-IPS- oder PS-FFS-Anzeige.

Ein weiterer Gegenstand der Erfindung ist eine FK-Anzeige des PS- oder PSA-Typs, enthaltend eine FK-Zelle bestehend aus zwei Substraten und zwei Elektroden, wobei mindestens ein Substrat lichtdurchlässig ist und mindestens ein Substrat eine Elektrode aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium, vorzugsweise unter Anlegen einer elektrischen Spannung an die Elektroden, wobei die niedermolekulare Komponente eine erfindungsgemäße FK-Mischung wie vor- und nachstehend beschrieben ist.

Ein weiterer Gegenstand der Erfindung ist ein Verfahren zur Herstellung eines erfindungsgemäßen FK-Mediums, indem man eine oder mehrere niedermolekulare flüssigkristalline Verbindungen, oder eine erfindungsgemäße FK-Mischung, mit einer oder mehreren polymerisierbaren Verbindungen, und gegebenenfalls mit weiteren flüssigkristallinen Verbindungen und/oder Additiven, mischt.

Ein weiterer Gegenstand der Erfindung ist ein Verfahren zur Herstellung einer erfindungsgemäßen FK-Anzeige, indem man eine erfindungsgemäße FK-Mischung mit einer oder mehreren polymerisierbaren Verbindungen, und gegebenenfalls mit weiteren flüssigkristallinen Verbindungen und/oder Additiven, mischt, die so erhaltene Mischung in eine FK-Zelle mit zwei Substraten und zwei Elektroden wie vor- und nachstehend beschrieben füllt, und die polymerisierbare(n) Verbindung(en), vorzugsweise unter Anlegen einer elektrischen Spannung, an die Elektroden polymerisiert.

Die erfindungsgemäßen PS- und PSA-Anzeigen weisen zwei Elektroden, vorzugsweise in Form von transparenten Schichten, auf, wobei diese auf einem oder beiden der Substrate aufgebracht sind, die die FK-Zelle bilden. Dabei ist entweder jeweils eine Elektrode auf je einem der beiden Substrate aufgebracht, wie zum Beispiel in erfindungsgemäßen PSA-VA-, PSA-OCB- oder PSA-TN-Anzeigen, oder beide Elektroden sind auf nur einem der beiden Substrate aufgebracht, während das andere Substrat keine Elektrode aufweist, wie zum Beispiel in erfindungsgemäßen PSA-IPS- oder PSA-FFS-Anzeigen.

Vor- und nachstehend gelten folgende Bedeutungen:

Der Begriff "PSA" wird, falls nicht anders angegeben, stellvertretend für PS-Anzeigen und PSA-Anzeigen verwendet.

Die Begriffe "Tilt" und "Tiltwinkel" beziehen sich auf eine gekippte oder geneigte Orientierung der FK-Moleküle eines FK-Mediums relativ zu den Oberflächen der Zelle in einer FK-Anzeige (hier vorzugsweise einer PS-oder PSA-Anzeige). Der Tiltwinkel bezeichnet dabei den durchschnittlichen Winkel (<90°) zwischen den Moleküllängsachsen der FK-Moleküle (FK-Direktor) und der Oberfläche der planparallelen Trägerplatten, welche die FK-Zelle bilden. Ein niedriger Wert des Tiltwinkels (d.h. eine große Abweichung vom 90°-Winkel) entspricht dabei einem großen Tilt. Eine geeignete Methode zur Messung des Tiltwinkels findet sich in den Beispielen. Soweit nicht anders angegeben, beziehen sich vor- und nachstehend offenbarte Werte des Tiltwinkels auf diese Messmethode.

Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.

Der Begriff "Abstandsgruppe" (engl. "spacer" oder "spacer group"), vorund nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung die mesogene Gruppe und die polymerisierbare(n) Gruppe(n) miteinander verbindet.

Der Begriff "reaktives Mesogen" oder "RM" bezeichnet eine Verbindung enthaltend eine mesogene Gruppe und eine oder mehrere funktionelle Gruppen, die zur Polymerisation geeignet sind (auch als polymerisierbare Gruppe oder Gruppe P bezeichnet).

Die Begriffe "niedermolekulare Verbindung" und "unpolymerisierbare Verbindung" bezeichnen, üblicherweise monomere, Verbindungen, die keine funktionelle Gruppe aufweisen, welche zur Polymerisation unter den üblichen dem Fachmann bekannten Bedingungen, insbesondere unter den zur Polymerisation der RMs verwendeten Bedingungen, geeignet ist.

Für die Zwecke dieser Erfindung soll der Begriff "FK-Medium" ein Medium bezeichnen, welches eine FK-Mischung sowie eine oder mehrere polymerisierbare Verbindungen (wie beispielsweise reaktive Mesogene) enthält. Der Begriff "FK-Mischung" (oder "Host-Mischung") soll eine flüssigkristalline Mischung bezeichnen, welche ausschließlich aus unpolymerisierbaren, niedermolekularen Verbindungen besteht, vorzusgweise aus zwei oder mehr flüssigkristallinen Verbindungen und ggf. weiteren Additiven wie zum Beispiel chiralen Dotierstoffen oder Stabilisatoren. "Unpolymerisierbar" bedeutet, dass die Verbindungen gegenüber einer Polymerisationsreaktion, zumindest unter den zur Polymerisation der polymerisierbaren Verbindungen verwendeten Bedingungen, stabil bzw. unreaktiv sind.

Besonders bevorzugt sind FK-Mischungen und FK-Medien, die eine nematische Phase, insbesondere eine nematische Phase bei Raumtemperatur, aufweisen.

In den Verbindungen der Formel I bedeuten vorzugsweise beide Reste L¹ und L² F, oder einer der Reste L¹ und L² F und der andere CI.

Die Verbindungen der Formel I sind vorzugsweise ausgewählt aus der Gruppe bestehend aus folgenden Unterformeln: 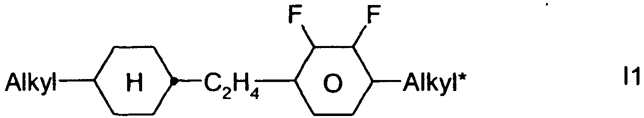 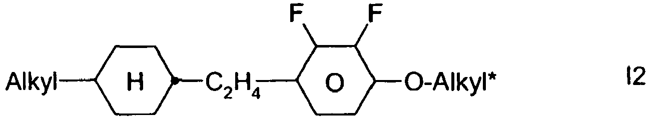 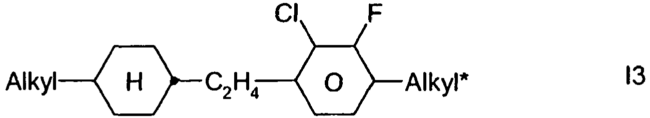 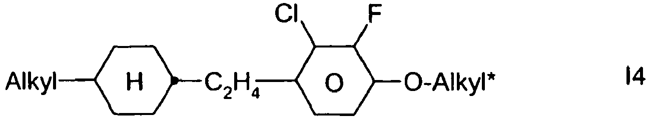 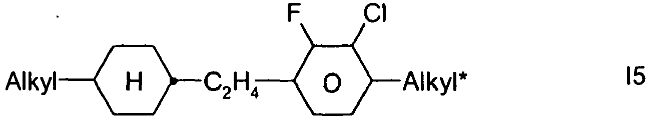 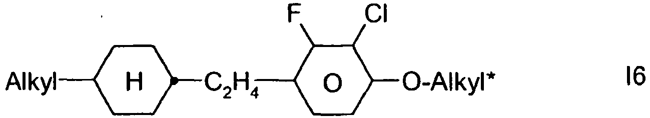 worin Alkyl und Alkyl* jeweils unabhängig voneinander einen geradkettigen Alkylrest mit 1-12, vorzugsweise 1-6 C-Atomen bedeuten.

Besonders bevorzugt sind Verbindungen der Formel 11 und 12.

Die Konzentration an Verbindungen der Formel I in der FK-Mischung beträgt vorzugsweise 5 bis 50%, besonders bevorzugt 10 bis 45%.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, n-Hexyl, 2-Ethylhexyl, n-Heptyl, n-Octyl, n-Nonyl, n-Decyl, n-Undecyl, n-Dodecyl.

Bevorzugte Alkenylgruppen sind beispielsweise Ethenyl, Propenyl, Butenyl, Pentenyl, Hexenyl, Heptenyl, Octenyl.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy.

Weitere besonders bevorzugte FK-Mischungen, FK-Medien und FK-Anzeigen werden im Folgenden genannt:
1) FK-Mischung, welche zusätzlich zu den Verbindungen der Formel I eine oder mehrere Verbindungen der Formel II und/oder III enthält: 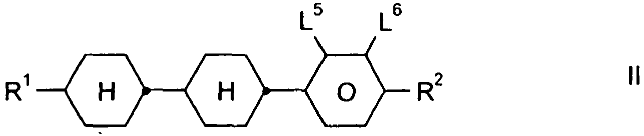 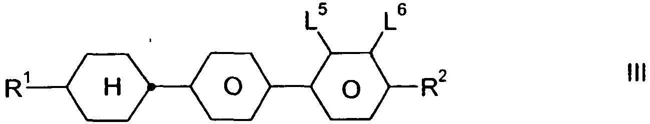 worin R¹ und R² die in Formel I angegebene Bedeutung besitzen, und einer der Reste L⁵ und L⁶ F und der andere CI bedeutet.
   Die Verbindungen der Formel II sind vorzugsweise ausgewählt aus der Gruppe bestehend aus folgenden Unterformeln 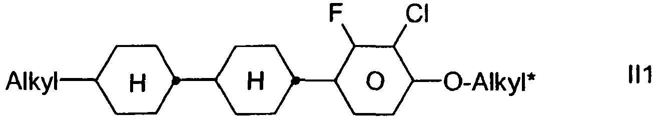 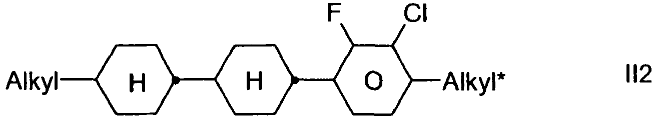 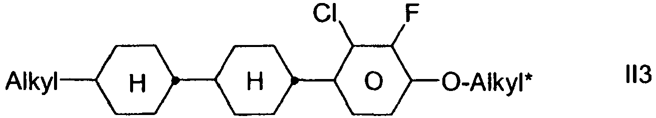 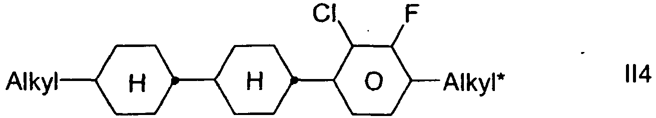 worin Alkyl und Alkyl* jeweils unabhängig voneinander einen geradkettigen Alkylrest mit 1-12, vorzugsweise 1-6 C-Atomen bedeuten. Besonders bevorzugt sind Verbindungen der Formel II1.
   Die Verbindungen der Formel III sind vorzugsweise ausgewählt aus der Gruppe bestehend aus folgenden Unterformeln 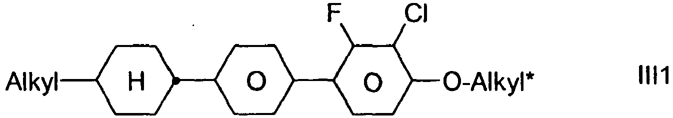 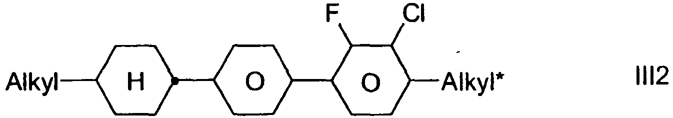 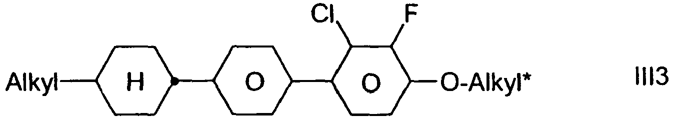 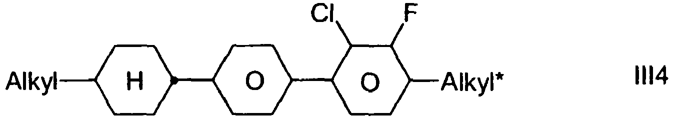 worin Alkyl und Alkyl* jeweils unabhängig voneinander einen geradkettigen Alkylrest mit 1-12, vorzugsweise 1-6 C-Atomen bedeuten. Besonders bevorzugt sind Verbindungen der Formel III1.
   Besonders bevorzugt sind solche Verbindungen der Formel II und III sowie deren Unterformeln, worin R¹ n-Propyl, n-Butyl oder n-Pentyl bedeutet, sowie solche, worin R² Ethoxy bedeutet.
   Die Konzentration an Verbindungen der Formel II in der FK-Mischung beträgt vorzugsweise 1 bis 40%.
   Die Konzentration an Verbindungen der Formel III in der FK-Mischung beträgt vorzugsweise 1 bis 40%.
   Die Gesamtkonzentration an Verbindungen der Formel II und III in der FK-Mischung beträgt vorzugsweise 1 bis 50%, besonders bevorzugt 1 bis 20%, ganz besonders bevorzugt 1 bis 10%.
2) FK-Mischung, die keine Verbindungen, insbesondere keine mesogenen oder flüssigkristallinen Verbindungen, enthält, welche eine oder mehrere Alkenylgruppen aufweisen, oder welche eine oder mehrere Alkylgruppen aufweisen, worin eine oder mehrere CH₂-Gruppen durch CH=CH und ggf. zusätzlich durch andere Gruppen ersetzt sind.
3) FK-Mischung, welche zusätzlich zu den Verbindungen der Formel I eine oder mehrere Verbindungen der Formel IV enthält: 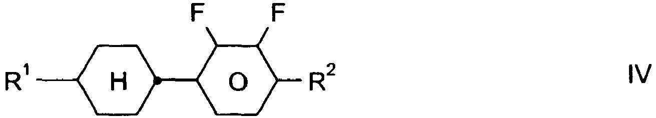 worin R¹ und R² die in Formel I angegebene Bedeutung besitzen, und vorzugsweise Alkyl oder Alkoxy mit 1 bis 6 C-Atomen bedeuten
   Die Verbindungen der Formel IV sind vorzugsweise ausgewählt aus folgenden Formeln: 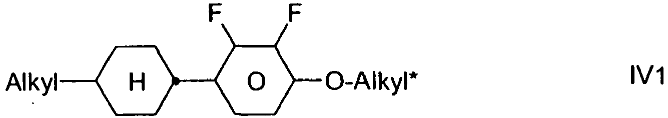 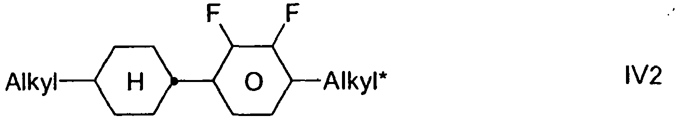 worin Alkyl und Alkyl* jeweils unabhängig voneinander einen geradkettigen Alkylrest mit 1-12, vorzugsweise 1-6 C-Atomen bedeuten. Besonders bevorzugt sind Verbindungen der Formel IV1.
   Die Konzentration an Verbindungen der Formel IV in der FK-Mischung beträgt vorzugsweise 1 bis 60%.
   Die Gesamtkonzentration an Verbindungen der Formel I und IV beträgt vorzugsweise ≥ 10%, besonders bevorzugt 15 bis 50%.
4) FK-Mischung, welche zusätzlich zu den Verbindungen der Formel I eine oder mehrere Verbindungen der Formel V enthält: 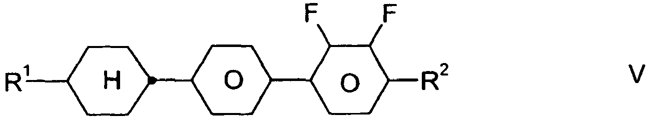 worin R¹ und R² die in Formel I angegebene Bedeutung besitzen, und vorzugsweise Alkyl oder Alkoxy mit 1 bis 6 C-Atomen bedeuten
   Die Verbindungen der Formel V sind vorzugsweise ausgewählt aus folgenden Formeln: 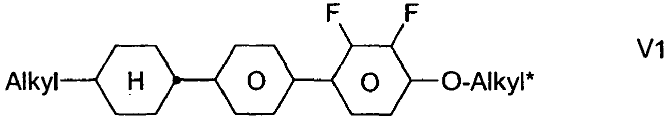 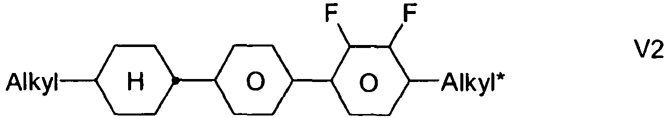 worin Alkyl und Alkyl* jeweils unabhängig voneinander einen geradkettigen Alkylrest mit 1-12, vorzugsweise 1-6 C-Atomen bedeuten. Besonders bevorzugt sind Verbindungen der Formel V1.
   Die Konzentration an Verbindungen der Formel V in der FK-Mischung beträgt vorzugsweise 5 bis 50%.
   Die Gesamtkonzentration an Verbindungen der Formel I und V beträgt vorzugsweise ≥ 20%, besonders bevorzugt 20 bis 80%.
5) FK-Mischung, welche zusätzlich zu den Verbindungen der Formel I eine oder mehrere Verbindungen der Formel VI enthält: 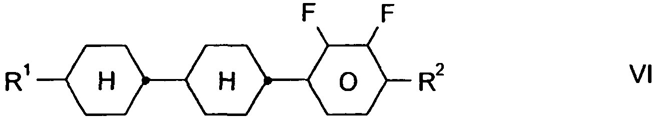 worin R¹ und R² die in Formel I angegebene Bedeutung besitzen, und vorzugsweise Alkyl oder Alkoxy mit 1 bis 6 C-Atomen bedeuten
   Die Verbindungen der Formel VI sind vorzugsweise ausgewählt aus folgenden Formeln: 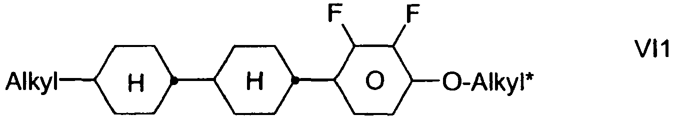 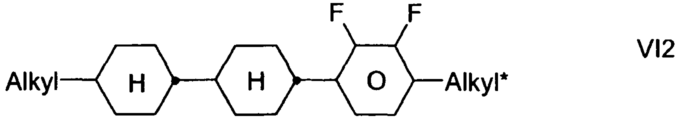 worin Alkyl und Alkyl* jeweils unabhängig voneinander einen geradkettigen Alkylrest mit 1-12, vorzugsweise 1-6 C-Atomen bedeuten. Besonders bevorzugt sind Verbindungen der Formel VI1.
   Die Konzentration an Verbindungen der Formel VI in der FK-Mischung beträgt vorzugsweise 5 bis 50%.
   Besonders bevorzugt ist eine FK-Mischung, die eine oder mehrere Verbindungen der Formel I und eine oder mehrere Verbindungen der Formel V und eine oder mehrere Verbindungen der Formel VI enthält, wobei die Gesamtkonzentration an Verbindungen der Formel I und V und VI vorzugsweise ≥ 25%, besonders bevorzugt 25 bis 80% beträgt.
6) FK-Mischung, die keine Verbindungen, insbesondere keine mesogenen oder flüssigkristallinen Verbindungen, enthält, welche ein oder mehrere Chloratome enthalten.
7) FK-Mischung, welche zusätzlich eine oder mehrere, von den Verbindungen der Formel II, III, IV, V und VI verschiedene, Verbindungen der Formel CY und/oder PY enthält: 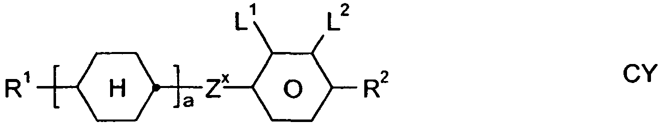 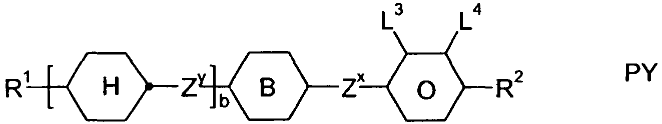 worin die einzelnen Reste folgende Bedeutung besitzen
   - a: 1 oder 2,
   - b: 0 oder 1, 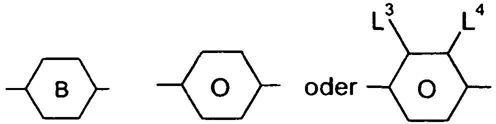
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind, vorzugsweise Alkyl oder Alkoxy mit 1 bis 6 C-Atomen,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹⁻⁴: jeweils unabhängig voneinander F, Cl, OCF₃, CF₃, CH₃, CH₂F, CHF₂.

   Vorzugsweise bedeuten beide Reste L¹ und L² F, oder einer der Reste L¹ und L² F und der andere Cl, bzw. beide Reste L³ und L⁴ F, oder einer der Reste L³ und L⁴ F und der andere Cl.
   Die Verbindungen der Formel CY sind vorzugsweise ausgewählt aus der Gruppe bestehend aus folgenden Unterformeln 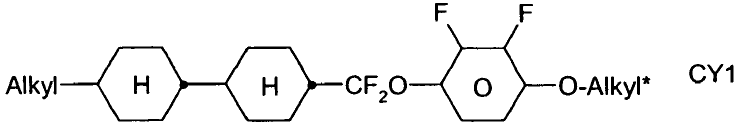 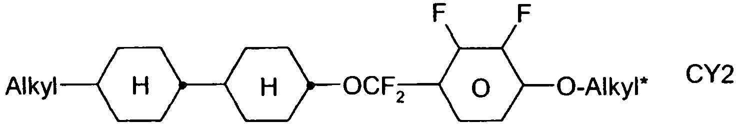 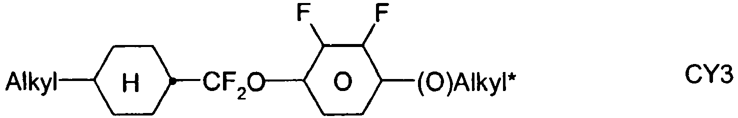 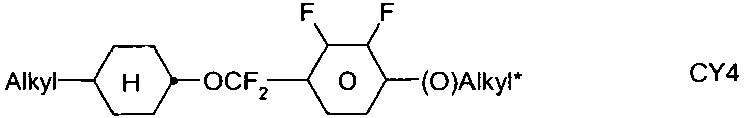 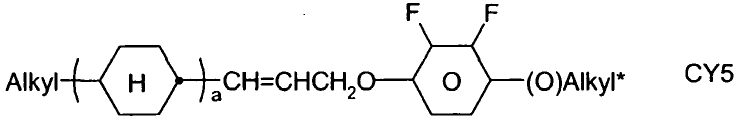 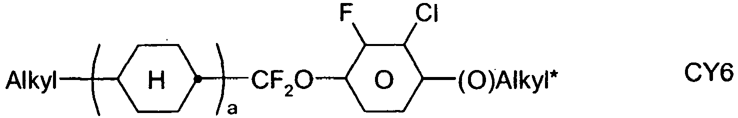 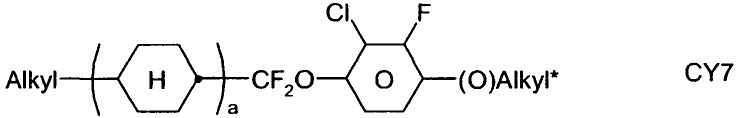 worin a 1 oder 2, Alkyl und Alkyl* jeweils unabhängig voneinander einen geradkettigen Alkylrest mit 1-6 C-Atomen, und (O) ein Sauerstoffatom oder eine Einfachbindung bedeuten.
   Die Verbindungen der Formel PY sind vorzugsweise ausgewählt aus der Gruppe bestehend aus folgenden Unterformeln: 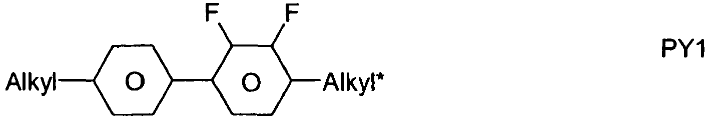 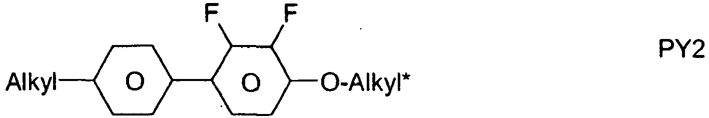 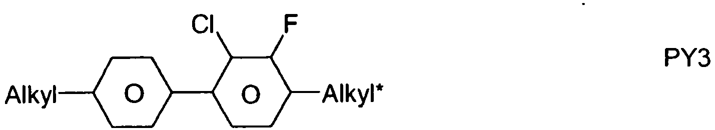 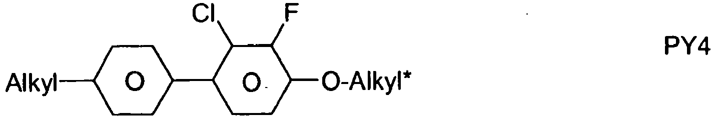 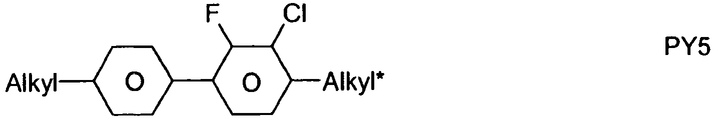 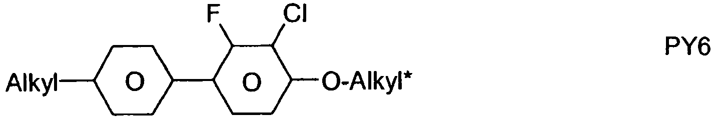 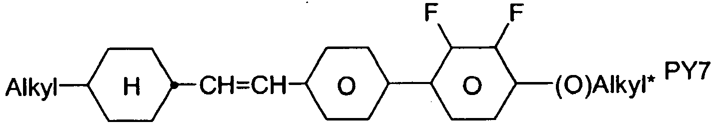 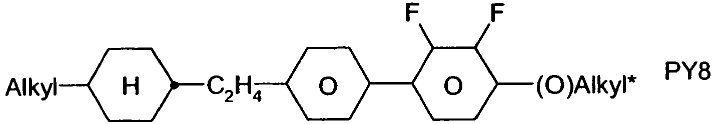 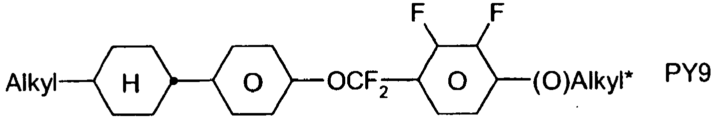 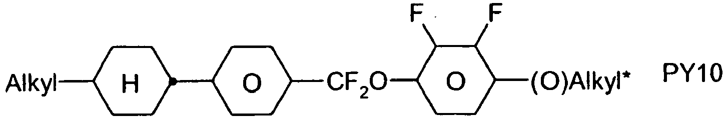 worin Alkyl und Alkyl* jeweils unabhängig voneinander einen geradkettigen Alkylrest mit 1-6 C-Atomen, und (O) ein Sauerstoffatom oder eine Einfachbindung bedeuten.
   Besonders bevorzugt sind Verbindungen der Formel PY1.
8) FK-Mischung, welche zusätzlich eine oder mehrere Verbindungen der folgenden Formel enthält: 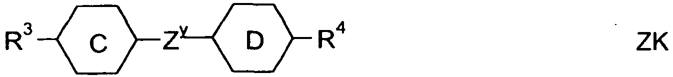 worin die einzelnen Reste folgende Bedeutung besitzen 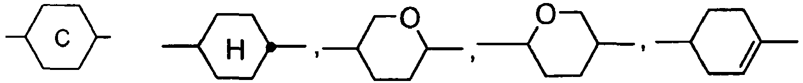 oder 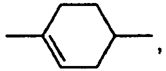 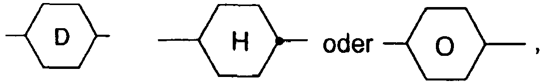
   - R³ und R⁴: jeweils unabhängig voneinander Alkyl mit 1 bis 12 C-Atomen, worin auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
   - Z^{y}: -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung.

   Die Verbindungen der Formel ZK sind vorzugsweise ausgewählt aus der Gruppe bestehend aus folgenden Unterformeln: 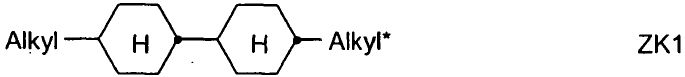 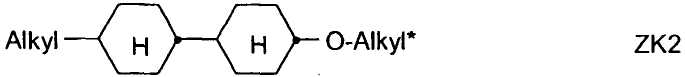 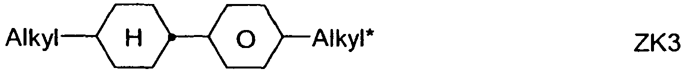 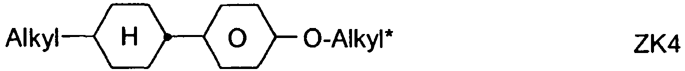 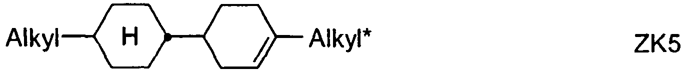 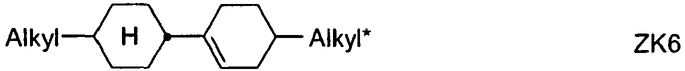 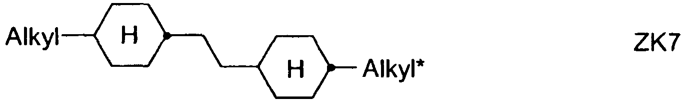 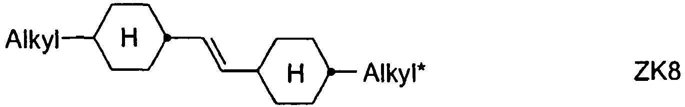 worin Alkyl und Alkyl* jeweils unabhängig voneinander einen geradkettigen Alkylrest mit 1-6 C-Atomen bedeuten.
   Besonders bevorzugt sind FK-Mischungen enthaltend eine oder mehrere Verbindungen der Formel ZK1 und/oder ZK2, vorzugsweise in einer Gesamtkonzentration von 2 bis 40%.
   Ferner bevorzugt sind FK-Mischungen enthaltend eine oder mehrere Verbindungen der Formel ZK3 und/oder ZK4, vorzugsweise in einer Gesamtkonzentration von 1 bis 30%.
9) FK-Mischung, welche zusätzlich eine oder mehrere Verbindungen der folgenden Formel enthält:
   worin die einzelnen Reste bei jedem Auftreten gleich oder verschieden folgende Bedeutung haben:
   - R³ und R⁴: jeweils unabhängig voneinander die in Formel ZK angegebenen Bedeutungen, 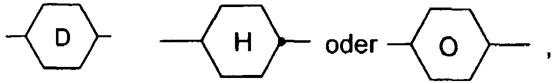 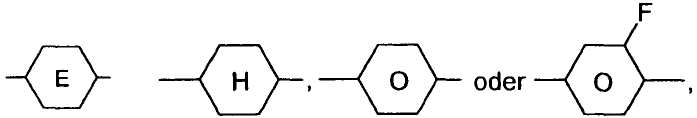 und
   - e: 1 oder 2.

   Die Verbindungen der Formel DK sind vorzugsweise ausgewählt aus der Gruppe bestehend aus folgenden Unterformeln: 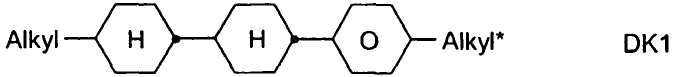 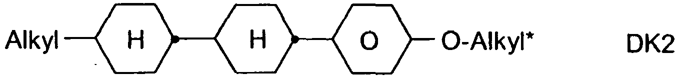 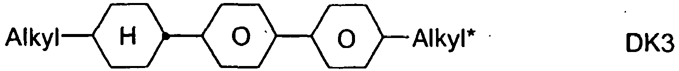 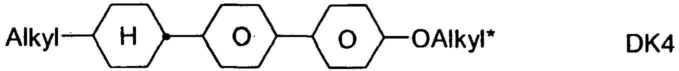 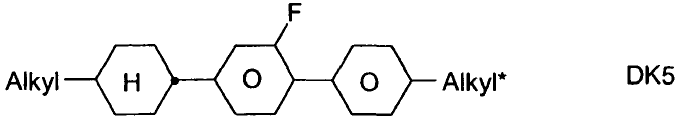 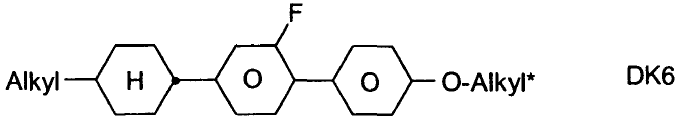 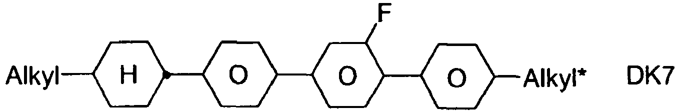 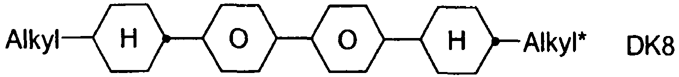 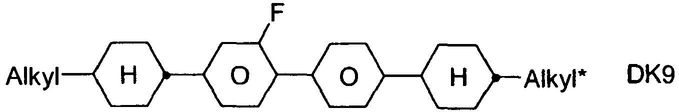 worin Alkyl und Alkyl* jeweils unabhängig voneinander einen geradkettigen Alkylrest mit 1-6 C-Atomen bedeuten.
   Besonders bevorzugt sind FK-Mischungen enthaltend eine oder mehrere Verbindungen der Formel DK1 und/oder DK2, vorzugsweise in einer Gesamtkonzentration von 2 bis 30%.
   Ferner bevorzugt sind FK-Mischungen enthaltend eine oder mehrere Verbindungen der Formel DK3, vorzugsweise in einer Gesamtkonzentration von 1 bis 30%.
10) FK-Mischung, die keine Verbindungen der Formel ZK oder DK enthält, worin R³ und/oder R⁴ eine Alkenylgruppe bedeuten oder eine Alkylgruppe bedeuten, worin eine oder mehrere CH₂-Gruppen durch -CH=CH- und ggf. auch zusätzlich durch andere Gruppen ersetzt sind.
11) FK-Mischung, welche zusätzlich eine oder mehrere Verbindungen der folgenden Formel enthält: 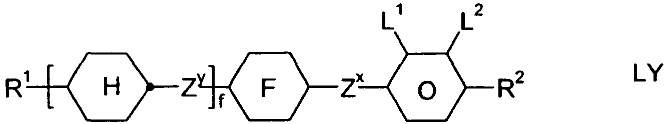 worin die einzelnen Reste folgende Bedeutung besitzen 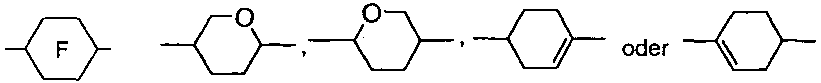
   - f: 0 oder 1,
   - R¹ und R²: jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind,
   - Z^{x} und Z^{y}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, -CH=CHCH₂O-, oder eine Einfachbindung, vorzugsweise eine Einfachbindung,
   - L¹ und L²: jeweils unabhängig voneinander F, Cl, OCF₃, CF₃, CH₃, CH₂F, CHF₂.

   Vorzugsweise bedeuten beide Reste L¹ und L² F oder einer der Reste L¹ und L² F und der andere Cl.
   Die Verbindungen der Formel LY sind vorzugsweise ausgewählt aus der Gruppe bestehend aus folgenden Unterformeln 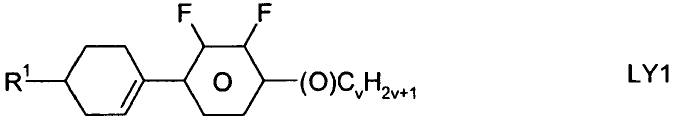 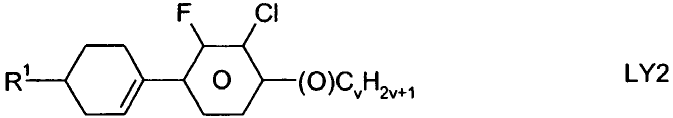 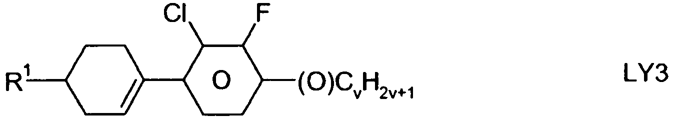 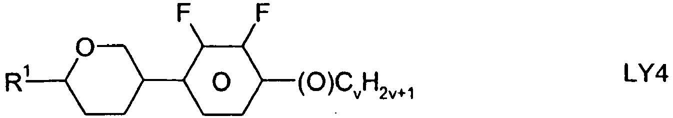 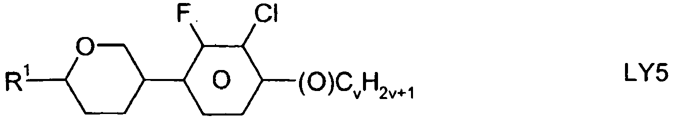 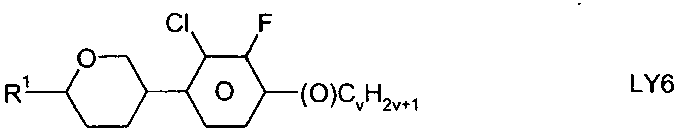 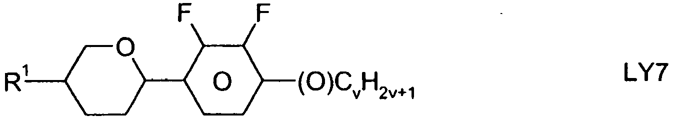 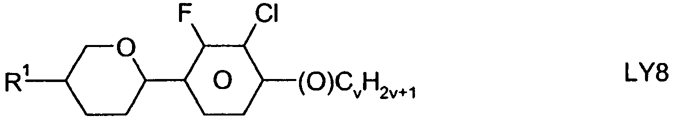 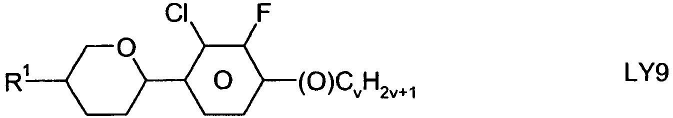 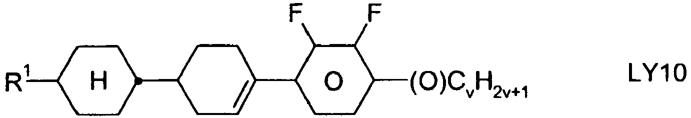 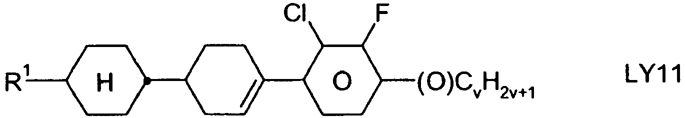 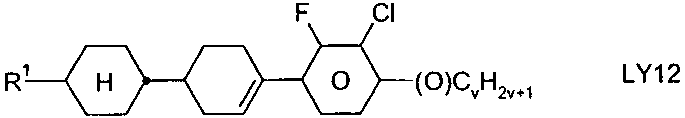 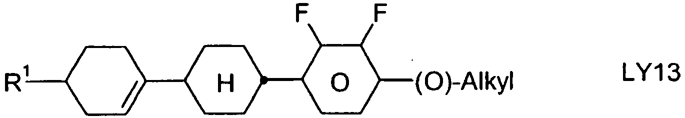 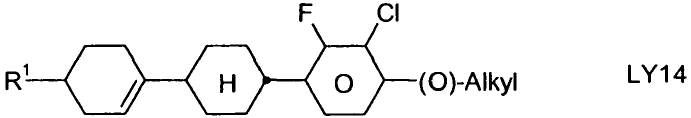 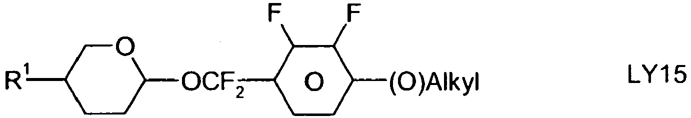 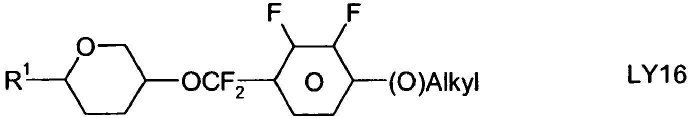 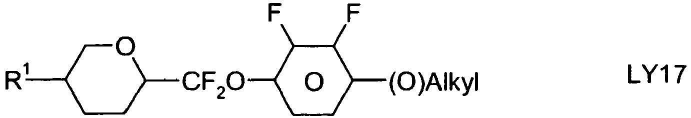 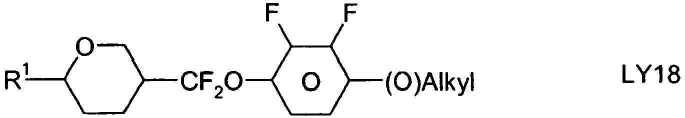 worin R¹ die oben angegebene Bedeutung hat, Alkyl einen geradkettigen Alkylrest mit 1-6 C-Atomen, (O) ein Sauerstoffatom oder eine Einfachbindung und v eine ganze Zahl von 1 bis 6 bedeuten. R¹ bedeutet vorzugsweise geradkettiges Alkyl mit 1 bis 6 C-Atomen.
   Besonders bevorzugt sind FK-Mischungen enthaltend eine oder mehrere Verbindungen der Formel LY1-LY9 in einer Gesamtkonzentration von 2 bis 60%. Die Konzentration der einzelnen Verbindungen der Formel LY1-LY9 in der FK-Mischung beträgt vorzugsweise 2 bis 20%.
   Ferner bevorzugt sind FK-Mischungen enthaltend eine oder mehrere Verbindungen der Formel LY10-LY14 in einer Gesamtkonzentration von 2 bis 30%. Die Konzentration der einzelnen Verbindungen der Formel LY10-LY14 in der FK-Mischung beträgt vorzugsweise 2 bis 20%.
12) FK-Mischung, welche zusätzlich eine oder mehrere Verbindungen ausgewählt aus der Gruppe bestehend aus folgenden Formeln enthält: 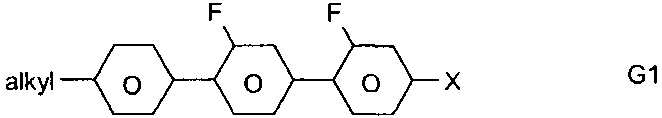 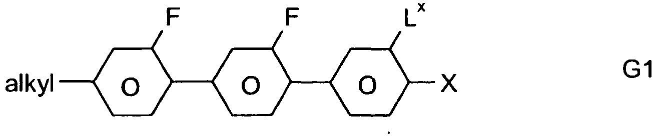 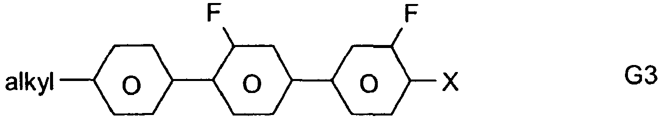 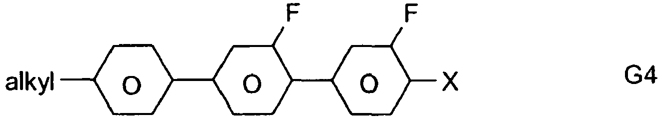 worin alkyl C₁₋₆-alkyl, L^{x} H oder F und X F, Cl, OCF₃, OCHF₂ oder OCH=CF₂ bedeutet.
   Besonders bevorzugt sind Verbindungen der Formel G1, worin X F bedeutet.
13) FK-Mischung, welche zusätzlich eine oder mehrere Verbindungen ausgewählt aus der Gruppe bestehend aus folgenden Formeln enthält: 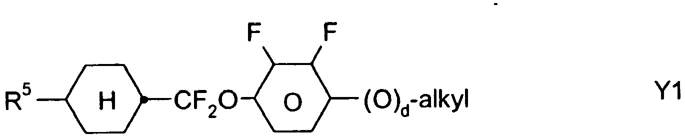 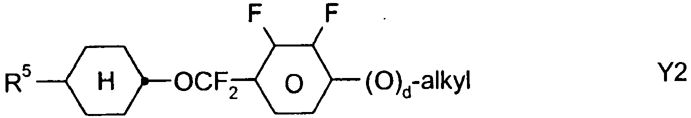 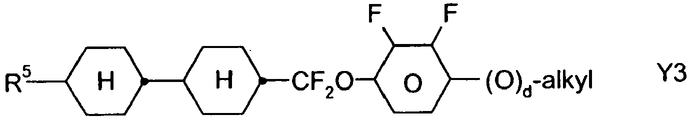 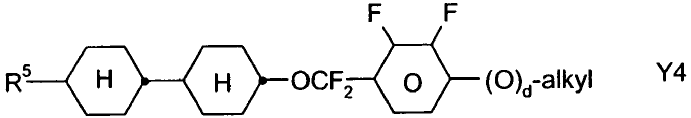 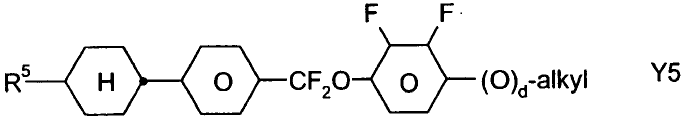 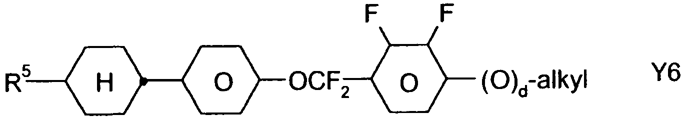 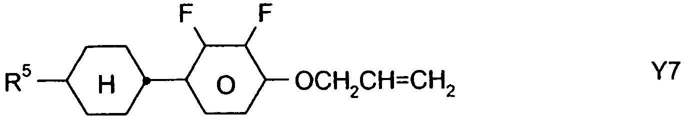 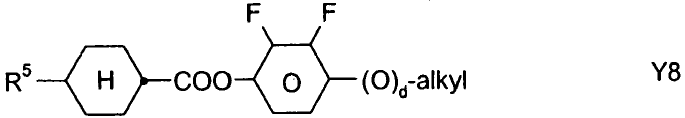 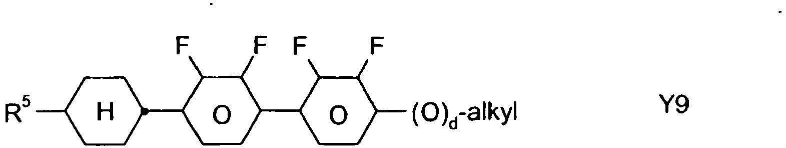 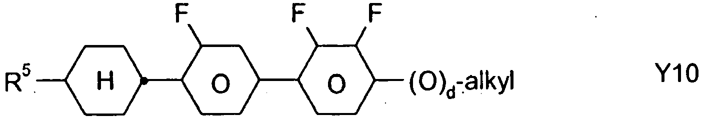 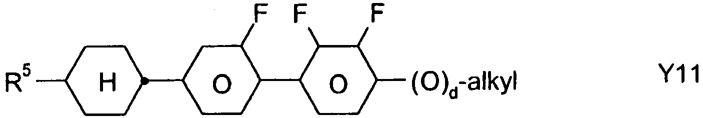 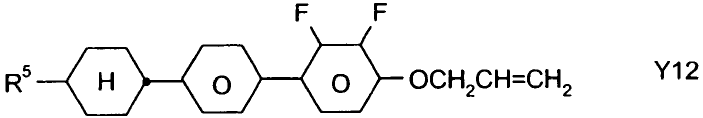 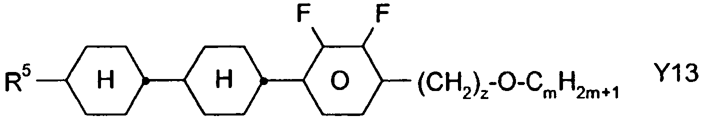 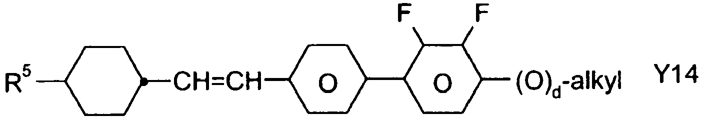 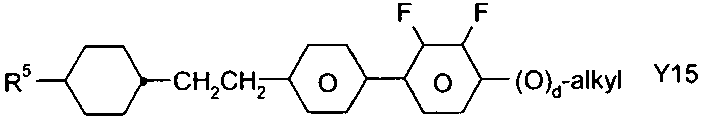 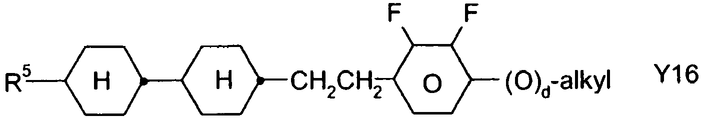 worin R⁵ eine der oben für R¹ angegebenen Bedeutungen besitzt, alkyl C₁₋₆-alkyl, d 0 oder 1, und z und m jeweils unabhängig voneinander eine ganze Zahl von 1 bis 6 bedeuten. R⁵ ist in diesen Verbindungen besonders bevorzugt C₁₋₆-alkyl oder -alkoxy oder C₂₋₆-alkenyl, d ist vorzugsweise 1. Vorzugsweise enthält die erfindungsgemäße FK-Mischung eine oder mehrere Verbindungen der oben genannten Formeln in Mengen von ≥ 5%.
14) FK-Mischung, welche zusätzlich eine oder mehrere Biphenylverbindungen der folgenden Formel enthält: 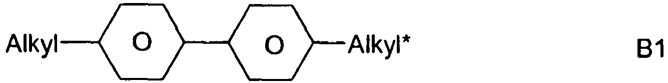 worin Alkyl und Alkyl* jeweils unabhängig voneinander einen geradkettigen Alkylrest mit 1-6 C-Atomen bedeuten.
   Der Anteil der Biphenyle der Formeln B1 bis B3 in der FK-Mischung beträgt vorzugsweise mindestens 3%, insbesondere ≥ 5%.
15) FK-Mischung, welche zusätzlich eine oder mehrere Terphenylverbindungen der folgenden Formel enthält: 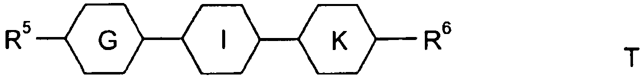 worin R⁵ und R⁶ jeweils unabhängig voneinander eine der oben für R¹ angegebenen Bedeutungen besitzen und 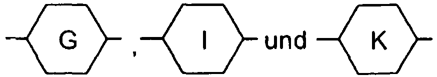 jeweils unabhängig voneinander 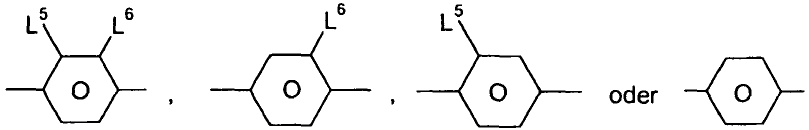 bedeuten, worin L⁵ F oder Cl, vorzugsweise F, und L⁶ F, Cl, OCF₃, CF₃, CH₃, CH₂F oder CHF₂, vorzugsweise F, bedeuten.
   Die Verbindungen der Formel T sind vorzugsweise ausgewählt aus der Gruppe bestehend aus folgenden Unterformeln 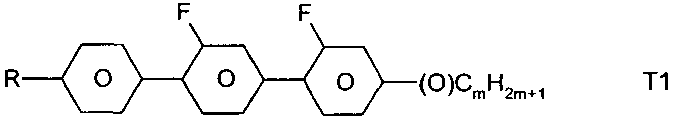 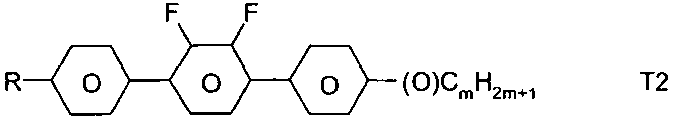 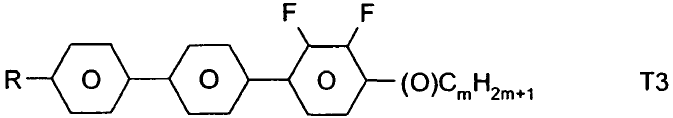 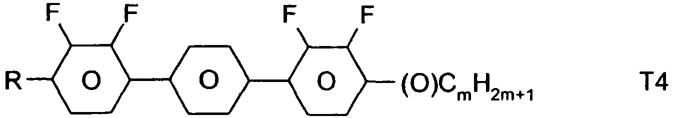 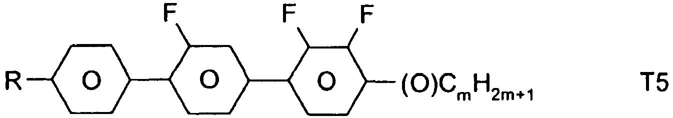 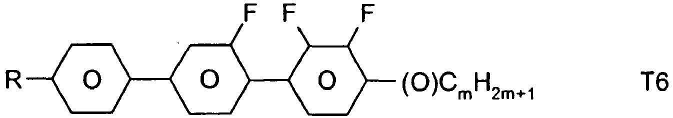 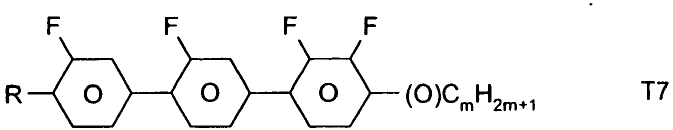 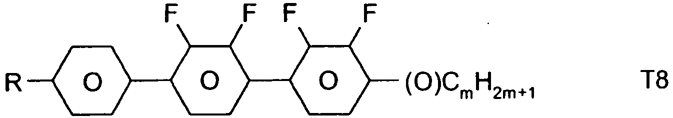 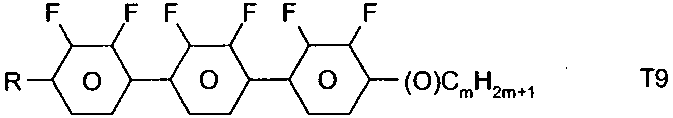 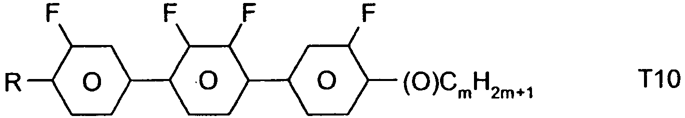 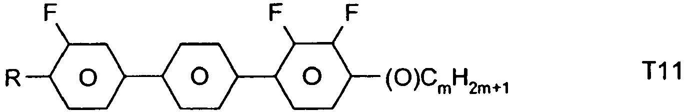 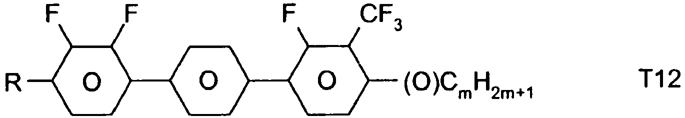 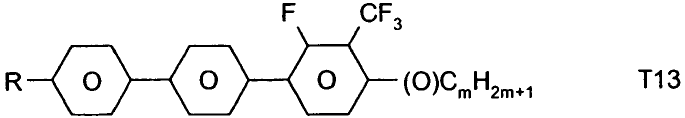 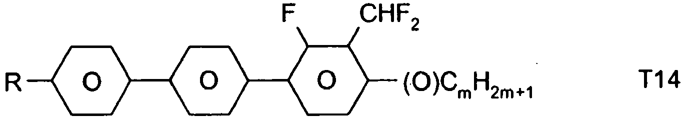 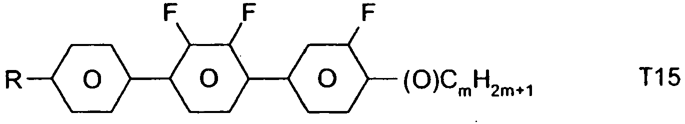 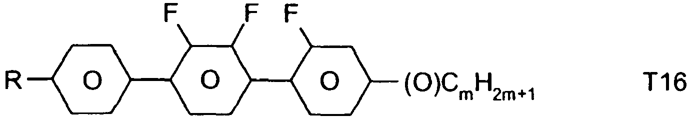 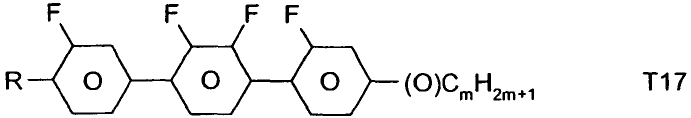 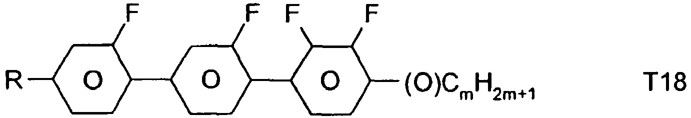 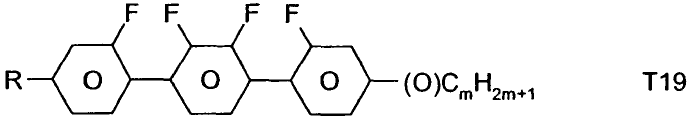 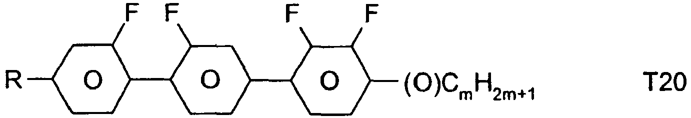 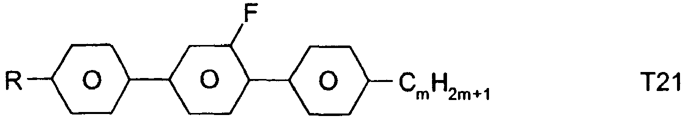 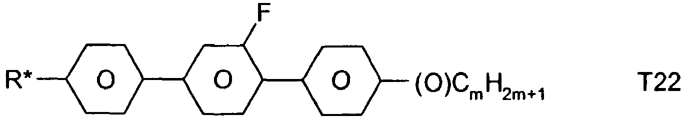 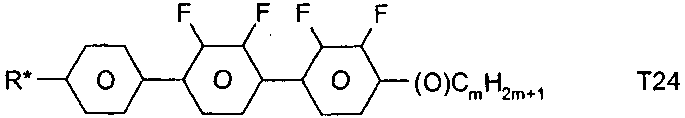 worin R einen geradkettigen Alkyl- oder Alkoxyrest mit 1-7 C-Atomen, (O) ein Sauerstoffatom oder eine Einfachbindung, und m eine ganze Zahl von 1 bis 6 bedeuten. Vorzugsweise bedeutet R
   Methyl, Ethyl, Propyl, Butyl, Pentyl, Hexyl Methoxy, Ethoxy, Propoxy, Butoxy oder Pentoxy.
   Besonders bevorzugt sind Verbindungen der Formeln T1, T2, T3 und T21. In diesen Verbindungen bedeutet R vorzugsweise Alkyl, ferner Alkoxy jeweils mit 1-5 C-Atomen.
   Ferner bevorzugt sind FK-Mischungen enthaltend eine oder mehrere Verbindungen der Formel Formeln T oder deren Unterformeln in einer Gesamtkonzentration von 2 bis 50% besonders bevorzugt 2-30%, ganz besonders bevorzugt 5-20%.
   Ferner bevorzugt sind FK-Mischungen enthaltend eine oder mehrere Verbindungen der Formel Formel T2, wobei die Konzentration der einzelnen Verbindungen 2-20%, beträgt.
   Ferner bevorzugt sind FK-Mischungen enthaltend eine oder mehrere Verbindungen der Formel Formel T3, wobei die Konzentration der einzelnen Verbindungen 2-10% beträgt.
   Vorzugsweise werden die Terphenyle in erfindungsgemäßen FK-Mischungen eingesetzt, wenn der Δn-Wert der Mischung ≥ 0,1 sein soll. Bevorzugte FK-Mischungen enthalten 2-20 % einer oder mehrerer Terphenyl-Verbindungen der Formel T, vorzugsweise ausgewählt aus der Gruppe der Verbindungen T1 bis T22.
16) FK-Mischung, welche zusätzlich eine oder mehrere Verbindungen ausgewählt aus der Gruppe bestehend aus folgenden Formeln enthält: 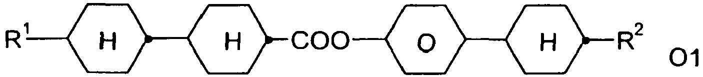 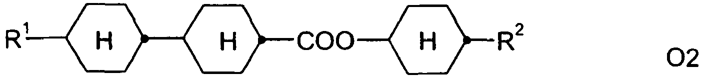 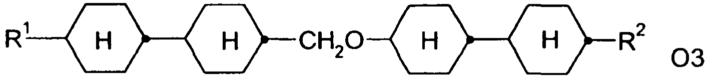 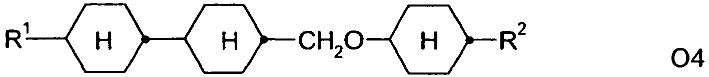 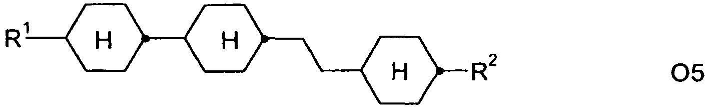 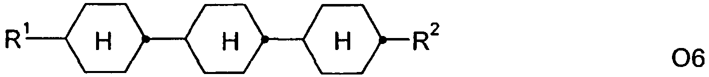 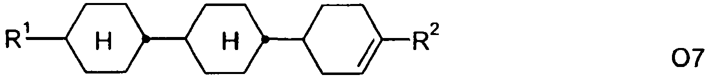 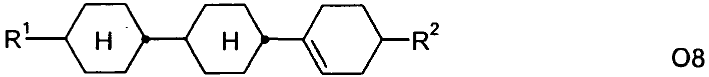 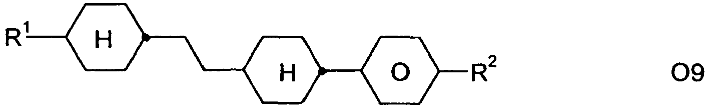 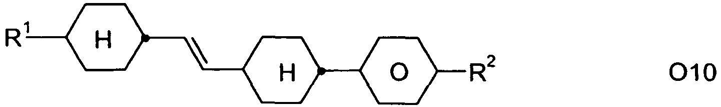 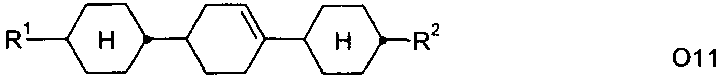 worin R¹ und R² die oben angegebenen Bedeutungen haben, und vorzugsweise jeweils unabhängig voneinander geradkettiges Alkyl mit 1 bis 6 C-Atomen bedeuten.
   Besonders bevorzugt sind FK-Mischungen enthaltend eine oder mehrere Verbindungen der Formel O1 und/oder 02.
17) FK-Mischung, welche zusätzlich eine oder mehrere Verbindungen der folgenden Formel enthält: 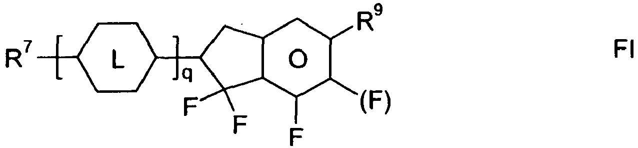 worin 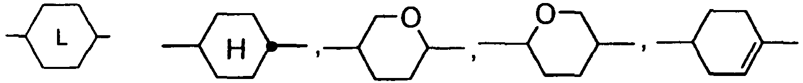 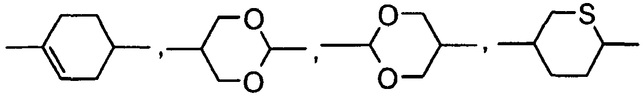 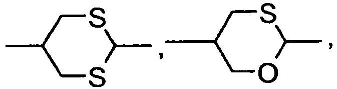
   R⁹ H, CH₃, C₂H₅ oder n-C₃H₇, (F) einen optionalen Fluorsubstituenten und q 1, 2 oder 3 bedeuten, und R⁷ eine der für R¹ angegebenen Bedeutungen hat.
   Besonders bevorzugte Verbindungen der Formel FI sind ausgewählt aus der Gruppe bestehend aus folgenden Unterformeln: 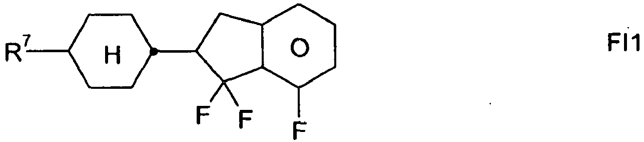 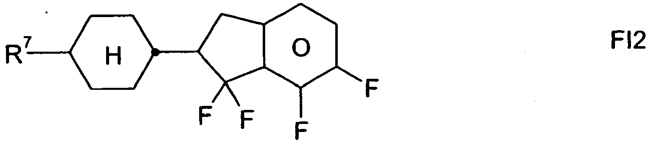 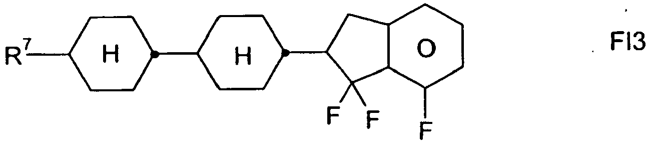 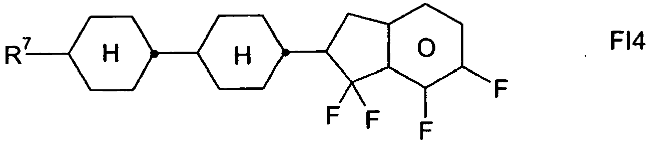 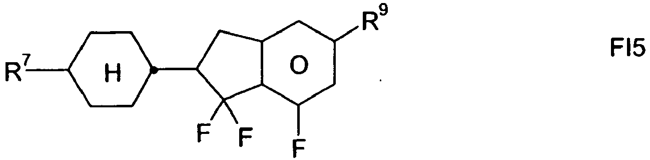 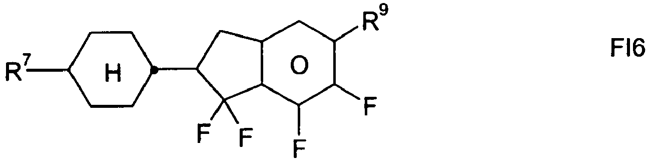 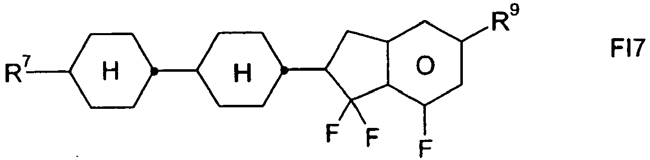 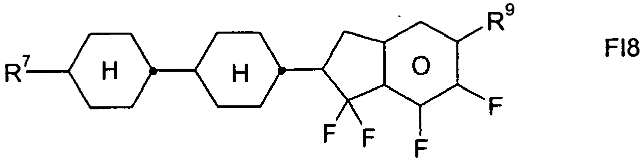 worin R⁷ vorzugsweise geradkettiges Alkyl bedeutet und R⁹ CH₃, C₂H₅ oder n-C₃H₇ bedeutet. Besonders bevorzugt sind die Verbindungen der Formel FI1, FI2 und FI3.
   Besonders bevorzugt sind FK-Mischungen enthaltend eine oder mehrere Verbindungen der Formel FI in einer Gesamtkonzentration von 2 bis 30%. Die Konzentration der einzelnen Verbindungen der Formel FI in der FK-Mischung beträgt vorzugsweise 2 bis 15%.
18) FK-Mischung, welche zusätzlich eine oder mehrere Verbindungen ausgewählt aus der Gruppe bestehend aus folgenden Formeln enthält: 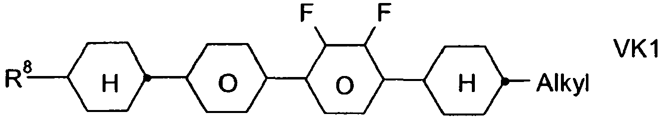 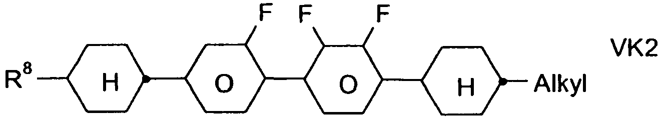 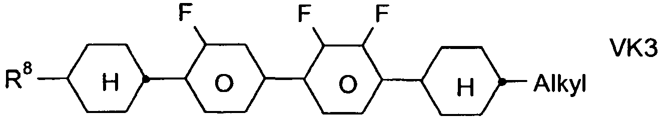 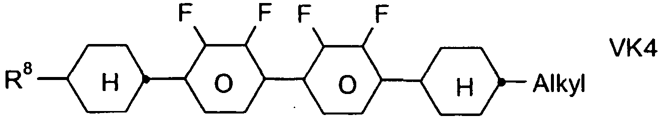 worin R⁸ die für R¹ angegebene Bedeutung hat und Alkyl einen geradkettigen Alkylrest mit 1-6 C-Atomen bedeutet.
19) FK-Mischung, welche zusätzlich eine oder mehrere Verbindungen enthält, die eine Tetrahydronaphthyl- oder Naphthyl-Einheit aufweisen, wie z.B. die Verbindungen ausgewählt aus der Gruppe bestehend aus folgenden Formeln: 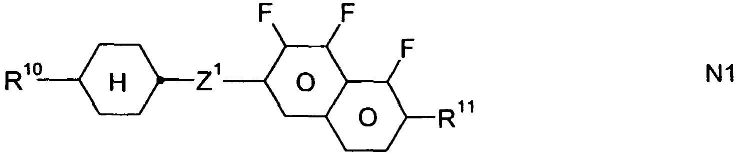 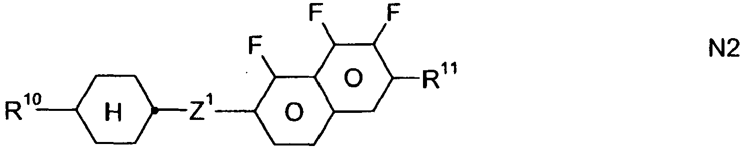 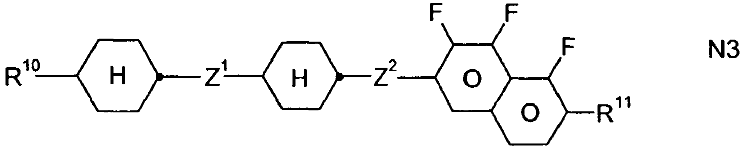 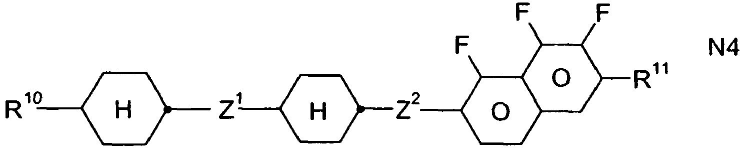 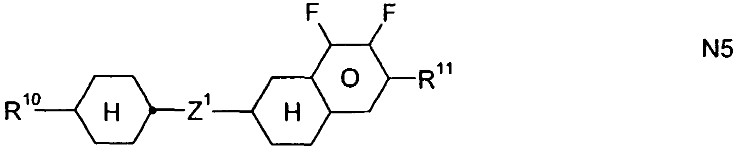 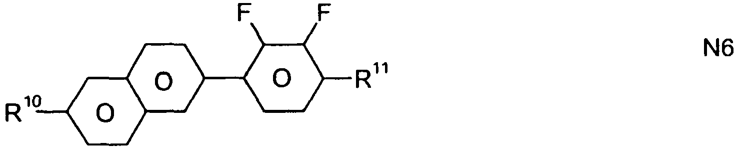 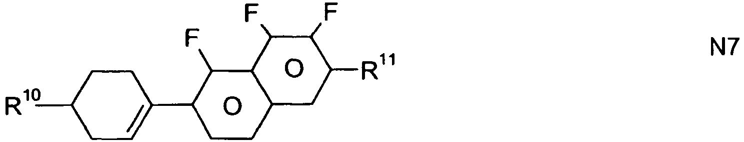 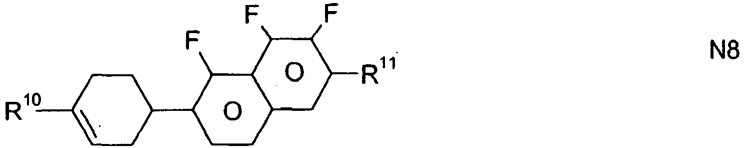 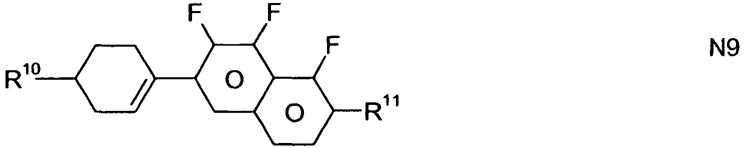 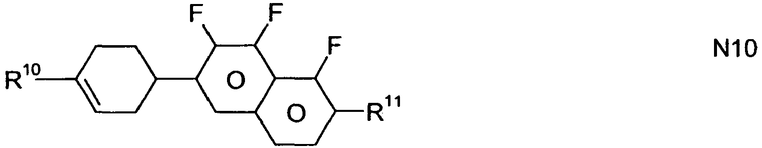 worin R¹⁰ und R¹¹ jeweils unabhängig voneinander eine der für R¹ angegebenen Bedeutungen haben, vorzugsweise geradkettiges Alkyl oder Alkoxy mit 1 bis 6 C-Atomen oder geradkettiges Alkenyl mit 2 bis 6 C-Atomen bedeuten, und Z¹ und Z² jeweils unabhängig voneinander -C₂H₄-, -CH=CH-, -(CH₂)₄-, -(CH₂)₃O-, -O(CH₂)₃-, - CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CH₂- oder eine Einfachbindung bedeuten.
20) FK-Mischung, welche zusätzlich eine oder mehrere eine oder mehrere Difluordibenzochromane und/oder Chromane der folgenden Formeln enthält: 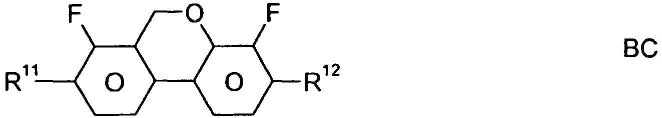 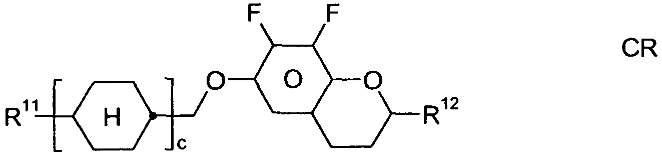 worin R¹¹ und R¹² jeweils unabhängig voneinander die oben angegebene Bedeutung aufweisen, und c 0 oder 1 bedeutet, vorzugsweise in Mengen von 3 bis 20%, insbesondere in Mengen von 3 bis 15%.
   Besonders bevorzugte Verbindungen der Formeln BC und CR sind ausgewählt aus der Gruppe bestehend aus folgenden Unterformeln: 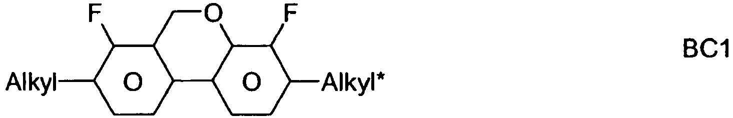 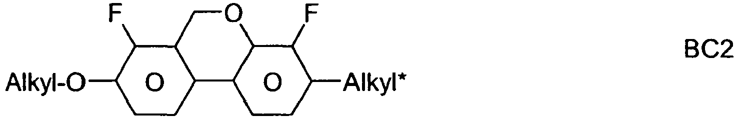 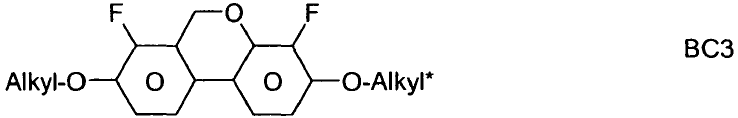 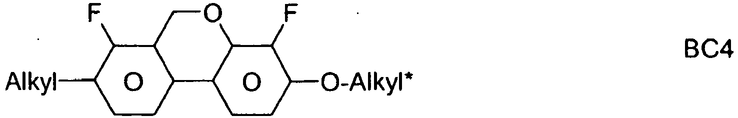 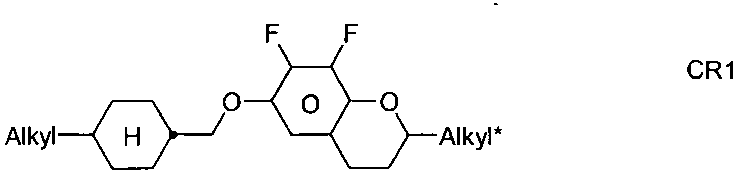 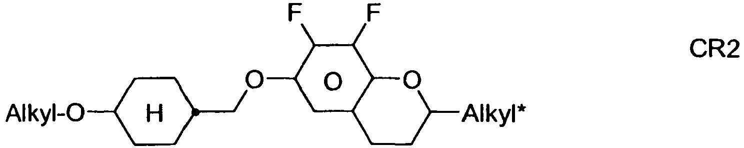 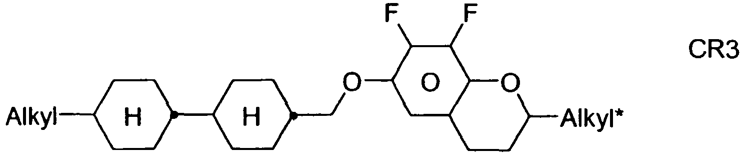 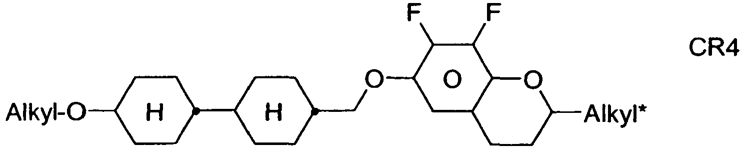 worin Alkyl und Alkyl* jeweils unabhängig voneinander einen geradkettigen Alkylrest mit 1-6 C-Atomen bedeuten.
   Ganz besonders bevorzugt sind Mischungen enthaltend eine, zwei oder drei Verbindungen der Formel BC-2.
21) FK-Mischung, welche zusätzlich eine oder mehrere fluorierte Phenanthrene und/oder Dibenzofurane der folgenden Formeln enthält: 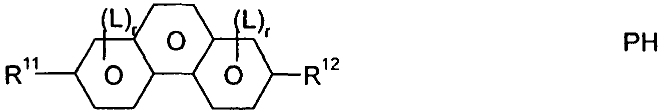 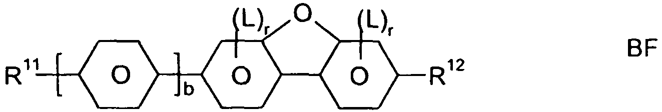 worin R¹¹ und R¹² jeweils unabhängig voneinander die oben angegebenen Bedeutungen besitzen, b 0 oder 1, L F und r 1, 2 oder 3 bedeutet.
   Besonders bevorzugte Verbindungen der Formeln PH und BF sind ausgewählt aus der Gruppe bestehend aus folgenden Unterformeln: 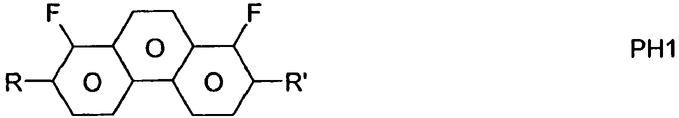 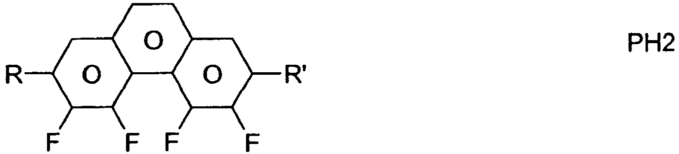 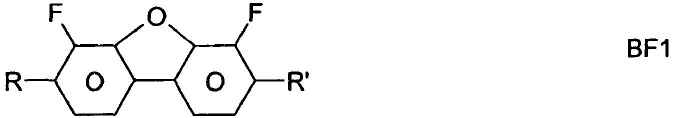 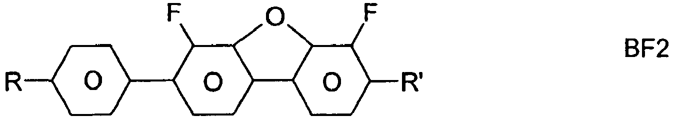 worin R und R' jeweils unabhängig voneinander einen geradkettigen Alkyl- oder Alkoxyrest mit 1-7 C-Atomen bedeuten.
22) FK-Mischung, welche ≥10%, vorzugsweise 5 bis 50%, besonders bevorzugt 15 bis 45% einer oder mehrerer Verbindungen der Formel I enthält.
23) FK-Mischung, welche eine oder mehrere Verbindungen der Formel II und III in einer Gesamtkonzentration von 1 bis 50%, besonders bevorzugt 1 bis 20%, ganz besonders bevorzugt 1 bis 10% enthält.
24) FK-Mischung, welche eine oder mehrere Verbindungen der Formel I und IV in einer Gesamtkonzentration ≥ 10%, besonders bevorzugt von 10 bis 50%, enthält.
25) FK-Mischung, welche eine öder mehrere Verbindungen der Formel I und V in einer Gesamtkonzentration ≥ 20%, besonders bevorzugt von 20 bis 80%, enthält.
26) FK-Mischung, welche eine oder mehrere Verbindungen der Formel I und eine oder mehrere Verbindungen der Formel V und eine oder mehrere Verbindungen der Formel VI enthält. Die Gesamtkonzentration an Verbindungen der Formel I und V und VI in dieser FK-Mischung beträgt vorzugsweise ≥ 25%, besonders bevorzugt von 25 bis 80%.
27) FK-Medium, worin die Konzentration der polymerisierbaren Komponente bzw. Komponente A) ≤ 5%, vorzugsweise ≤ 1%, besonders bevorzugt ≤0.5%, und vorzugsweise ≥ 0.01 %, besonders bevorzugt ≥ 0.1 % beträgt.
28) FK-Medium, worin die Konzentration der flüssigkristallinen Komponente (FK-Mischung) bzw. Komponente B) ≥ 95%, besonders bevorzugt ≥ 99% beträgt.
29) FK-Medium, welches außer den polymerisierbaren Verbindungen der Komponente A keine Verbindungen enthält, die eine endständige Vinyloxygruppe (-O-CH=CH₂) aufweisen.
30) PSA-VA-Anzeige, worin der pretilt-Winkel vorzugsweise ≤ 85°, besonders bevorzugt ≤ 80° beträgt.

Die einzelnen Komponenten der bevorzugten Ausführungsformen 1)-26) der erfindungsgemäßen FK-Mischungen sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren. Entsprechende Verbindungen der Formel CY werden beispielsweise in EP-A-0 364 538 beschrieben. Entsprechende Verbindungen der Formel ZK werden beispielsweise in DE-A-26 36 684 und DE-A-33 21 373 beschrieben.

Die Kombination von FK-Mischungen der oben genannten bevorzugten Ausführungsformen 1)-26) mit den vor- und nachstehend genannten polymerisierten Verbindungen bewirkt in den erfindungsgemäßen FK-Medien niedrige Schwellenspannungen, niedrige Rotationsviskositäten und sehr gute Tieftemperaturstabilitäten bei gleichbleibend hohen Klärpunkten und hohen HR-Werten, und erlaubt die schnelle Einstellung eines besonders niedrigen pretilt-Winkels in PSA-Anzeigen. Insbesondere zeigen die FK-Medien in PSA-Anzeigen im Vergleich zu den Medien aus dem Stand der Technik deutlich verringerte Schaltzeiten, insbesondere auch der Graustufenschaltzeiten.

Vorzugsweise weist die FK-Mischung einen nematischen Phasenbereich von mindestens 80 K, besonders bevorzugt von mindestens 100 K, und eine Rotationsviskosität von nicht mehr als 250, vorzugsweise nicht mehr als 200 mPa·s, bei 20°C auf.

In den erfindungsgemäßen Anzeigen des VA-Typs sind die Moleküle in der Schicht des FK-Mediums im ausgeschalteten Zustand senkrecht zu den Elektrodenflächen (homöotrop) oder gekippt homöotrop (engl. "tilted") orientiert. Bei Anlegen einer elektrischen Spannung an die Elektroden findet eine Umorientierung der FK-Moleküle mit den Moleküllängsachsen parallel zu den Elektrodenflächen statt.

Erfindungsgemäße FK-Mischungen zur Verwendung in Anzeigen des VA-Typs weisen eine negative dielektrische Anisotropie Δε auf, vorzugsweise von -0,5 bis -10, insbesondere von -2,5 bis -7,5 bei 20°C und 1 kHz.

Die Doppelbrechung Δn in erfindungsgemäßen FK-Mischungen zur Verwendung in Anzeigen des VA-Typs liegt vorzugsweise unter 0,16, besonders bevorzugt zwischen 0,06 und 0,14, insbesondere zwischen 0,07 und 0,12.

Die erfindungsgemäßen FK-Mischungen und FK-Medien können auch weitere, dem Fachmann bekannte und in der Literatur beschriebene Zusätze oder Additive enthalten, wie beispielsweise Polymerisationsinitiatoren, Inhibitoren, Stabilisatoren, oberflächenaktive Substanzen oder chirale Dotierstoffe. Diese können polymerisierbar oder unpolymerisierbar sein. Polymerisierbare Additive werden dementsprechend der polymerisierbaren Komponente oder Komponente A) zugerechnet. Unpolymerisierbare Additive werden dementsprechend der FK-Mischung (Hostmischung) bzw. der unpolymerisierbaren Komponente oder Komponente B) zugerechnet.

Die FK-Mischungen und FK-Medien können beispielsweise einen oder mehrere chirale Dotierstoffe enthalten, vorzusgweise ausgewählt aus der Gruppe bestehend aus Verbindungen der nachfolgenden Tabelle B.

Ferner können den FK-Medien 0 bis 15%, vorzugsweise 0 bis 10%, eines oder mehrere Additive ausgewählt aus der Gruppe enthaltend pleochroitische Farbstoffe, Nanopartikel, Leitsalze, Komplexsalze und Substanzen zur Veränderung der dielektrischen Anisotropie, der Viskosität und/oder der Orientierung der nematischen Phasen zugesetzt werden. Geeignete und bevorzugte Leitsalze sind beispielsweise Ethyldimethyldodecyl-ammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258, 1973). Derartige Substanzen sind z.B. in DE-A-22 09 127, DE-A-22 40 864, DE-A-23 21 632, DE-A-23 38 281, DE-A-24 50 088, DE-A-26 37 430 und DE-A-28 53 728 beschrieben.

Zur Herstellung von PSA-Anzeigen werden die polymerisierbaren Verbindungen im FK-Medium zwischen den Substraten der FK-Anzeige unter Anlegen einer Spannung durch in-situ-Polymerisation polymerisiert oder vernetzt (falls eine Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5%, besonders bevorzugt 0,001 bis 1 %. Die Polymerisation kann aber auch ohne Zusatz eines Initiators erfolgen. In einer weiteren bevorzugten Ausführungsform enthält das FK-Medium keinen Polymerisationsinitiator.

Die polymerisierbare Komponente A) oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente A), vorzugsweise 10 - 10000 ppm, besonders bevorzugt 50 - 500 ppm.

Die polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte.

Die erfindungsgemäßen FK-Medien zur Verwendung in PSA-Anzeigen enthalten vorzugsweise ≤ 5%, besonders bevorzugt ≤ 1%, ganz besonders bevorzugt ≤ 0,5%, und vorzugsweise ≥ 0,01 %, besonders bevorzugt ≥ 0,1 %, an polymerisierbaren Verbindungen, insbesondere polymerisierbaren Verbindungen der vor- und nachstehend genannten Formeln.

Besonders bevorzugt sind FK-Medien enthaltend eine, zwei oder drei polymerisierbare Verbindungen.

Ferner bevorzugt sind achirale polymerisierbare Verbindungen, sowie FK-Medien worin die Verbindungen der Komponente A) und/oder B) ausschließlich aus der Gruppe bestehend aus achiralen Verbindungen ausgewählt sind.

Ferner bevorzugt sind FK-Medien, worin die polymerisierbare Komponente bzw. Komponente A) eine oder mehrere polymerisierbare Verbindungen mit einer polymerisierbaren Gruppe (monoreaktiv) und eine oder mehrere polymerisierbare Verbindungen mit zwei oder mehr, vorzugsweise zwei polymerisierbaren Gruppen (di- oder multireaktiv) enthält.

Ferner bevorzugt sind PSA-Anzeigen und FK-Medien, worin die polymerisierbare Komponente bzw. Komponente A) ausschließlich polymerisierbare Verbindungen mit zwei polymerisierbaren Gruppen (direaktiv) enthält.

Die polymerisierbaren Verbindungen können einzeln den FK-Medien zugesetzt werden, es können aber auch Mischungen enthaltend zwei oder mehr erfindungsgemäße polymerisierbare Verbindungen verwendet werden. Bei Polymerisation solcher Mischungen entstehen Copolymere. Die vor- und nachstehend genannten polymerisierbaren Mischungen sind ein weiterer Gegenstand der Erfindung. Die polymerisierbaren Verbindungen können mesogen oder nicht-mesogen sein. Besonders bevorzugt sind polymerisierbare mesogene Verbindungen, auch als reaktive Mesogene (RMs) bezeichnet.

Geeignete und bevorzugte RMs für die Verwendung in erfindungsgemäßen FK-Medien und PSA-Anzeigen sind nachfolgend beschrieben.

In einer bevorzugten Ausführungsform der Erfindung sind die polymerisierbaren Verbindungen ausgewählt aus Formel I*

R^{a}-A¹-(Z¹-A²)ₘ-R^{b} I*

worin die einzelnen Reste folgende Bedeutung haben
- R^{a} und R^{b}: jeweils unabhängig voneinander P, P-Sp-, H, Halogen, SF₅, NO₂, eine Kohlenstoffgruppe oder Kohlenwasserstoffgruppe, wobei mindestens einer der Reste R^{a} und R^{b} eine Gruppe P oder P-Sp- bedeutet oder enthält,
- P: bei jedem Auftreten gleich oder verschieden eine polymerisierbare Gruppe,
- Sp: bei jedem Auftreten gleich oder verschieden eine Abstandsgruppe oder eine Einfachbindung,
- A¹ und A²: jeweils unabhängig voneinander eine aromatische, heteroaromatische, alicyclische oder heterocyclische Gruppe, vorzugsweise mit 4 bis 25 Ringatomen, welche auch anellierte Ringe enthalten kann, und welche auch durch L ein- oder mehrfach substituiert sein kann,
- L: P-Sp-, H, OH, CH₂OH, Halogen, SF₅, NO₂, eine Kohlenstoffgruppe oder Kohlenwasserstoffgruppe,
- Z¹: bei jedem Auftreten gleich oder verschieden -O-, -S-, -CO-, - CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, - CH₂CF₂-, -(CF₂)ₙ₁-, -CH=CH-, -CF=CF-, -C≡C-, -CH=CH-COO-, -OCO-CH=CH-, CR⁰R⁰⁰ oder eine Einfachbindung,
- R⁰ und R⁰⁰: jeweils unabhängig voneinander H oder Alkyl mit 1 bis 12 C-Atomen,
- m: 0, 1, 2, 3 oder 4,
- n1: 1, 2, 3 oder 4.

Besonders bevorzugte Verbindungen der Formel I* sind solche, worin
- R^{a} und R^{b}: jeweils unabhängig voneinander P, P-Sp-, H, F, Cl, Br, I, - CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch - C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Sp- ersetzt sein können, wobei mindestens einer der Reste R^{a} und R^{b} eine Gruppe P oder P-Sp- bedeutet oder enthält
- A¹ und A²: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS, - OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, - CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Besonders bevorzugte Verbindungen der Formel I* sind aus folgenden Unterformeln ausgewählt 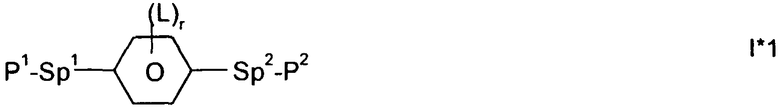 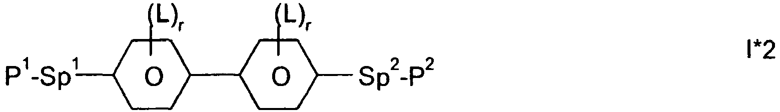 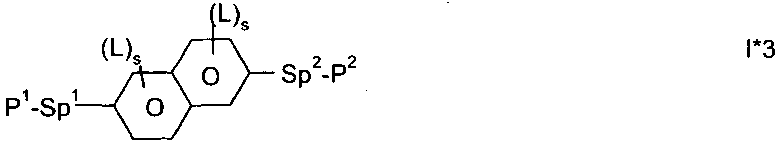 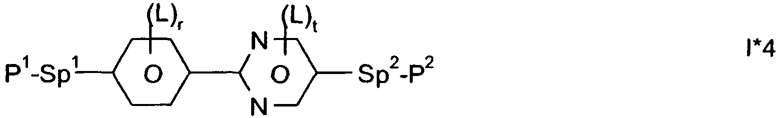 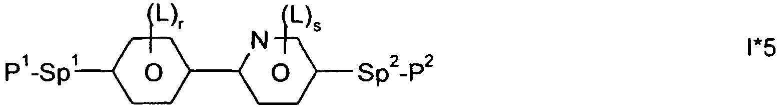 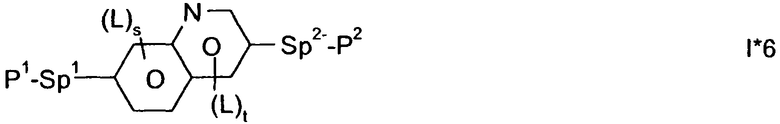 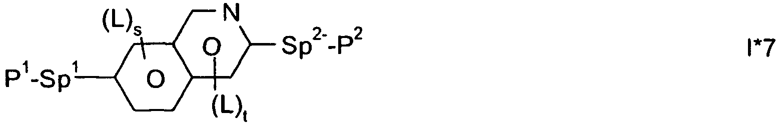 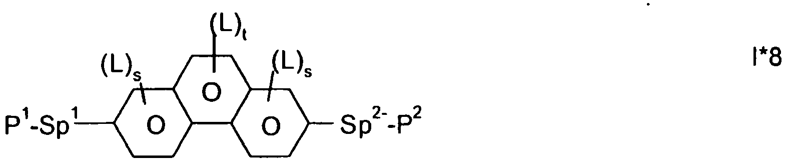 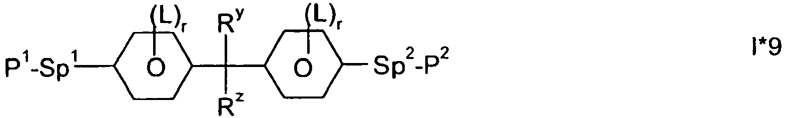 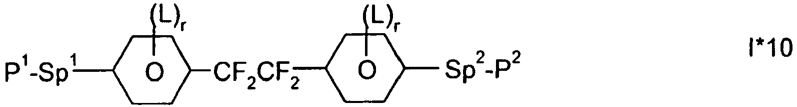 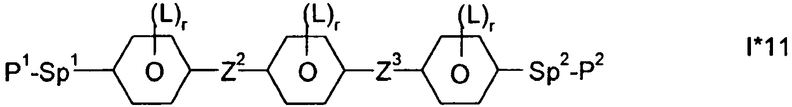 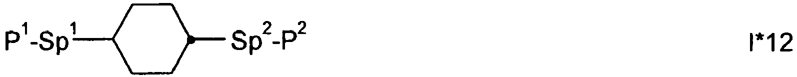 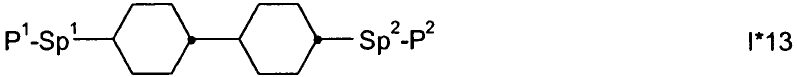 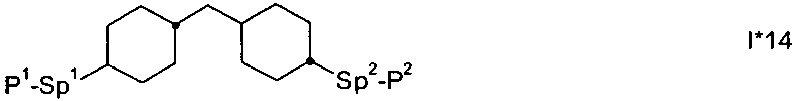 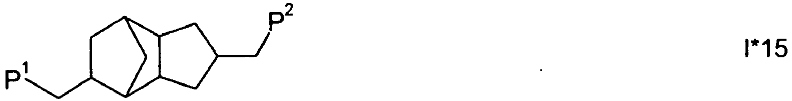 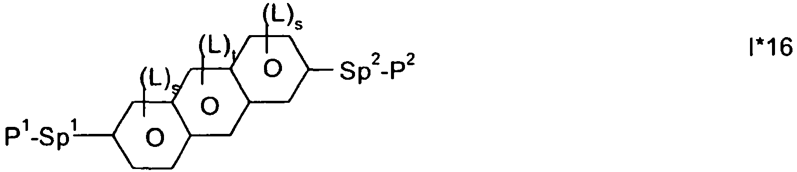 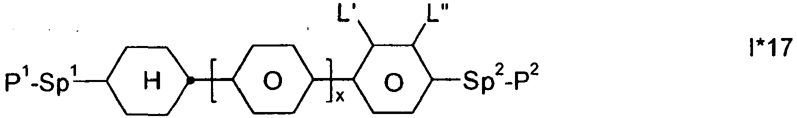 worin
- P¹ und P²: eine der für P angegebenen Bedeutungen besitzen und vorzugsweise Acrylat oder Methacrylat bedeuten,
- Sp¹ und Sp²: eine der für Sp angegebenen Bedeutungen besitzen oder eine Einfachbindung bedeuten,
- Z² und Z³: jeweils unabhängig voneinander -COO- oder -OCO bedeuten,
- L: die oben für Formel I angegebene Bedeutung besitzt,
- L' und L": jeweils unabhängig voneinander H, F oder Cl bedeuten,
- r: 0, 1, 2, 3 oder 4 bedeutet,
- s: 0, 1, 2 oder 3 bedeutet,
- t: 0, 1 oder 2 bedeutet,
- x: 0 oder 1, und
- R^{y} und R^{z}: jeweils unabhängig voneinander H, CH₃ oder CF₃ bedeuten.

In einer weiteren bevorzugten Ausführungsform der Erfindung sind die polymerisierbaren Verbindungen chirale oder optisch aktive Verbindungen ausgewählt aus Formel II* (chirale RMs):

(R*-(A¹-Z¹)ₘ)ₖ-Q II*

worin A¹, Z¹ und m bei jedem Auftreten gleich oder verschieden eine der in Formel I* angegebenen Bedeutungen besitzen,
- R*: bei jedem Auftreten gleich oder verschieden eine der für R^{a} in Formel I* angegebenen Bedeutungen besitzt, wobei R* chiral oder achiral sein kann,
- Q: eine k-valente chirale Gruppe bedeutet, welche optional ein- oder mehrfach mit L wie in Formel I* definiert substituiert ist,
- k: 1, 2, 3, 4, 5 oder 6 ist,
wobei die Verbindungen mindestens einen Rest R* oder L enthalten, der eine Gruppe P oder P-Sp- wie oben definiert bedeutet oder enthält.

Besonders bevorzugte Verbindungen der Formel II* enthalten eine monovalente Gruppe Q der Formel III* 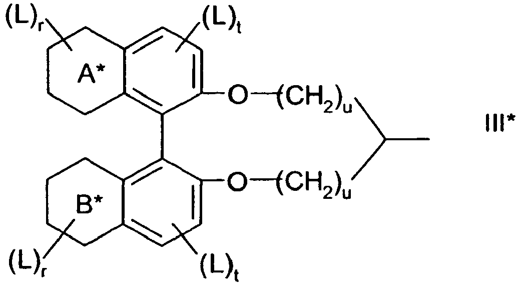 worin L und r bei jedem Auftreten gleich oder verschieden die oben angegebene Bedeutung besitzen,
- A* und B*: jeweils unabhängig voneinander anelliertes Benzol, Cyclohexan oder Cyclohexen,
- t: bei jedem Auftreten gleich oder verschieden 0, 1 oder 2, und
- u: bei jedem Auftreten gleich oder verschieden 0, 1 oder 2
bedeutet. Besonders bevorzugt sind Gruppen der Formel III*, worin u 1 bedeutet.

Weitere bevorzugte Verbindungen der Formel II* enthalten eine monovalente Gruppe Q oder eine oder mehrere Gruppen R* der Formel IV* 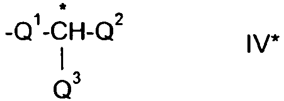 worin
- Q¹: Alkylen oder Alkylenoxy mit 1 bis 9 C-Atomen oder eine Einfachbindung,
- Q²: optional fluoriertes Alkyl oder Alkoxy mit 1 bis 10 C-Atomen, worin auch eine oder zwei nicht benachbarte CH₂-Gruppen durch -O-, -S-, -CH=CH-, -CO-, -OCO-, -COO-, -O-COO-, -S-CO-, -CO-S- oder - C≡C- so ersetzt sein können, dass O- und/oder S-Atome nicht direkt miteinander verknüpft sind,
- Q³: F, Cl, CN oder Alkyl oder Alkoxy wie für Q² definiert, aber von Q² verschieden
bedeuten.

Bevorzugte Gruppen der Formel IV* sind beispielsweise 2-butyl (=1-methylpropyl), 2-methylbutyl, 2-methylpentyl, 3-methylpentyl, 2-ethylhexyl, 2-propylpentyl, insbesondere 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy.

Weitere bevorzugte Verbindungen der Formel II* enthalten eine bivalente Gruppe Q der Formel V* 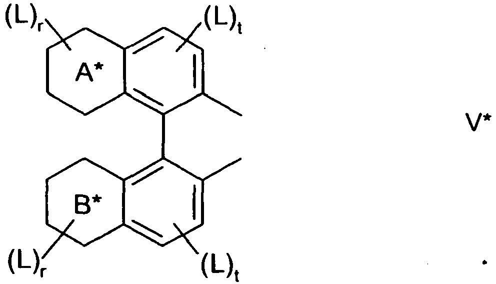 worin L, r, t, A* und B* die oben angegebene Bedeutung besitzen.

Weitere bevorzugte Verbindungen der Formel II* enthalten eine bivalente Gruppe Q ausgewählt aus folgenden Formeln 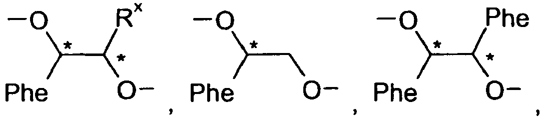 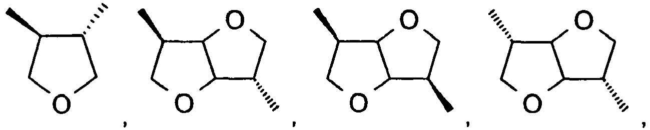 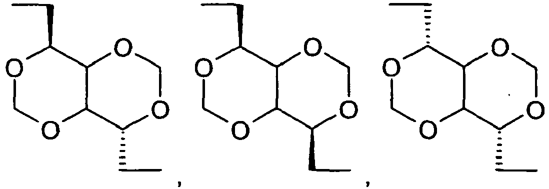 worin Phe Phenyl bedeutet, welches optional durch L ein- oder mehrfach substituiert ist, und R^{x} F oder optional fluoriertes Alkyl mit 1 bis 4 C-Atomen bedeutet.

Geeignete chirale RMs sind beispielsweise in GB 2 314 839 A, US 6,511,719, US 7,223,450, WO 02/34739 A1, US 7,041,345, US 7,060,331 oder US 7,318,950 beschrieben. Geeignete RMs mit Binaphthylgruppen sind beispielsweise in US 6,818,261, US 6,916,940, US 7,318,950 und US 7,223,450 beschrieben.

Die vor- und nachstehend gezeigten chiralen Strukturelemente, sowie polymerisierbare und polymerisierte Verbindungen enthaltend solche chiralen Strukturelemente, können in optisch aktiver Form, also als reine Enantiomere oder als beliebige Mischung beider Enantiomere, oder auch als Racemat eingesetzt werden. Bevorzugt ist die Verwendung von Racematen. Die Verwendung der Racemate besitzt gegenüber der Verwendung von reinen Enantiomeren einige Vorteile, wie beispielsweise ein deutlich geringerer Syntheseaufwand und geringere Materialkosten.

Besonders bevorzugte Verbindungen der Formel II* sind aus folgenden Unterformeln ausgewählt 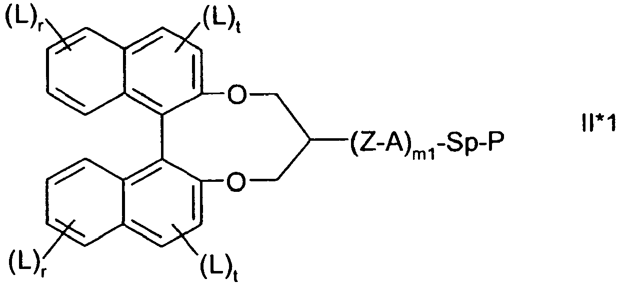 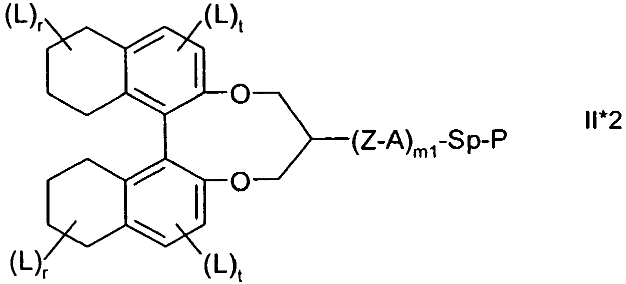 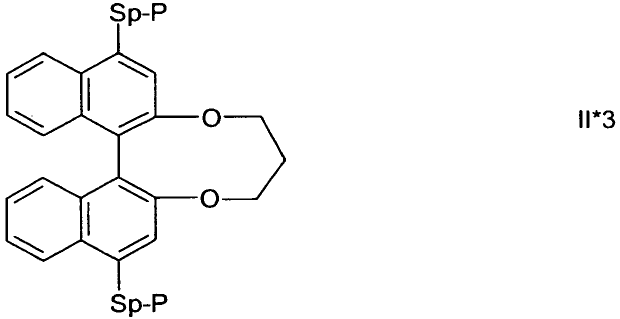 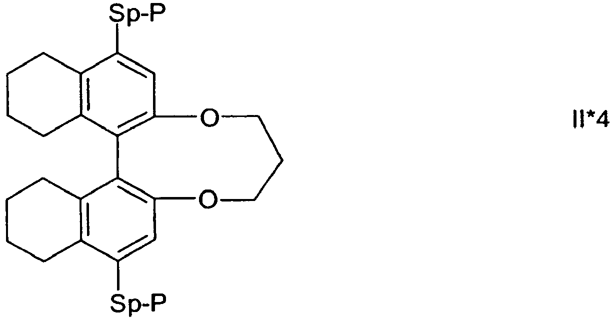 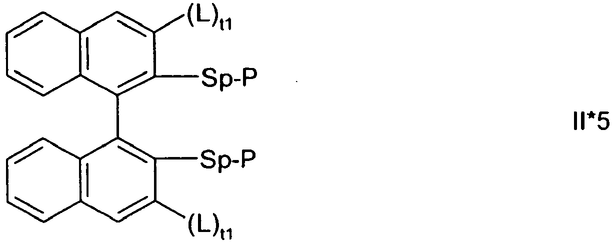 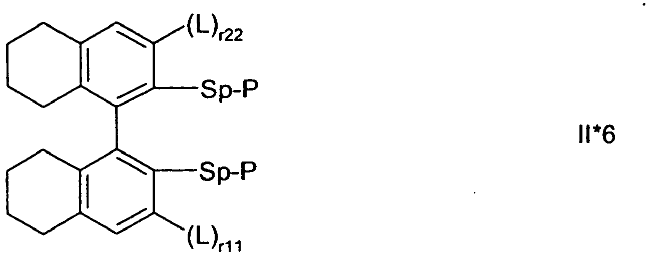 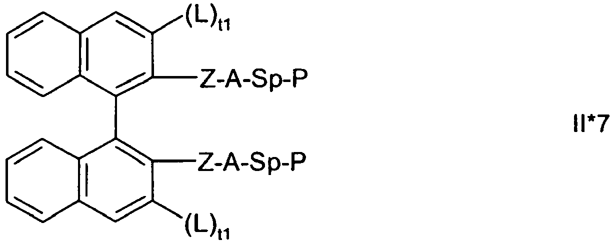 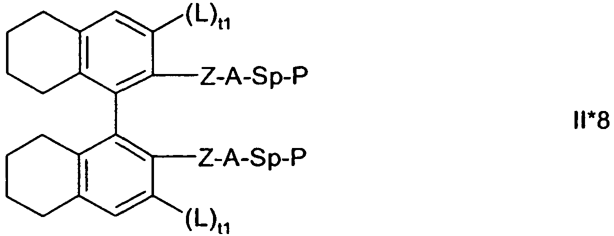 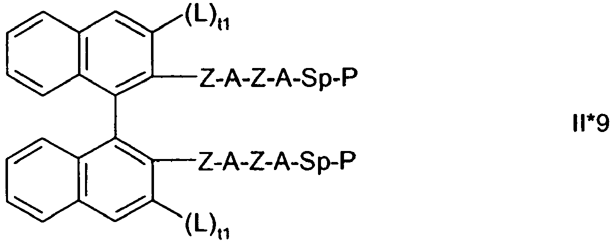 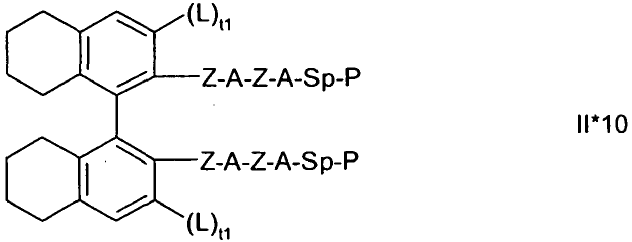 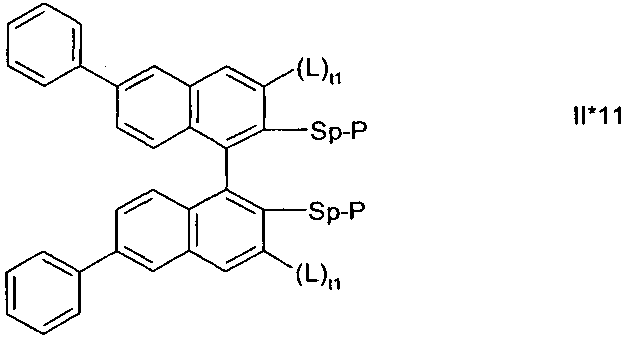 worin L, P, Sp, m, r und t die oben angegebene Bedeutung haben, Z bzw. A bei jedem Auftreten gleich oder verschieden eine der für Z¹ bzw. A¹ angegebenen Bedeutungen haben, und t1 bei jedem Auftreten gleich oder verschieden 0 oder 1 bedeutet.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit mehr als 3 C-Atomen kann geradkettig, verzweigt und/oder cyclisch sein, und kann auch Spiroverküpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind C₁-C₄₀ Alkyl, C₂-C₄₀ Alkenyl, C₂-C₄₀ Alkinyl, C₃-C₄₀ Allyl, C₄-C₄₀ Alkyldienyl, C₄-C₄₀ Polyenyl, C₆-C₄₀ Aryl, C₆-C₄₀ Alkylaryl, C₆-C₄₀ Arylalkyl, C₆-C₄₀ Alkylaryloxy, C₆-C₄₀ Arylalkyloxy, C₂-C₄₀ Heteroaryl, C₄-C₄₀ Cycloalkyl, C₄-C₄₀ Cycloalkenyl, etc. Besonders bevorzugt sind C₁-C₂₂ Alkyl, C₂-C₂₂ Alkenyl, C₂ -C₂₂ Alkinyl, C₃-C₂₂ Allyl, C₄-C₂₂ Alkyldienyl, C₆-C₁₂ Aryl, C₆-C₂₀ Arylalkyl und C₂-C₂₀ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte CH₂-Gruppen jeweils unabhängig voneinander durch - C(R^{x})=C(R^{x})-, -C≡C-, -N(R^{x})-, -O-, -S-, -CO-, -CO-O-, -O-CO-, -O-CO-O-so ersetzt sein können, dass O- und/oder S-Atome nicht direkt miteinander verknüpft sind.

R^{x} bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO-, -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl, Perfluorohexyl etc.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl, Cyclooctenyl etc.

Bevorzugte Alkinylgruppen sind beispielsweise Ethinyl, Propinyl, Butinyl, Pentinyl, Hexinyl, Octinyl etc.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy, n-Dodecoxy, etc.

Bevorzugte Aminogruppen sind beispielsweise Dimethylamino,

Methylamino, Methylphenylamino, Phenylamino, etc.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, dass O-Atome und/oder S-Atome nicht direkt miteinander verknüpft sind.

Bevorzugte Arylgruppen sind beispielsweise Phenyl, Biphenyl, Terphenyl, [1 ,1 ':3',1 "]Terphenyl-2'-yl, Naphthyl, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7-oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nicht-benachbarte CH₂-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7- gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl. Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, vor- und nachstehend auch als "L" bezeichnet, sind beispielsweise F, Cl, Br, I, -CN, -NO₂ , -NCO, -NCS, -OCN, -SCN, - C(=O)N(R^{x})₂, -C(=O)Y¹, -C(=O)R^{x}, -N(R^{x})₂, worin R^{x} die oben angegebene Bedeutung hat und Y¹ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, - CN, R⁰, -OR⁰, -CO-R⁰, -CO-O-R⁰, -O-CO-R⁰ oder -O-CO-O-R⁰ substituiert, worin R⁰ die oben angegebene Bedeutung hat.

Besonders bevorzugte Substituenten L sind beispielsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, ferner Phenyl. 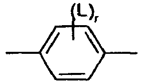 ist vorzugsweise 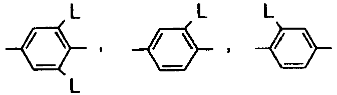 oder 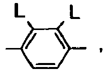 worin L eine der oben angegebenen Bedeutungen hat.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Bevorzugte Gruppen P sind ausgewählt aus CH₂=CW¹-COO-, CH₂=CW¹-CO-, 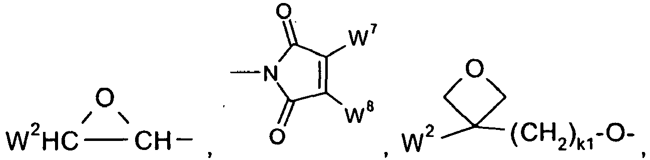 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einen oder mehreren, von P-Sp- verschiedenen, Resten L wie oben definiert substiuiert ist, k₁, k₂ und k₃ jeweils unabhängig voneinander 0 oder 1 bedeuten, k₃ vorzugsweise 1 bedeutet.

Besonders bevorzugte Gruppen P sind CH₂=CW¹-COO-, insbesondere CH₂=CH-COO-, CH₂=C(CH₃)-COO- und CH₂=CF-COO-, ferner CH₂=CH-O-, (CH₂=CH)₂CH-OCO-, (CH₂=CH)₂CH-O-, 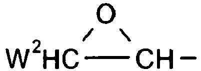 und

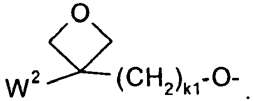

Ganz besonders bevorzugte Gruppen P sind Vinyloxy, Acrylat, Methacrylat, Fluoracrylat, Chloracrylat, Oxetan und Epoxy, insbesondere Acrylat und Methacrylat.

Bevorzugte Abstandsgruppen Sp sind ausgewählt aus der Formel Sp'-X', so dass der Rest P-Sp- der Formel P-Sp'-X'- entspricht, wobei
- Sp': Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, - NH-, -NR⁰-, -SiR⁰⁰R⁰⁰⁰-, -CO-, -COO-, -OCO-, -OCO-O-, -S-CO-, - CO-S-, -NR⁰⁰-CO-O-, -O-CO-NR⁰⁰-, -NR⁰⁰-CO-NR⁰⁰-, -CH=CH- oder -C≡C- ersetzt sein können, dass O- und/oder S-Atome nicht direkt miteinander verknüpft sind,
- X': -O-, -S-, -CO-, -COO-, -OCO-, -O-COO-, -CO-NR⁰⁰-, -NR⁰⁰-CO-, - NR⁰⁰-CO-NR⁰⁰-, -OCH₂-, -CH₂O-, -SCH₂-, -CH₂S-, -CF₂O-, -OCF₂-, - CF₂S-, -SCF₂-, -CF₂CH₂-, -CH₂CF₂-, -CF₂CF₂-, -CH=N-, -N=CH-, - N=N-, -CH=CR⁰-, -CY²=CY³-, -C≡C-, -CH=CH-COO-, -OCO-CH=CH-oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.

X' ist vorzugsweise -O-, -S -CO-, -COO-, -OCO-, -O-COO-, -CO-NR°-, - NR⁰-CO-, -NR⁰-CO-NR⁰- oder eine Einfachbindung.

Typische Abstandsgruppen Sp' sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -X'-Sp'- sind -(CH₂)ₚ₁-, -O-(CH₂)ₚ₁-, -OCO-(CH₂)ₚ₁-, -OCOO-(CH₂)ₚ₁-.

Besonders bevorzugte Gruppen Sp' sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

In einer weiteren bevorzugten Ausführungsform der Erfindung bedeutet P-Sp- einen Rest mit zwei oder mehreren polymerisierbaren Gruppen (multifunktionelle polymerisierbare Reste). Geeignete Reste dieses Typs, sowie diese enthaltende polymerisierbare Verbindungen und ihre Herstellung sind beispielsweise in US 7,060,200 B1 oder US 2006/0172090 A1 beschrieben. Besonders bevorzugt sind multifunktionelle polymerisierbare Reste P-Sp- ausgewählt aus folgenden Formeln

-X-alkyl-CHP¹-CH₂-CH₂P² l*a

-X-alkyl-C(CH2P¹)(CH₂P²)-CH₂P³ l*b

-X-alkyl-CHP¹CHP²-CH₂P³ l*c

-X-alkyl-C(CH₂P¹)(CH₂P²)CₐₐH₂ₐₐ₊₁ l*d

-X-alkyl-CHP¹-CH₂P² l*e

-X-alkyl-CHP¹P² l*f

-X-alkyl-CP¹P²-CₐₐH₂ₐₐ₊₁ l*g

-X-alkyl-C(CH₂P¹)(CH₂P²)-CH₂OCH₂-C(CH₂P³)(CH₂P⁴)CH₂P⁵ l*h

-X-alkyl-CH((CH₂)ₐₐP¹)((CH₂)_{bb}P²) l*i

-X-alkyl-CHP¹CHP²-CₐₐH₂ₐₐ₊₁ l*k

-X'-alkyl-C(CH₃)(CH₂P¹)(CH₂P²) l*m

worin
- alkyl: eine Einfachbindung oder geradkettiges oder verzweigtes Alkylen mit 1 bis 12 C-Atomen bedeutet, worin eine oder mehrere nicht benachbarte CH₂-Gruppen jeweils unabhängig voneinander durch -C(R⁰⁰)=C(R⁰⁰⁰)-, -C≡C-, -N(R⁰⁰)-, -O-, -S-, - CO-, -CO-O-, -O-CO-, -O-CO-O- so ersetzt sein können, dass O-und/oder S-Atome nicht direkt miteinander verknüpft sind, und worin auch ein oder mehrere H-Atome durch F, Cl oder CN ersetzt sein können, wobei R⁰⁰ und R⁰⁰⁰ die oben angegebene Bedeutung haben,
aa und bb jeweils unabhängig voneinander 0, 1, 2, 3, 4, 5 oder 6 bedeuten,
- X: eine der für X' angegebenen Bedeutungen besitzt, und
- P¹⁻⁵: jeweils unabhängig voneinander eine der für P angegebenen Bedeutungen besitzen.

Die polymerisierbaren Verbindungen und RMs können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden. Weitere Syntheseverfahren finden sich in den vor- und nachstehend zitierten Dokumenten. Im einfachsten Fall erfolgt die Synthese solcher RMs zum Beispiel durch Veresterung oder Veretherung von 2,6-Dihydroxynaphthalin oder 4,4'-Dihydroxybiphenyl mit entsprechenden Säuren, Säurederivaten, oder halogenierten Verbindungen enthaltend eine Gruppe P, wie zum Beispiel (Meth)acrylsäurechlorid oder (Meth)acrylsäure, in Gegenwart von einem wasserentziehenden Reagens wie zum Beispiel DCC (Dicyclohexylcarbodiimid).

Die Herstellung der erfindungsgemäß verwendbaren FK-Medien erfolgt in an sich üblicher Weise, beispielsweise indem man eine oder mehrere der oben genannten Verbindungen mit einer oder mehreren polymerisierbaren Verbindungen wie oben definiert, und ggf. mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Es versteht sich für den Fachmann von selbst, daß die erfindungsgemäßen FK-Medien auch Verbindungen enthalten können, worin beispielsweise H, N, O, Cl, F durch die entsprechenden Isotope ersetzt sind.

Der Aufbau der erfindungsgemäßen FK-Anzeigen entspricht der für PSA-Anzeigen üblichen Geometrie, wie er im eingangs zitierten Stand der Technik beschrieben ist. Es sind Geometrien ohne Protrusions bevorzugt, insbesondere diejenigen, bei denen darüber hinaus die Elektrode auf der Farbfilter-Seite unstrukturiert ist und lediglich die Elektrode auf der TFT-Seite Schlitze aufweist. Besonders geeignete und bevorzugte Elektrodenstrukturen für PS-VA-Anzeigen sind beispielsweise in US 2006/0066793 A1 beschrieben.

Die erfindungsgemäßen FK-Mischungen und FK-Medien eignen sich prinzipiell für jede Art von PS- oder PSA-Anzeige, insbesondere solche beruhend auf FK-Medien mit negativer dielektrischer Anisotropie, besonders bevorzugt für PSA-VA-, PSA-IPS- oder PS-FFS-Anzeigen. Der Fachmann kann jedoch, ohne erfinderisches Zutun, geeignete erfindungsgemäße FK-Mischungen und FK-Medien auch in anderen Anzeigen des PS- oder PSA-Typs einsetzen, die sich von den oben genannten Anzeigen beispielsweise durch ihren prinzipiellen Aufbau oder durch die Art, Anordnung oder Struktur der einzelnen verwendeten Komponenten, wie beispielsweise der Substrate, Orientierungsschichten, Elektroden, Ansteuerelemente, Hintergrundbeleuchtung, Polarisatoren, Farbfilter, ggf. vorhandenen Kompensationsfolien etc., unterscheiden.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

Folgende Abkürzungen werden verwendet:
(n, m, z: jeweils unabhängig voneinander 1, 2, 3, 4, 5 oder 6)

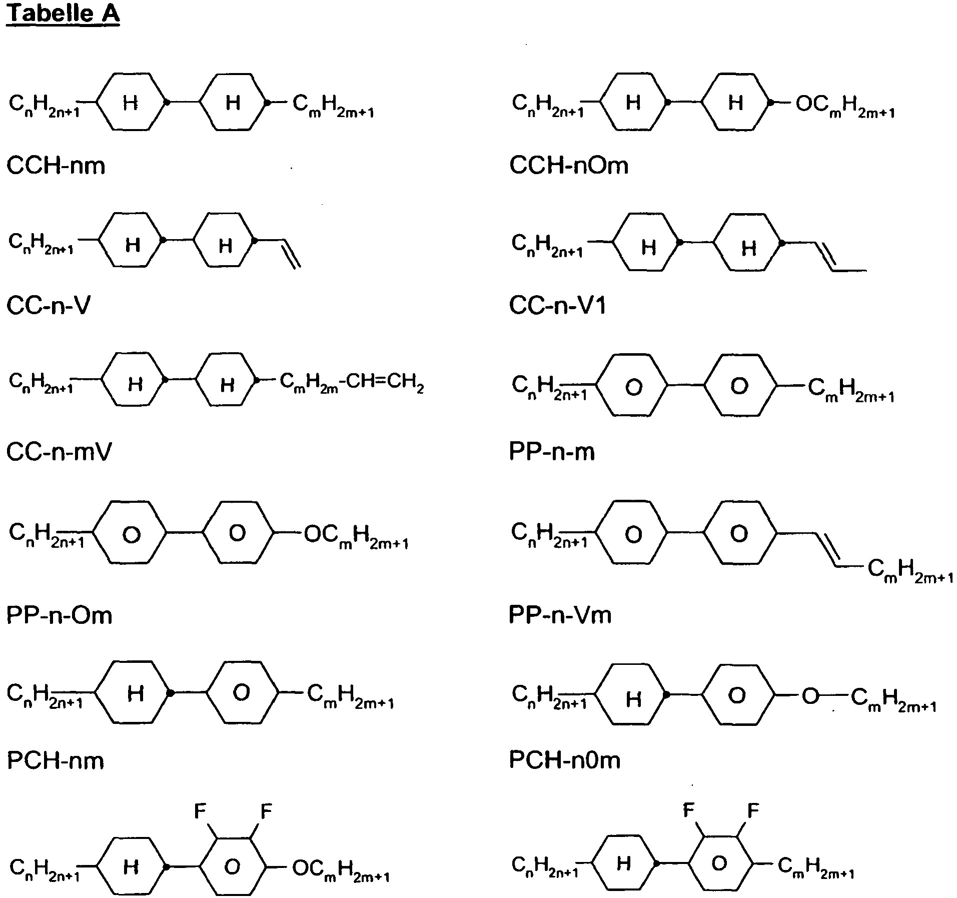

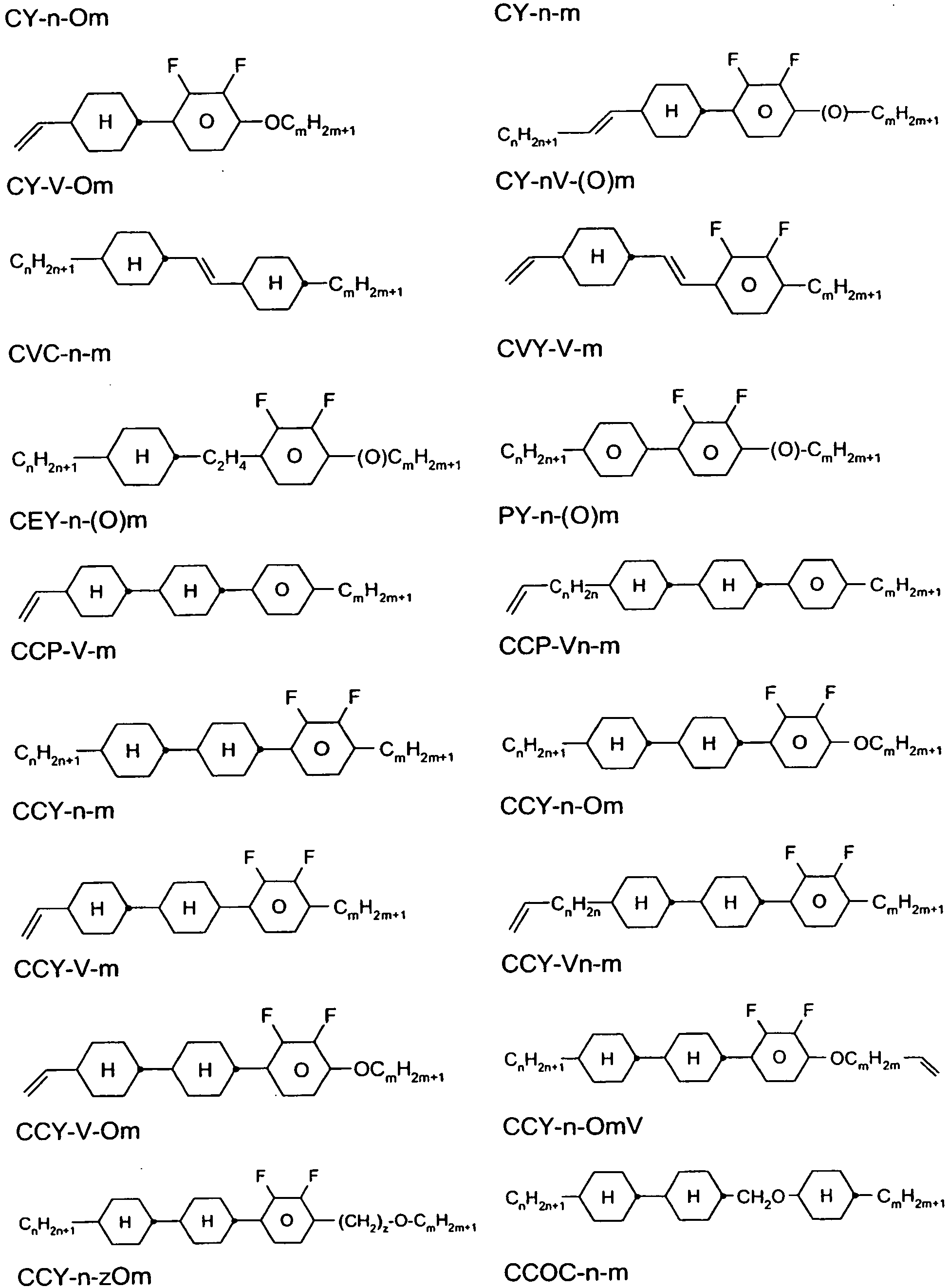

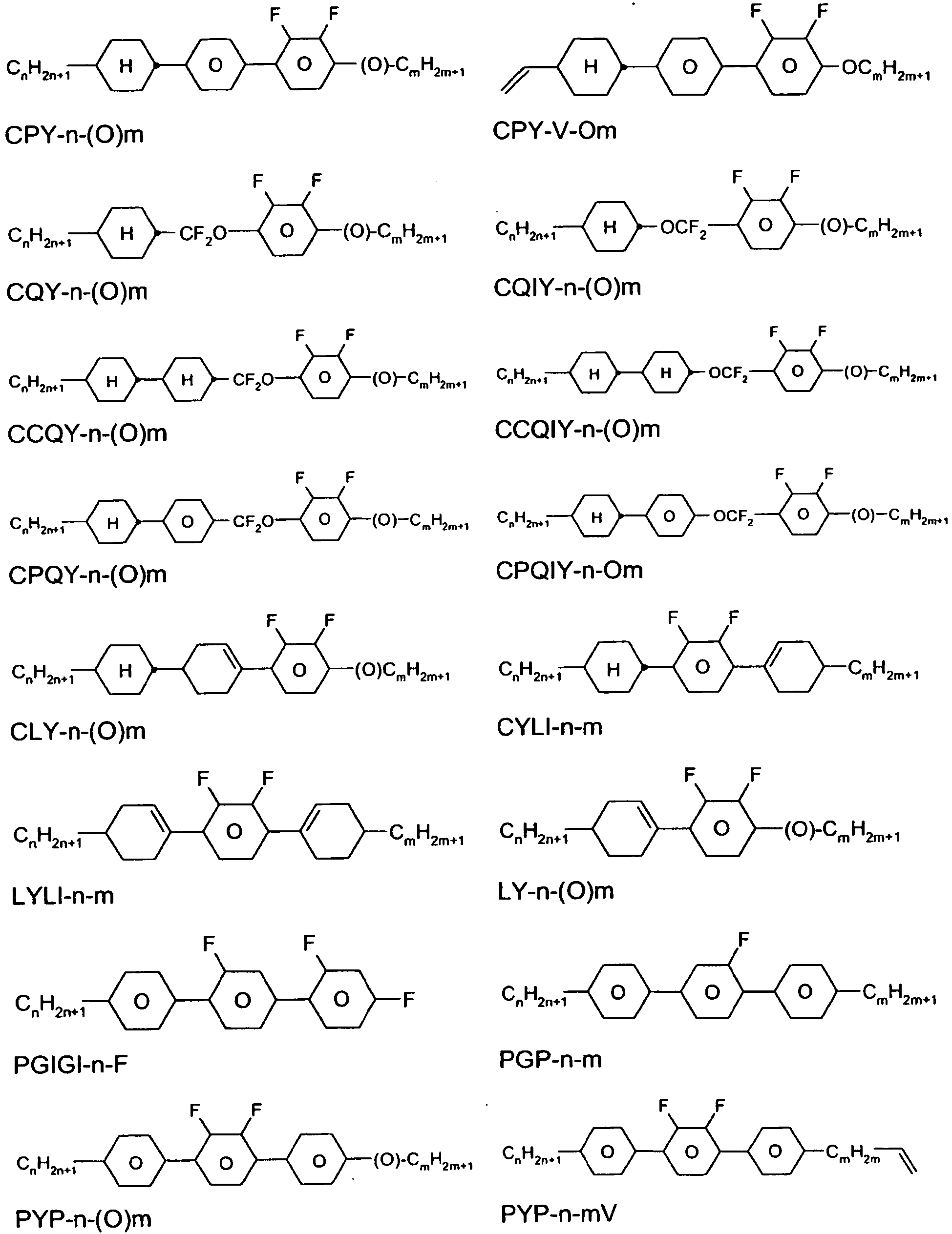

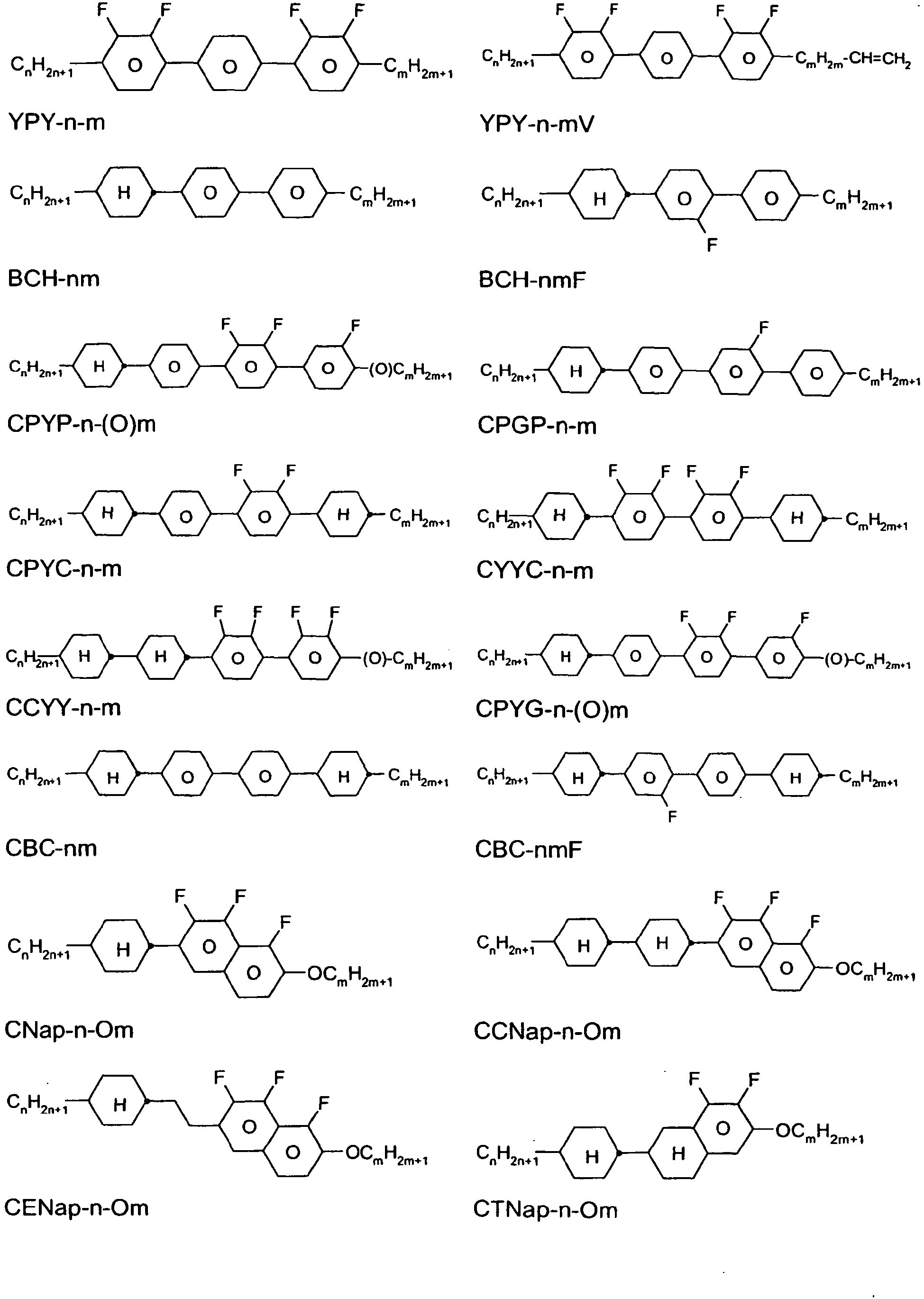

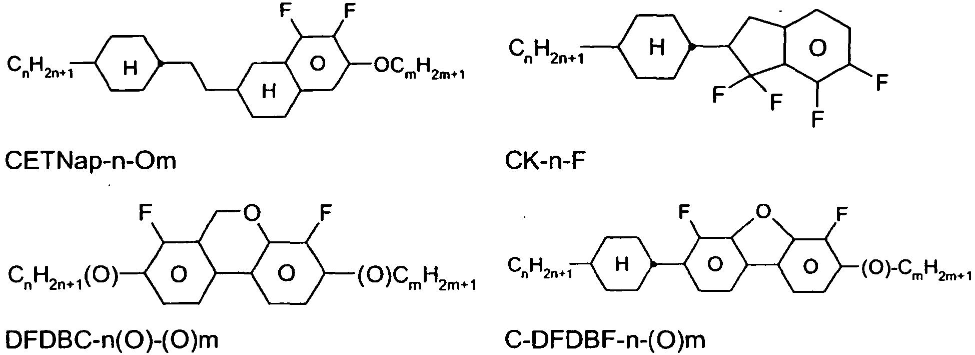

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabelle A.

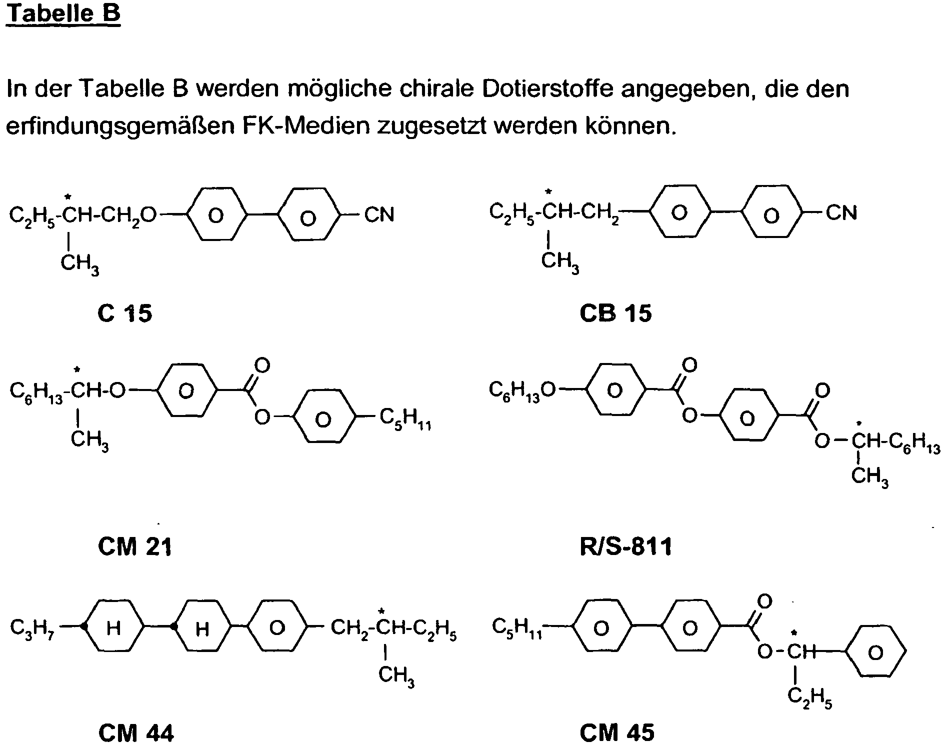

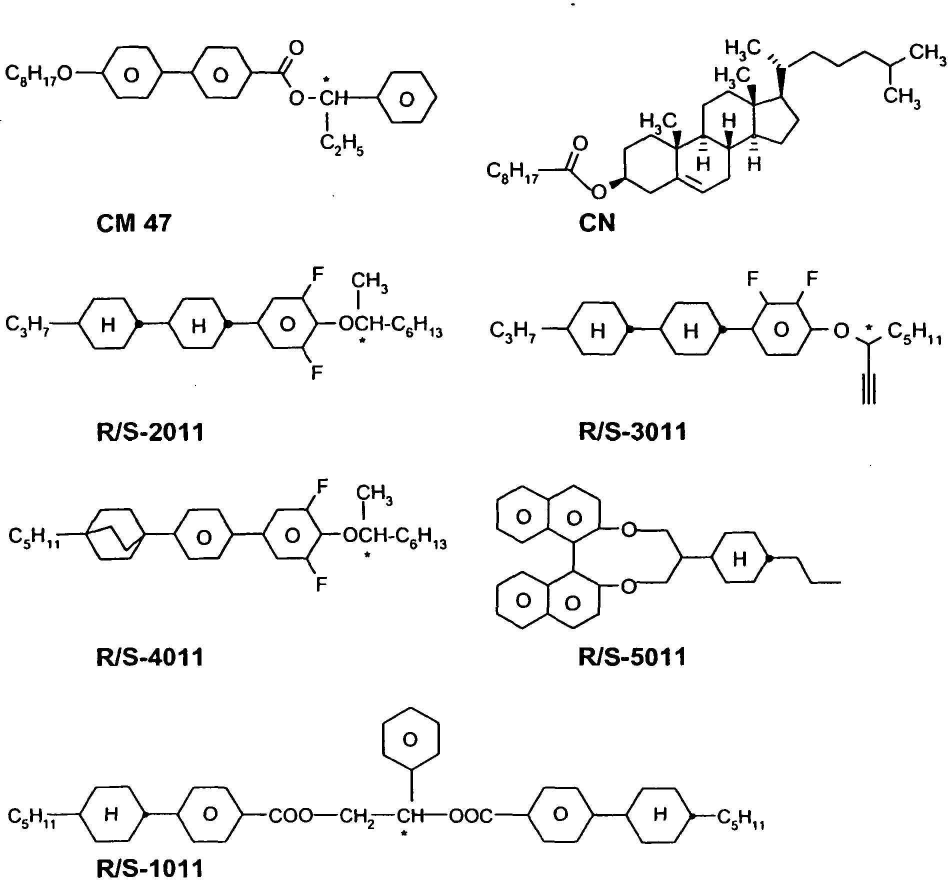

Vorzugsweise enthalten die FK-Medien 0 bis 10%, insbesondere 0,01 bis 5% und besonders bevorzugt 0,1 bis 3% an Dotierstoffen. Vorzugsweise enthalten die FK-Medien einen oder mehrere Dotierstoffe ausgewählt aus der Guppe bestehend aus Verbindungen der Tabelle B.

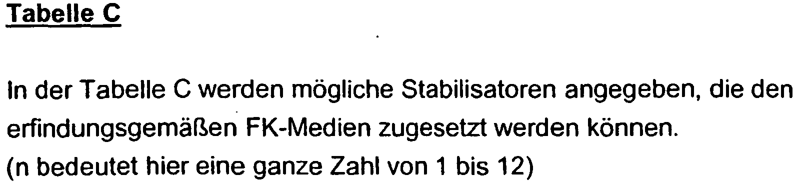

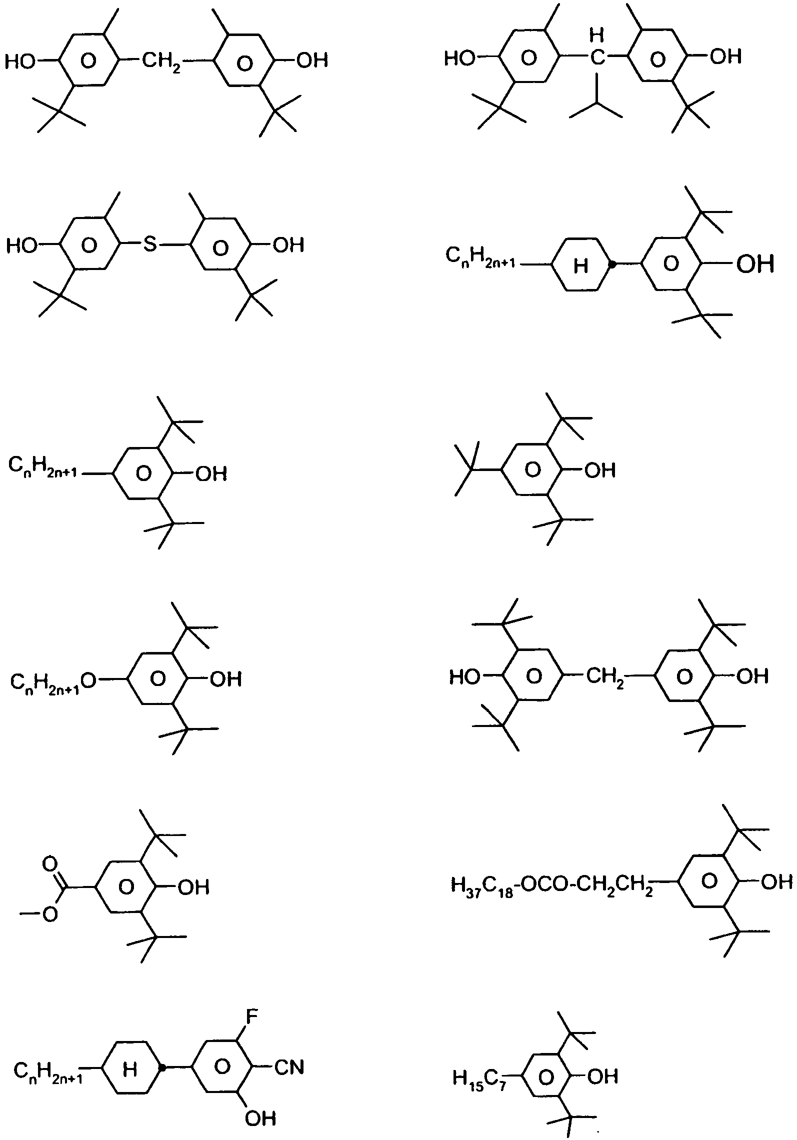

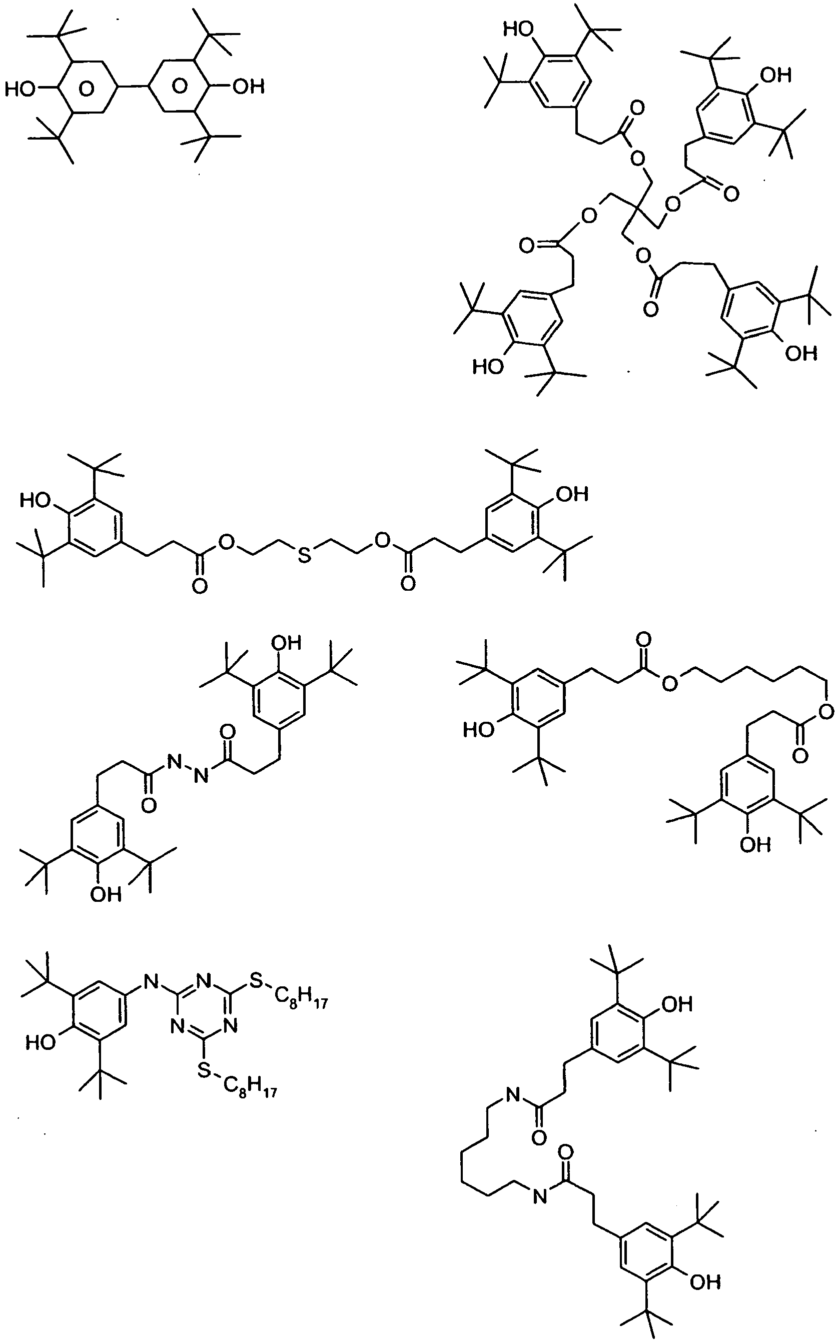

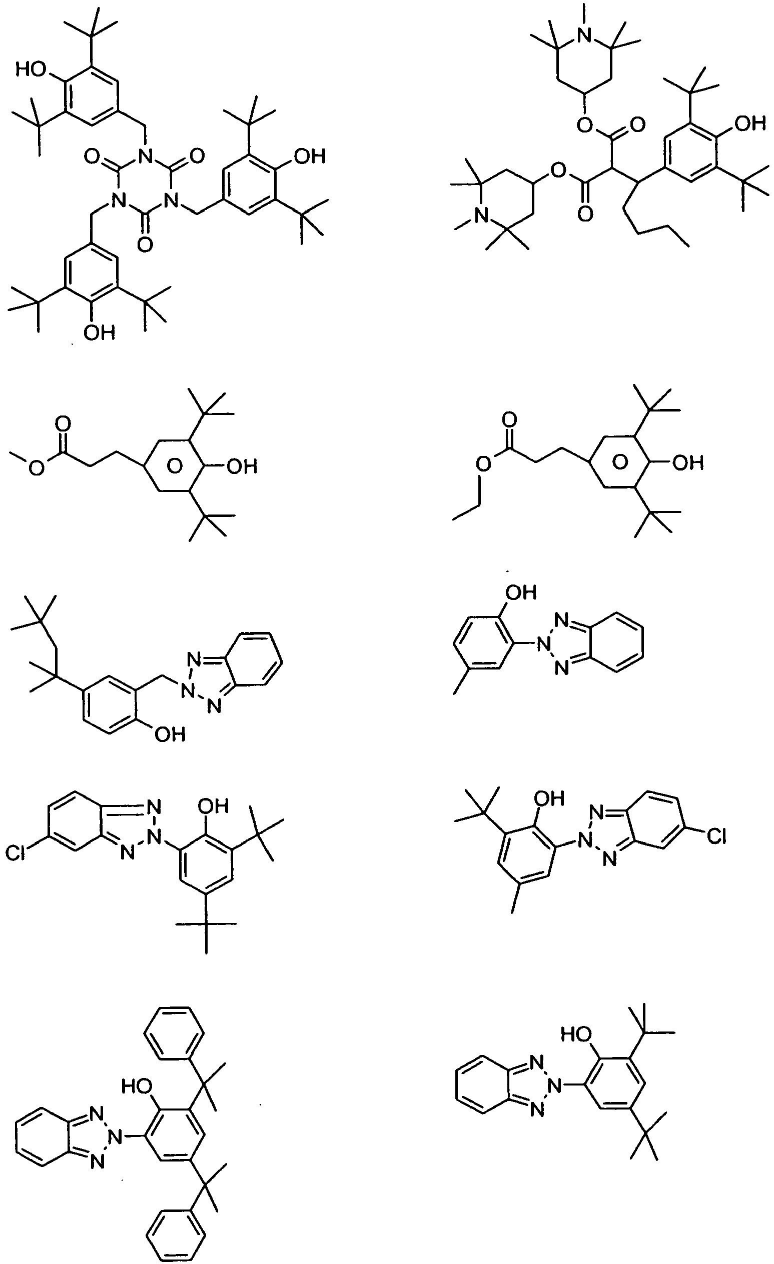

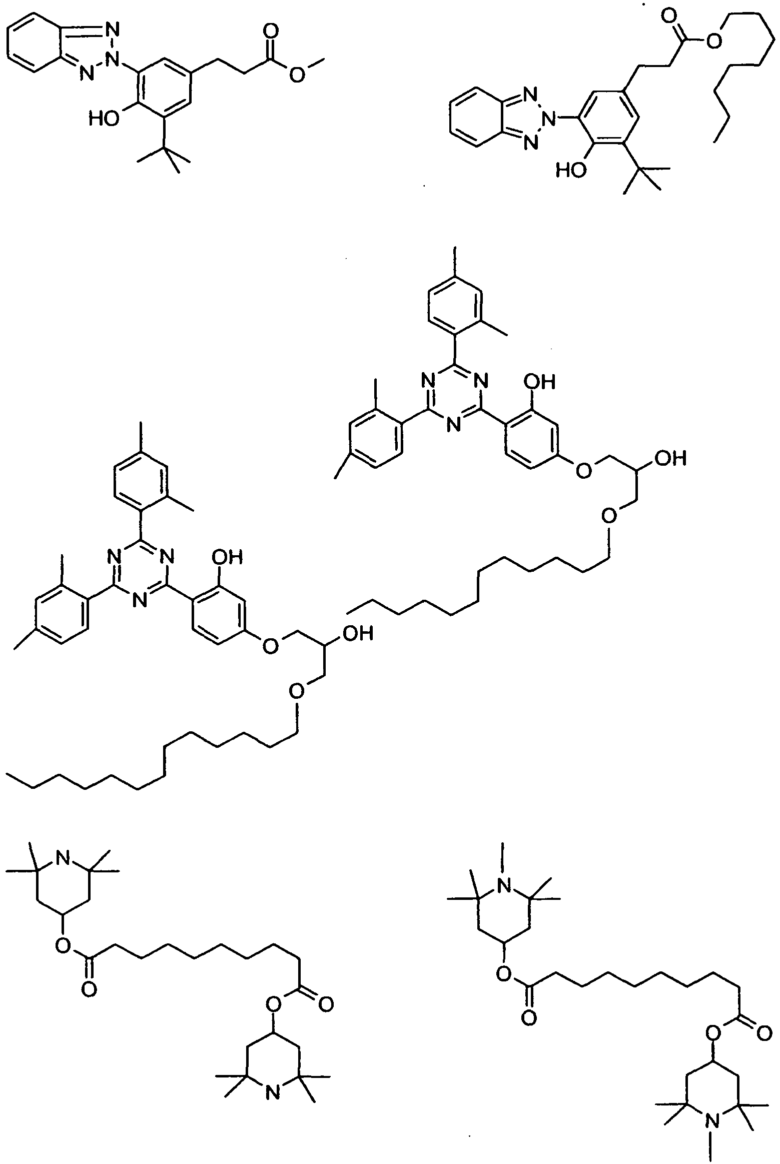

Vorzugsweise enthalten die FK-Medien 0 bis 10%, insbesondere 1 ppm bis 5% und besonders bevorzugt 1 ppm bis 1 % an Stabilisatoren. Vorzugsweise enthalten die FK-Medien einen oder mehrere Stabilisatoren ausgewählt aus der Gruppe bestehend aus Verbindungen der Tabelle C.

Außerdem werden folgende Abkürzungen und Symbole verwendet:
- Vₒ: Schwellenspannung, kapazitiv [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε: dielektrische Suszeptibilität senkrecht zum Direktor bei 20°C und 1 kHz,
- εₗₗ: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen und %-Werte (mit Ausnahme der Werte für HR, Kontrast und Transmission) in Gewichtsprozent angegeben und beziehen sich auf die jeweilige Gesamtmischung, enthaltend alle festen oder flüssigkristallinen Komponenten, ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10% relativen Kontrast (V₁₀) angegeben werden.

Die zur Messung der kapazitiven Schwellenspannung verwendete Anzeige besteht aus zwei planparallelen Glasträgerplatten im Abstand von 20 µm, welche auf den Innenseiten jeweils ein Elektrodenschicht sowie eine darüberliegende, ungeriebene Orientierungsschicht aus Polyimid aufweisen, die eine homöotrope Randorientierung der Flüssigkristallmoleküle bewirken.

Die zur Messung der Tiltwinkel verwendete Anzeige bzw. Testzelle besteht aus zwei planparallelen Glasträgerplatten im Abstand von 4 µm, welche auf den Innenseiten jeweils ein Elektrodenschicht sowie eine darüberliegende Orientierungsschicht aus Polyimid aufweisen, wobei die beiden Polyimidschichten antiparallel zueinander gerieben werden und eine homöotrope Randorientierung der Flüssigkristallmoleküle bewirken.

Die polymerisierbaren Verbindungen werden in der Anzeige bzw. Testzelle durch Bestrahlung mit UVA-Licht bei vorgegebener Zeit polymerisiert, wobei gleichzeitig eine Spannung an die Anzeige angelegt wird (üblicherweise 10V bis 30V Wechselstrom, 1 kHz). In den Beispielen wird, falls nicht anders angegeben, eine Quecksilberdampflampe mit 28 mW/cm² verwendet, die Intensität wird mit einem Standard-UV-Meter (Fabrikat Ushio UNI meter) gemessen, der mit einem Bandpassfilter bei 365nm ausgerüstet ist.

Der Tiltwinkel wird per Drehkristall-Experiment (Autronic-Melchers TBA-105) bestimmt. Ein niedriger Wert (d.h. eine große Abweichung vom 90°-Winkel) entspricht dabei einem großen Tilt.

Der VHR -Wert wird wie folgt gemessen: Zur FK-Host-Mischung werden 0.3% einer polymerisierbaren monomeren Verbindung zugesetzt, und die dadurch entstandene Mischung in TN-VHR-Testzellen gefüllt (90° gerieben, Orientierungsschicht TN-Polyimid, Schichtdicke d≈4µm). Der HR-Wert wird nach 5min bei 100°C vor und nach 2h UV-Belastung (suntest) bei 1V, 60Hz, 64µs pulse bestimmt (Messgerät: Autronic-Melchers VHRM-105).

### Beispiel 1

Die erfindungsgemäße nematische FK-Mischung N1 wird wie folgt formuliert

| | | | |
|---|---|---|---|
| CEY-3-O2 | 15,00 % | Kp. | + 70,5 |
| CEY-5-O2 | 15,00 % | Δn | 0,0869 |
| CPY-3-O2 | 11,00% | Δε | - 2,9 |
| CPY-2-O2 | 11,00 % | εₗₗ | 3,4 |
| II1a | 3,00 % | K₃/K₁ | 0,92 |
| CCH-25 | 15,00 % | γₗ | 115 |
| CCH-23 | 10,00 % | V₀ | 2,33 |
| CCH-34 | 10,00 % | | |
| CCP-3-1 | 5,00 % | | |
| CCP-3-3 | 5,00 % | | |

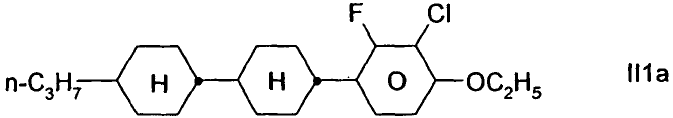

### Beispiel 2

Die erfindungsgemäße nematische FK-Mischung N2 wird wie folgt formuliert

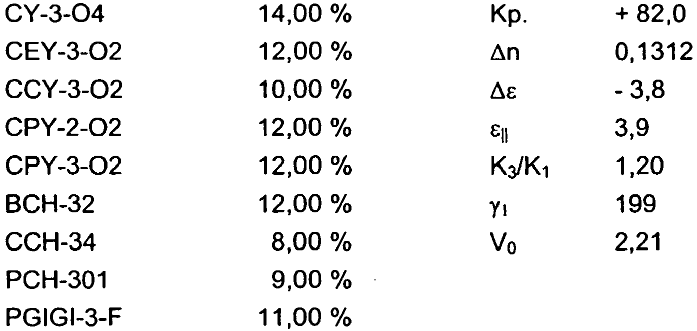

### Beispiel 3

Die erfindungsgemäße nematische FK-Mischung N3 wird wie folgt formuliert

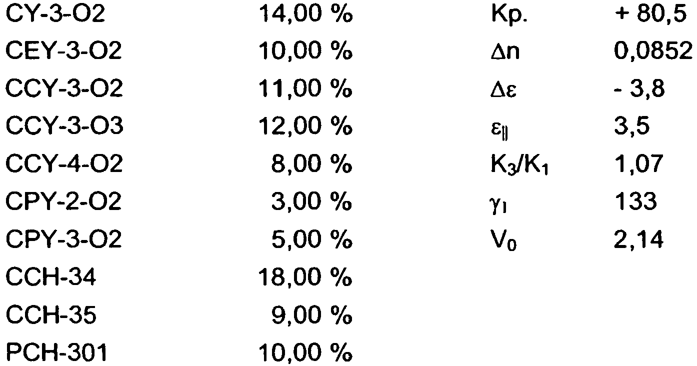

### Beispiel 4

Zu Vergleichszwecken wird die nematische FK-Mischung V1 wie folgt formuliert

| | | | |
|---|---|---|---|
| CY-3-O2 | 16,00 % | Kp. | + 71,0 |
| CY-5-O2 | 14,00 % | Δn | 0,0822 |
| CCY-3-O2 | 12,00 % | Δε | - 3,8 |
| CCY-5-O2 | 11,00 % | εₗₗ | 3,6 |

| | | | |
|---|---|---|---|
| CCY-2-1 | 9,00 % | K₃/K₁ | 1,16 |
| CCY-3-1 | 8,00 % | γₗ | 133 |
| CCH-34 | 8,00 % | V₀ | 2,10 |
| CCH-35 | 9,00 % | | |
| PCH-53 | 7,00 % | | |
| PCH-301 | 6,00 % | | |

Zu den erfindungsgemäßen FK-Mischungen N1, N2 und N3 sowie der Vergleichsmischung V1 werden jeweils 0.3% des RM1 (Biphenyl-4,4'-dimethacrylat) zugesetzt:

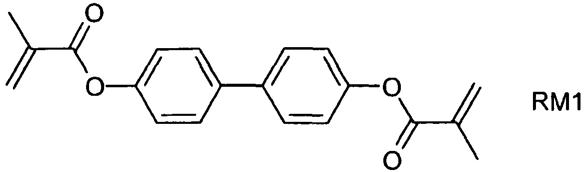

Die dadurch entstandene Mischung wird in VA-e/o-Testzellen wie oben beschrieben gefüllt. Unter Anlegen einer Spannung von 24V (Wechselstrom) werden die Zellen für verschiedene Dauer mit UV-Licht (365nm) der Intensität 50mW/cm² bestrahlt, dadurch erfolgt Polymerisation des RMs.

Für jede Testzelle wird der pretilt-Winkel wie oben angegeben bestimmt. Der für die verschiedenen Belichtungszeiten jeweils erzielte pretilt-Winkel ist in Tabelle 1 zusammengefasst.

**Tabelle 1**

| Mischung | Belichtungszeit [s] | Tilt [°] |
|---|---|---|
| V1 + RM1 | 0 | 89.3 |
| | 60 | 88.9 |
| | 120 | 86.6 |
| | 240 | 82.0 |
| | 360 | 79.6 |
| N1 + RM1 | 0 | 89.5 |
| | 60 | 87.5 |
| | 120 | 83.9 |
| | 240 | 80.2 |
| | 360 | 77.1 |
| N2 + RM1 | 120 | 84.0 |
| N3 + RM1 | 120 | 83.2 |

Wie aus Tabelle 1 ersichtlich ist, können mit den erfindungsgemäßen FK-Medien enthaltend eine erfindungsgemäße FK-Mischung N1, N2 oder N3 niedrigere pretilt-Winkel erzielt werden als mit dem FK-Medium enthaltend die Vergleichsmischung V1. Tabelle 1 zeigt auch, dass mit den erfindungsgemäßen FK-Medien bereits nach deutlich kürzerer Belichtungszeit vergleichbare pretilt-Winkel erreicht werden als mit dem FK-Medium enthaltend Vergleichsmischung V1.

## Patentansprüche

1. Verwendung von Flüssigkristall- (FK-) Mischungen enthaltend eine oder mehrere Verbindungen der Formel I 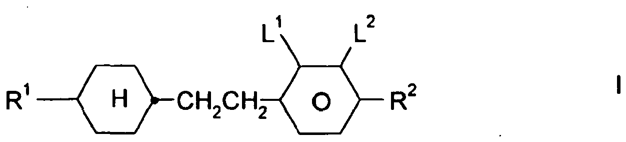 worin die einzelnen Reste folgende Bedeutung besitzen
R¹ und R² jeweils unabhängig voneinander Alkyl mit 1 bis 12 C-Atomen, wobei auch eine oder zwei nicht benachbarte CH₂-Gruppen durch -O-, -CH=CH-, -CO-, -OCO- oder - COO- so ersetzt sein können, dass O-Atome nicht direkt miteinander verknüpft sind, vorzugsweise Alkyl oder Alkoxy mit 1 bis 6 C-Atomen,
L¹ und L² jeweils unabhängig voneinander F, Cl, OCF₃, CF₃, CH₂F, CHF₂,
in FK-Anzeigen des PS-(polymer stabilized) oder PSA-(polymer sustained alignment) Typs.

2. Verwendung nach Anspruch 1, **dadurch gekennzeichnet, dass** die FK-Mischung zusätzlich zu den Verbindungen der Formel I eine oder mehrere Verbindungen der Formel II und/oder III enthält: 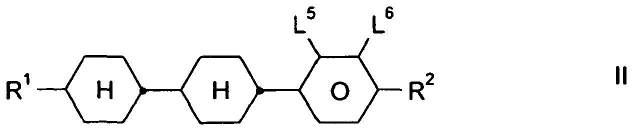 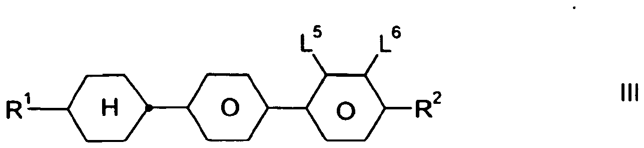 worin R¹ und R² die in Anspruch 1 angegebene Bedeutung besitzen, und einer der Reste L⁵ und L⁶ F und der andere Cl bedeutet.

3. Verwendung nach Anspruch 1 oder 2, **dadurch gekennzeichnet, dass** die FK-Mischung zusätzlich zu den Verbindungen der Formel I eine oder mehrere Verbindungen der Formel IV enthält: 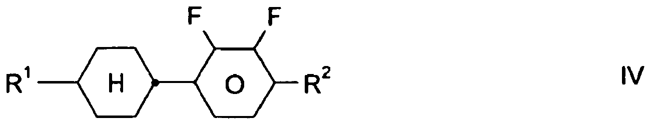 worin R¹ und R² die in Anspruch 1 angegebene Bedeutung besitzen.

4. Verwendung nach einem oder mehreren der Ansprüche 1 bis 3, **dadurch gekennzeichnet, dass** die FK-Mischung zusätzlich zu den Verbindungen der Formel I eine oder mehrere Verbindungen der Formel V enthält: 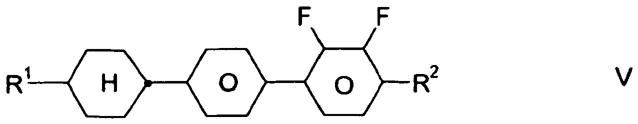 worin R¹ und R² die in Anspruch 1 angegebene Bedeutung besitzen.

5. Verwendung nach einem oder mehreren der Ansprüche 1 bis 4, **dadurch gekennzeichnet, dass** die FK-Mischung zusätzlich zu den Verbindungen der Formel I eine oder mehrere Verbindungen der Formel VI enthält: 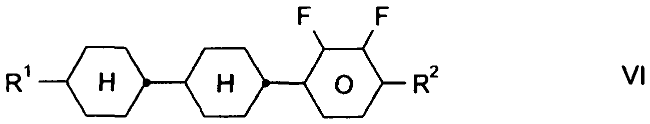 worin R¹ und R² die in Anspruch 1 angegebene Bedeutung besitzen.

6. Verwendung nach einem oder mehreren der Ansprüche 1 bis 5, **dadurch gekennzeichnet, dass** die FK-Mischung keine Verbindungen enthält, welche eine oder mehrere Alkenylgruppen aufweisen, oder welche eine oder mehrere Alkylgruppen aufweisen, worin eine oder mehrere CH₂-Gruppen durch CH=CH und ggf. zusätzlich durch andere Gruppen ersetzt sind.

7. Verwendung nach einem oder mehreren der Ansprüche 1 bis 6, **dadurch gekennzeichnet, dass** die FK-Mischung 5 bis 50% einer oder mehrerer Verbindungen der Formel I enthält.

8. Verwendung nach einem oder mehreren der Ansprüche 1 bis 7, **dadurch gekennzeichnet, dass** die FK-Mischung eine oder mehrere Verbindungen der Formel II und III in einer Gesamtkonzentration von 1 bis 20% enthält.

9. Verwendung nach einem oder mehreren der Ansprüche 1 bis 8, **dadurch gekennzeichnet, dass** die FK-Mischung eine oder mehrere Verbindungen der Formel I und IV in einer Gesamtkonzentration ≥ 10% enthält.

10. Verwendung nach einem oder mehreren der Ansprüche 1 bis 9, **dadurch gekennzeichnet, dass** die FK-Mischung eine oder mehrere Verbindungen der Formel I und V in einer Gesamtkonzentration ≥ 20% enthält.

11. Verwendung nach einem oder mehreren der Ansprüche 1 bis 10, **dadurch gekennzeichnet, dass** die FK-Mischung eine oder mehrere Verbindungen der Formel I und eine oder mehrere Verbindungen der Formel V und eine oder mehrere Verbindungen der Formel VI in einer Gesamtkonzentration ≥ 25% enthält.

12. FK-Medium enthaltend
- eine polymerisierbare Komponente A) enthaltend eine oder mehrere polymerisierbare Verbindungen, sowie
- eine flüssigkristalline Komponente B) bestehend aus einer FK-Mischung nach einem oder mehreren der Ansprüche 1 bis 11.

13. FK-Medium enthaltend
- ein Polymer erhältlich durch Polymerisation einer polymerisierbaren Komponente A) enthaltend eine oder mehrere polymerisierbare Verbindungen, sowie
- eine flüssigkristalline Komponente B) bestehend aus einer FK-Mischung nach einem oder mehreren der Ansprüche 1 bis 11,
worin die Konzentration der polymerisierbaren Komponente A) ≤ 5% beträgt.

14. Verwendung eines FK-Mediums nach Anspruch 12 oder 13 in PS- und PSA-Anzeigen zur Erzeugung eines Tiltwinkels im FK-Medium durch in situ-Polymerisation der polymerisierbare(n) Verbindung(en) in der PSA-Anzeige unter Anlegen eines elektrischen oder magnetischen Feldes.

15. FK-Anzeige des PS- oder PSA-Typs enthaltend eine FK-Mischung oder ein FK-Medium nach einem oder mehreren der Ansprüche 1 bis 13.

16. FK-Anzeige nach Anspruch 15, **dadurch gekennzeichnet, dass** sie eine PSA-VA-, PS-IPS- oder PS-FFS-Anzeige ist.

17. FK-Anzeige, enthaltend eine FK-Zelle bestehend aus zwei Substraten und zwei Elektroden, wobei mindestens ein Substrat lichtdurchlässig ist und mindestens ein Substrat eine oder zwei Elektroden aufweist, sowie einer zwischen den Substraten befindlichen Schicht eines FK-Mediums enthaltend eine polymerisierte Komponente und eine niedermolekulare Komponente, wobei die polymerisierte Komponente erhältlich ist durch Polymerisation einer oder mehrerer polymerisierbarer Verbindungen zwischen den Substraten der FK-Zelle im FK-Medium, vorzugsweise unter Anlegen einer elektrischen Spannung an die Elektroden, und wobei die niedermolekulare Komponente eine FK-Mischung nach einem oder mehreren der Ansprüche 1 bis 11 ist.

18. Verfahren zur Herstellung einer FK-Anzeige nach einem oder mehreren der Ansprüche 15 bis 17, indem man eine FK-Mischung nach einem oder mehreren der Ansprüche 1 bis 11 mit einer oder mehreren polymerisierbaren Verbindungen, und gegebenenfalls mit weiteren flüssigkristallinen Verbindungen und/oder Additiven, mischt, die so erhaltene Mischung in eine FK-Zelle wie in Anspruch 17 beschrieben füllt, und die polymerisierbare(n) Verbindung(en) unter Anlegen einer elektrischen Spannung polymerisiert.

19. Verwendung, FK-Medium oder FK-Anzeige nach einem oder mehreren der Ansprüche 1 bis 17, **dadurch gekennzeichnet, dass** die polymerisierbare Komponente eine oder mehrere polymerisierbare Verbindungen der Formel I* enthält
R^{a}-A¹-(Z¹-A²)ₘ-R^{b} I*
worin die einzelnen Reste folgende Bedeutung haben
R^{a} und R^{b} jeweils unabhängig voneinander P, P-Sp-, H, Halogen, SF₅, NO₂, eine Kohlenstoffgruppe oder Kohlenwasserstoffgruppe, wobei mindestens einer der Reste R^{a} und R^{b} eine Gruppe P oder P-Sp- bedeutet oder enthält,
P bei jedem Auftreten gleich oder verschieden eine polymerisierbare Gruppe,
Sp bei jedem Auftreten gleich oder verschieden eine Abstandsgruppe oder eine Einfachbindung,
A¹ und A² jeweils unabhängig voneinander eine aromatische, heteroaromatische, alicyclische oder heterocyclische Gruppe, vorzugsweise mit 4 bis 25 Ringatomen, welche auch anellierte Ringe enthalten kann, und welche auch durch L ein- oder mehrfach substituiert sein kann,
L P-Sp-, H, OH, CH₂OH, Halogen, SF₅, NO₂, eine Kohlenstoffgruppe oder Kohlenwasserstoffgruppe,
Z¹ bei jedem Auftreten gleich oder verschieden -O-, -S-, - CO-, -CO-O-, -OCO-, -O-CO-O-, -OCH₂-, -CH₂O-, - SCH₂-, -CH₂S-, -CF₂O-, -OCF₂-, -CF₂S-, -SCF₂-, - (CH₂)ₙ₁-, -CF₂CH₂-, -CH₂CF₂-, -(CF₂)ₙ₁-, -CH=CH-, - CF=CF-, -C≡C-, -CH=CH-COO-, -OCO-CH=CH-, CR⁰R⁰⁰ oder eine Einfachbindung,
R⁰ und R⁰⁰ jeweils unabhängig voneinander H oder Alkyl mit 1 bis 12 C-Atomen,
m 0, 1, 2, 3 oder 4,
n1 1, 2, 3 oder 4.

20. Verwendung, FK-Medium oder FK-Anzeige nach Anspruch 19, **dadurch gekennzeichnet, dass** die Konzentration der polymerisierbaren Komponente ≤ 5% und ≥ 0.01% beträgt.

21. Verwendung, FK-Medium oder FK-Anzeige nach Anspruch 19 oder 20, **dadurch gekennzeichnet, dass** in den Verbindungen der Formel I*
R^{a} und R^{b} jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, Br, I, CN, P oder P-Spersetzt sein können, wobei mindestens einer der Reste R^{a} und R^{b} eine Gruppe P oder P-Sp- bedeutet oder enthält,
A¹ und A² jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
L P, P-Sp-, OH, CH₂OH, F, Cl, Br, I, -CN, -NO₂ , -NCO, - NCS, -OCN, -SCN, -C(=O)N(R^{x})₂, -C(=O)Y¹, -C(=O)R^{x}, -N(R^{x})₂, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Spersetzt sein können,
P eine polymerisierbare Gruppe,
Y¹ Halogen,
R^{x} P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch - O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

22. Verwendung, FK-Medium oder FK-Anzeige nach einem oder mehreren der Ansprüche 19 bis 21, **dadurch gekennzeichnet, dass** die Verbindungen der Formel I* aus folgenden Unterformeln ausgewählt sind 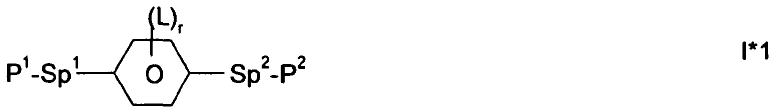 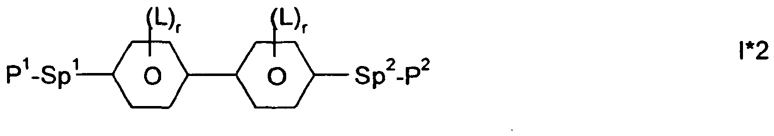 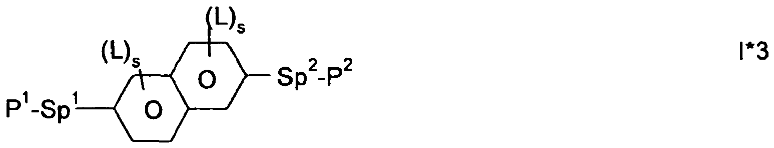 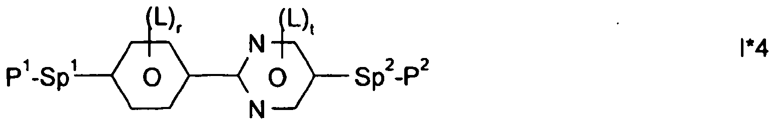 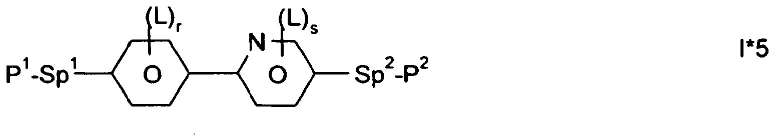 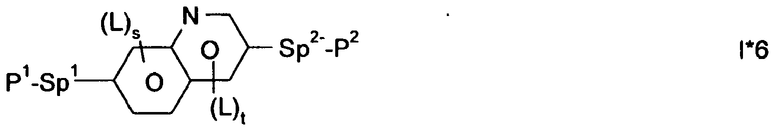 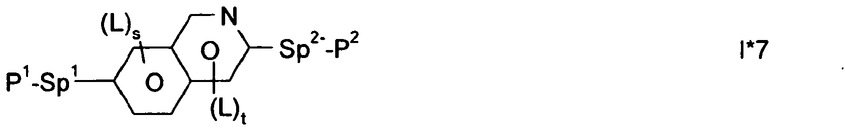 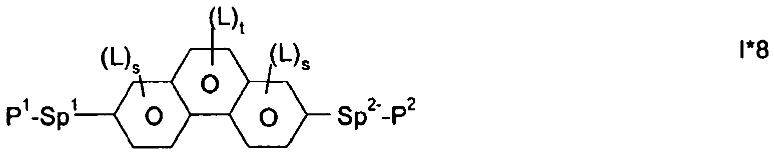 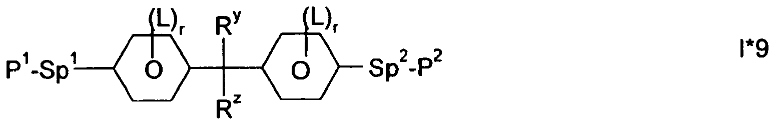 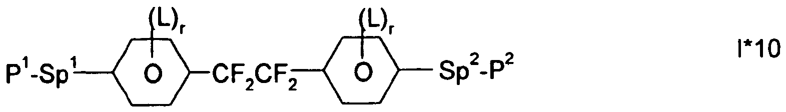 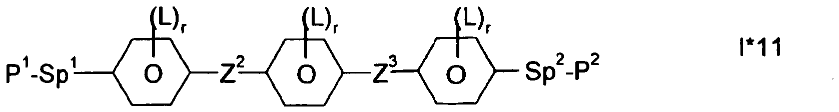 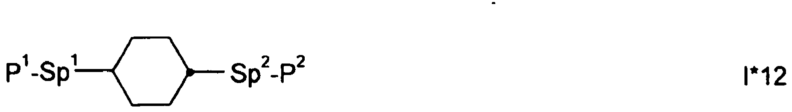 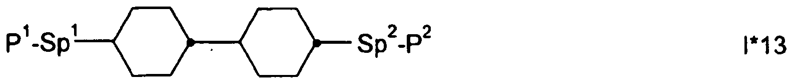 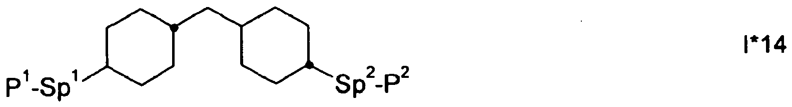 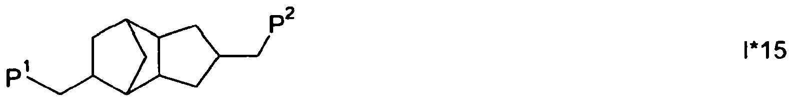 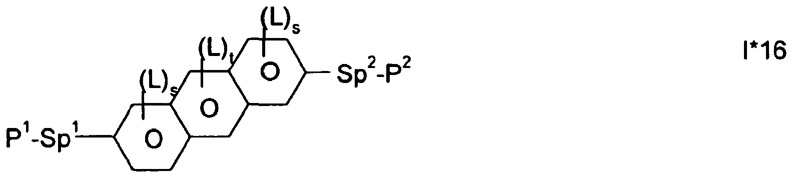 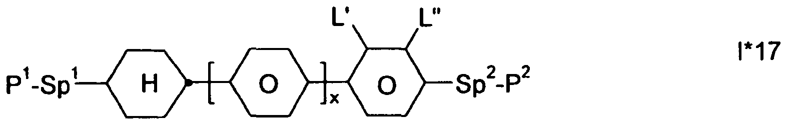 worin
P¹ und P² eine der für P in Anspruch 19 angegebenen Bedeutungen besitzen und vorzugsweise Acrylat oder Methacrylat bedeuten,
Sp¹ und Sp² eine der für Sp in Anspruch 19 angegebenen Bedeutungen besitzen oder eine Einfachbindung bedeuten,
Z² und Z³ jeweils unabhängig voneinander -COO- oder -OCO bedeuten,
L die in Anspruch 19 angegebene Bedeutung besitzt,
L' und L" jeweils unabhängig voneinander H, F oder Cl bedeuten,
r 0, 1, 2, 3 oder 4 bedeutet,
s 0, 1, 2 oder 3 bedeutet,
t 0, 1 oder 2 bedeutet,
x 0 oder 1, und
R^{y} und R^{z} jeweils unabhängig voneinander H, CH₃ oder CF₃ bedeuten.

## Claims

1. Use of liquid-crystal (LC) mixtures comprising one or more compounds of the formula I 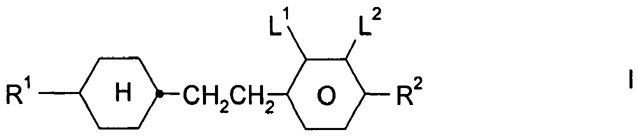 in which the individual radicals have the following meanings:
R¹ and R² each, independently of one another, denote alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
L¹ and L² each, independently of one another, denote F, Cl, OCF₃, CF₃, CH₂F, CHF₂,
in LC displays of the PS (polymer stabilised) or PSA (polymer sustained alignment) type.

2. Use according to Claim 1, **characterised in that**, in addition to the compounds of the formula I, the LC mixture comprises one or more compounds of the formula II and/or III: 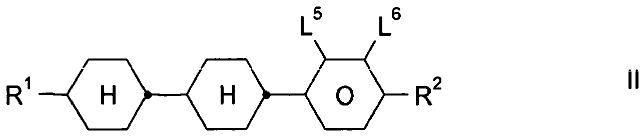 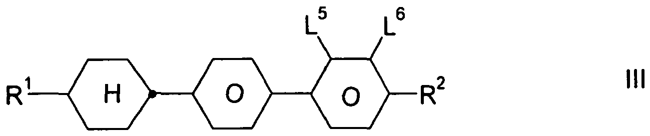 in which R¹ and R² have the meaning indicated in Claim 1, and one of the radicals L⁵ and L⁶ denotes F and the other denotes Cl.

3. Use according to Claim 1 or 2, **characterised in that**, in addition to the compounds of the formula I, the LC mixture comprises one or more compounds of the formula IV: 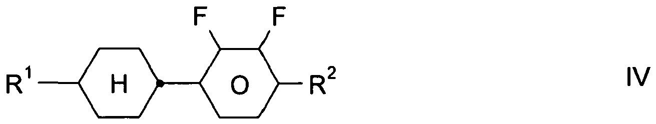 in which R¹ and R² have the meaning indicated in Claim 1.

4. Use according to one or more of Claims 1 to 3, **characterised in that**, in addition to the compounds of the formula I, the LC mixture comprises one or more compounds of the formula V: 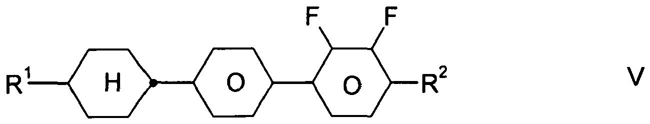 in which R¹ and R² have the meaning indicated in Claim 1.

5. Use according to one or more of Claims 1 to 4, **characterised in that**, in addition to the compounds of the formula I, the LC mixture comprises one or more compounds of the formula VI: 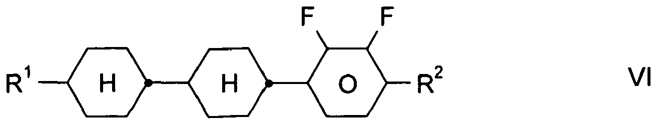 in which R¹ and R² have the meaning indicated in Claim 1.

6. Use according to one or more of Claims 1 to 5, **characterised in that** the LC mixture comprises no compounds which contain one or more alkenyl groups or which contain one or more alkyl groups in which one or more CH₂ groups have been replaced by CH=CH and optionally additionally by other groups.

7. Use according to one or more of Claims 1 to 6, **characterised in that** the LC mixture comprises 5 to 50% of one or more compounds of the formula I.

8. Use according to one or more of Claims 1 to 7, **characterised in that** the LC mixture comprises one or more compounds of the formulae II and III in a total concentration of 1 to 20%.

9. Use according to one or more of Claims 1 to 8, **characterised in that** the LC mixture comprises one or more compounds of the formulae I and IV in a total concentration of 2≥ 10%.

10. Use according to one or more of Claims 1 to 9, **characterised in that** the LC mixture comprises one or more compounds of the formulae I and V in a total concentration of ≥ 20%.

11. Use according to one or more of Claims 1 to 10, **characterised in that** the LC mixture comprises one or more compounds of the formula I and one or more compounds of the formula V and one or more compounds of the formula VI in a total concentration of ≥ 25%.

12. LC medium comprising
- a polymerisable component A) comprising one or more polymerisable compounds, and
- a liquid-crystalline component B) consisting of an LC mixture according to one or more of Claims 1 to 11.

13. LC medium comprising
- a polymer obtainable by polymerisation of a polymerisable component A) comprising one or more polymerisable compounds, and
- a liquid-crystalline component B) consisting of an LC mixture according to one or more of Claims 1 to 11,
in which the concentration of polymerisable component A) is ≤ 5%.

14. Use of an LC medium according to Claim 12 or 13 in PS and PSA displays for the generation of a tilt angle in the LC medium by in-situ polymerisation of the polymerisable compound(s) in the PSA display with application of an electric or magnetic field.

15. LC display of the PS or PSA type containing an LC mixture or LC medium according to one or more of Claims 1 to 13.

16. LC display according to Claim 15, **characterised in that** it is a PSA-VA, PS-IPS or PS-FFS display.

17. LC display comprising an LC cell consisting of two substrates and two electrodes, where at least one substrate is transparent to light and at least one substrate has one or two electrodes, and a layer, located between the substrates, of an LC medium comprising a polymerised component and a low-molecular-weight component, where the polymerised component is obtainable by polymerisation of one or more polymerisable compounds in the LC medium between the substrates of the LC cell, preferably with application of an electrical voltage to the electrodes, and where the low-molecular-weight component is an LC mixture according to one or more of Claims 1 to 11.

18. Process for the production of an LC display according to one or more of Claims 15 to 17 by mixing an LC mixture according to one or more of Claims 1 to 11 with one or more polymerisable compounds, and optionally with further liquid-crystalline compounds and/or additives, introducing the resultant mixture into an LC cell as described in Claim 17, and polymerising the polymerisable compound(s) with application of an electrical voltage.

19. Use, LC medium or LC display according to one or more of Claims 1 to 17, **characterised in that** the polymerisable component comprises one or more polymerisable compounds of the formula I*
R^{a}-A¹-(Z¹-A²)ₘ-R^{b} I*
in which the individual radicals have the following meanings:
R^{a} and R^{b} each, independently of one another, denote P, P-Sp-, H, halogen, SF₅, NO₂, a carbon group or hydrocarbon group, where at least one of the radicals R^{a} and R^{b} denotes or contains a group P or P-Sp-,
P on each occurrence, identically or differently, denotes a polymerisable group,
Sp on each occurrence, identically or differently, denotes a spacer group or a single bond,
A¹ and A² each, independently of one another, denote an aromatic, heteroaromatic, alicyclic or heterocyclic group, preferably having 4 to 25 ring atoms, which may also contain fused rings, and which may also be mono- or polysubstituted by L,
L denotes P-Sp-, H, OH, CH₂OH, halogen, SF₅, NO₂, a carbon group or hydrocarbon group,
Z¹ on each occurrence, identically or differently, denotes -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
R⁰ and R⁰⁰ each, independently of one another, denote H or alkyl having 1 to 12 C atoms,
m denotes 0, 1, 2, 3 or 4,
n1 denotes 1, 2, 3 or 4.

20. Use, LC medium or LC display according to Claim 19, **characterised in that** the concentration of the polymerisable component is ≤ 5% and ≥ 0.01%.

21. Use, LC medium or LC display according to Claim 19 or 20, **characterised in that**, in the compounds of the formula I*,
R^{a} and R^{b} each, independently of one another, denote P, P-Sp-, H, F, Cl, Br, I, -CN, -NO₂, -NCO, -NCS, -OCN, -SCN, SF₅ or straight-chain or branched alkyl having 1 to 25 C atoms, in which, in addition, one or more non-adjacent CH₂ groups may each be replaced, independently of one another, by -C(R⁰)=C(R⁰⁰)-, -C≡C-, -N(R⁰⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where at least one of the radicals R^{a} and R^{b} denotes or contains a group P or P-Sp-,
A¹ and A² each, independently of one another, denote 1,4-phenylene, naphthalene-1,4-diyl, naphthalene-2,6-diyl, phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L,
L denotes P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,
P denotes a polymerisable group,
Y¹ denotes halogen,
R^{x} denotes P, P-Sp-, H, halogen, straight-chain, branched or cyclic alkyl having 1 to 25 C atoms, in which, in addition, one or more non-adjacent CH₂ groups may be replaced by -O-, -S-, -CO-, -CO-O-, -O-CO-, -O-CO-O-in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

22. Use, LC medium or LC display according to one or more of Claims 19 to 21, **characterised in that** the compounds of the formula I* are selected from the following sub-formulae: 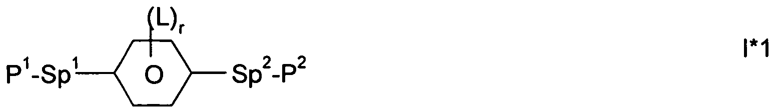 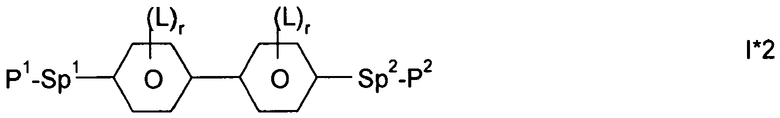 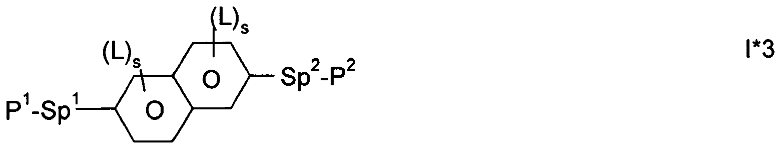 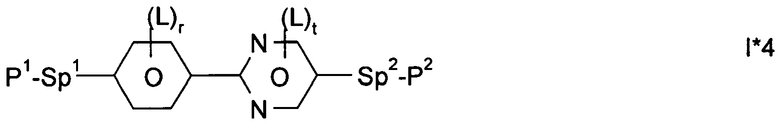 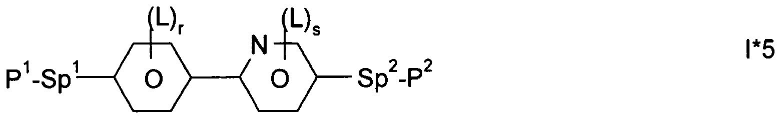 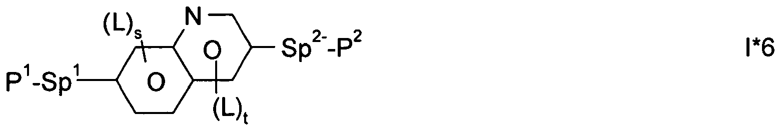 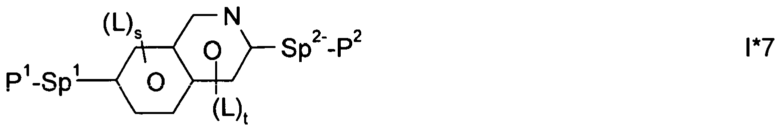 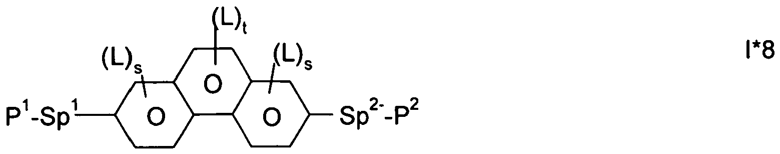 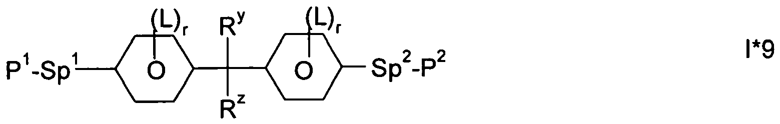 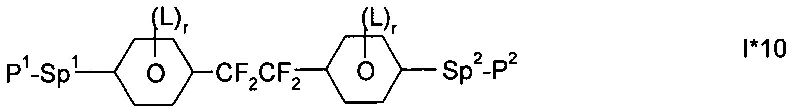 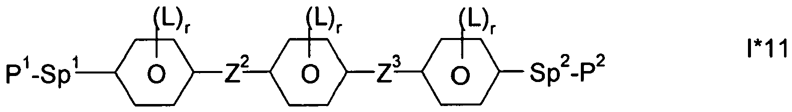 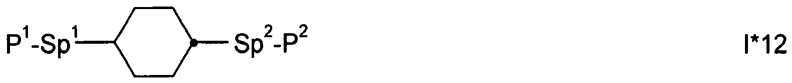 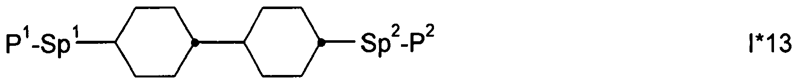 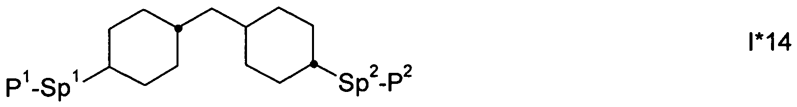 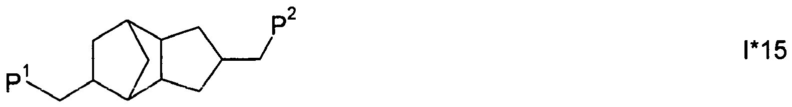 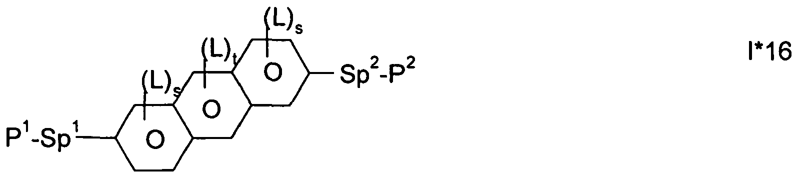 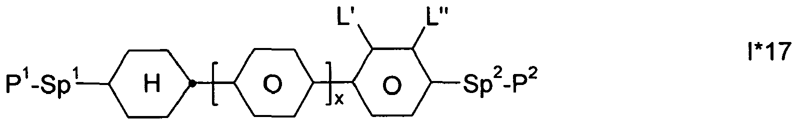 in which
P¹ and P² have one of the meanings indicated for P in Claim 19 and preferably denote acrylate or methacrylate,
Sp¹ and Sp² have one of the meanings indicated for Sp in Claim 19 or denote a single bond,
Z² and Z³ each, independently of one another, denote -COO- or -OCO-,
L has the meaning indicated in Claim 19,
L' and L" each, independently of one another, denote H, F or Cl,
r denotes 0, 1, 2, 3 or 4,
s denotes 0, 1, 2 or 3,
t denotes 0, 1 or 2,
x denotes 0 or 1, and
R^{y} and R^{z} each, independently of one another, denote H, CH₃ or CF₃.

## Revendications

1. Utilisation de mélanges de cristaux liquides (LC) comprenant un ou plusieurs composés de la formule I 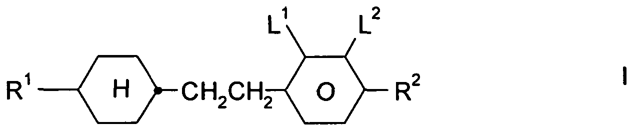 dans laquelle les radicaux individuels présentent les significations qui suivent :
R¹ et R² représentent, chacun indépendamment de l'autre, alkyle comportant de 1 à 12 atomes de C, où, en outre, un ou deux groupes CH₂ non adjacents peut/peuvent être remplacé(s) par -O-, -CH=CH-, -CO-, -OCO- ou -COO- de telle sorte que des atomes de O ne soient pas liés directement les uns aux autres, de préférence alkyle ou alcoxy comportant de 1 à 6 atomes de C,
L¹ et L² représentent, chacun indépendamment de l'autre, F, Cl, OCF₃, CF₃, CH₂F, CHF₂,
dans des affichages LC du type PS (polymère stabilisé) ou PSA (alignement durable des polymères).

2. Utilisation selon la revendication 1, **caractérisée en ce que**, en plus des composés de la formule I, le mélange de LC comprend un ou plusieurs composés des formules II et/ou III : 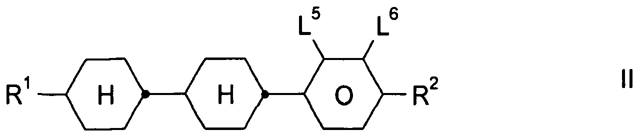 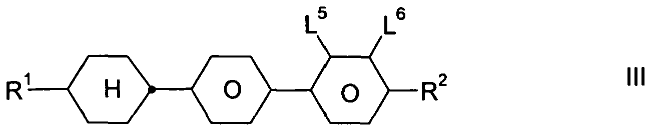 dans lesquelles R¹ et R² présentent la signification indiquée selon la revendication 1, et l'un des radicaux L⁵ et L⁶ représente F et l'autre représente Cl.

3. Utilisation selon la revendication 1 ou 2, **caractérisée en ce que**, en plus des composés de la formule I, le mélange de LC comprend un ou plusieurs composés de la formule IV: 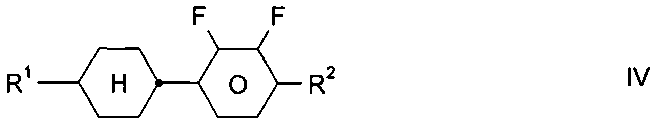 dans laquelle R¹ et R² présentent la signification indiquée selon la revendication 1.

4. Utilisation selon une ou plusieurs des revendications 1 à 3, **caractérisée en ce que**, en plus des composés de la formule I, le mélange de LC comprend un ou plusieurs composés de la formule V : 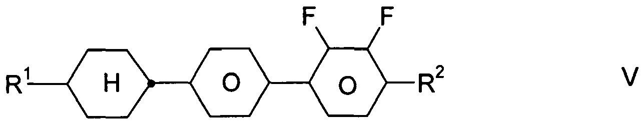 dans laquelle R¹ et R² présentent la signification indiquée selon la revendication 1.

5. Utilisation selon une ou plusieurs des revendications 1 à 4, **caractérisée en ce que**, en plus des composés de la formule I, le mélange de LC comprend un ou plusieurs composés de la formule VI: 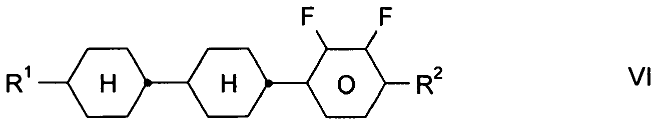 dans laquelle R¹ et R² présentent la signification indiquée selon la revendication 1.

6. Utilisation selon une ou plusieurs des revendications 1 à 5, **caractérisée en ce que** le mélange de LC ne comprend pas de composés qui contiennent un ou plusieurs groupes alkényle ou qui contiennent un ou plusieurs groupes alkyle où un ou plusieurs groupes CH₂ a/ont été remplacé(s) par CH=CH et en option, additionnellement par d'autres groupes.

7. Utilisation selon une ou plusieurs des revendications 1 à 6, **caractérisée en ce que** le mélange de LC comprend 5 à 50% d'un ou de plusieurs composés de la formule I.

8. Utilisation selon une ou plusieurs des revendications 1 à 7, **caractérisée en ce que** le mélange de LC comprend un ou plusieurs composés des formules II et III selon une concentration totale de 1 à 20%.

9. Utilisation selon une ou plusieurs des revendications 1 à 8, **caractérisée en ce que** le mélange de LC comprend un ou plusieurs composés des formules I et IV selon une concentration totale ≥ 10%.

10. Utilisation selon une ou plusieurs des revendications 1 à 9, **caractérisée en ce que** le mélange de LC comprend un ou plusieurs composés des formules I est V selon une concentration totale ≥ 20%.

11. Utilisation selon une ou plusieurs des revendications 1 à 10, **caractérisée en ce que** le mélange de LC comprend un ou plusieurs composés de la formule I est un ou plusieurs composés de la formule V et un ou plusieurs composés de la formule VI selon une concentration totale ≥ 25%.

12. Milieu LC comprenant :
- un composant polymérisable A) comprenant un ou plusieurs composés polymérisables, et
- un composant cristallin liquide B) constitué par un mélange de LC selon une ou plusieurs des revendications 1 à 11.

13. Milieu LC comprenant :
- un polymère pouvant être obtenu par polymérisation d'un composant polymérisable A) comprenant un ou plusieurs composés polymérisables, et
- un composant cristallin liquide B) constitué par un mélange de LC selon une ou plusieurs des revendications 1 à 11,
où la concentration en composant polymérisable A) est ≤ 5%.

14. Utilisation d'un milieu LC selon la revendication 12 ou 13 dans des affichages PS et PSA pour la génération d'un angle d'inclinaison dans le milieu LC par polymérisation in situ du/des composé(s) polymérisable(s) dans l'affichage PSA avec application d'un champ électrique ou magnétique.

15. Affichage LC du type PS ou PSA contenant un mélange de LC ou un milieu LC selon une ou plusieurs des revendications 1 à 13.

16. Affichage LC selon la revendication 15, **caractérisé en ce qu'**il s'agit d'un affichage PSA-VA, PS-IPS ou PS-FFS.

17. Affichage LC comprenant une cellule LC constituée par deux substrats et deux électrodes, où au moins un substrat est transparent vis-à-vis de la lumière et au moins un substrat comporte une ou deux électrodes, et par une couche, localisée entre les substrats, d'un milieu LC comprenant un composant polymérisé et un composant de poids moléculaire faible, où le composant polymérisé peut être obtenu par polymérisation d'un ou de plusieurs composés polymérisables dans le milieu LC entre les substrats de la cellule LC, de préférence avec application d'une tension électrique entre les électrodes, et où le composant de poids moléculaire faible est un mélange de LC selon une ou plusieurs des revendications 1 à 11.

18. Procédé pour la production d'un affichage LC selon une ou plusieurs des revendications 15 à 17 en mélangeant un mélange de LC selon une ou plusieurs des revendications 1 à 11 avec un ou plusieurs composés polymérisables, et en option, avec d'autres composés cristallins liquides et/ou additifs, en introduisant le mélange résultant à l'intérieur d'une cellule LC comme décrit selon la revendication 17, et en polymérisant le/les composé(s) polymérisable(s) avec application d'une tension électrique.

19. Utilisation, milieu LC ou affichage LC selon une ou plusieurs des revendications 1 à 17, caractérisé(e) en ce que le composant polymérisable comprend un ou plusieurs composés polymérisables de la formule I*
R^{a}-A¹-(Z¹-A²)ₘ-R^{b} I*
dans laquelle les radicaux individuels présentent les significations qui suivent :
R^{a} et R^{b} représentent, chacun indépendamment de l'autre, P, P-Sp-, H, halogène, SF₅, NO₂, un groupe carbone ou un groupe hydrocarbone, où au moins l'un des radicaux R^{a} et R^{b} représente ou contient un groupe P ou P-Sp-,
P représente, pour chaque occurrence, de manière identique ou différente, un groupe polymérisable,
Sp représente, pour chaque occurrence, de manière identique ou différente, un groupe d'espaceur ou une liaison simple,
A¹ et A² représentent, chacun indépendamment de l'autre, un groupe aromatique, hétéroaromatique, alicyclique ou hétérocyclique, de préférence comportant de 4 à 25 atomes de cycle, lequel peut également contenir des cycles fusionnés, et lequel peut également être mono- ou polysubstitué par L,
L représente P-Sp-, H, OH, CH₂OH, halogène, SF₅, NO₂, un groupe carbone ou un groupe hydrocarbone,
Z¹ représente, pour chaque occurrence, de manière identique ou différente, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ ou une liaison simple,
R⁰ et R⁰⁰ représentent, chacun indépendamment de l'autre, H ou alkyle comportant de 1 à 12 atomes de C,
m représente 0, 1, 2, 3 ou 4,
n1 représente 1, 2, 3 ou 4.

20. Utilisation, milieu LC ou affichage LC selon la revendication 19, caractérisé(e) en ce que la concentration du composant polymérisable est ≤ 5% et ≥ 0,01%.

21. Utilisation, milieu LC ou affichage LC selon la revendication 19 ou 20, caractérisé(e) en ce que, dans les composés de la formule I*,
R^{a} et R^{b} représentent, chacun indépendamment de l'autre, P, P-Sp-, H, F, Cl, Br, I, -CN, -NO₂, -NCO, -NCS, -OCN, -SCN, SF₅ ou alkyle en chaîne droite ou ramifié comportant de 1 à 25 atomes de C, où, en outre, un ou plusieurs groupes CH₂ non adjacents peuvent chacun être remplacés, indépendamment les uns des autres, par -C(R⁰)=C(R⁰⁰)-, -C≡C-, -N(R⁰⁰)-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atomes de H peut/peuvent être remplacé(s) par F, Cl, Br, I, CN, P ou P-Sp-, où au moins l'un des radicaux R^{a} et R^{b} représente ou contient un groupe P ou P-Sp-,
A¹ et A² représentent, chacun indépendamment de l'autre, 1,4-phénylène, naphtalène-1,4-diyle, naphtalène-2,6-diyle, phénanthrène-2,7-diyle, anthracène-2,7-diyle, fluorène-2,7-diyle, coumarine, flavone, où, en outre, un ou plusieurs groupes CH dans ces groupes peut/peuvent être remplacé(s) par N, cyclohexane-1,4-diyle, où, en outre, un ou plusieurs groupes CH₂ non adjacent(s) peut/peuvent être remplacé(s) par O et/ou S, 1,4-cyclo-hexénylène, bicyclo[1.1.1]pentane-1,3-diyle, bicyclo-[2.2.2]octane-1,4-diyle, spiro[3.3]heptane-2,6-diyle, pipéridine-1,4-diyle, décahydronaphtalène-2,6-diyle, 1,2,3,4-tétrahydronaphtalène-2,6-diyle, indane-2,5-diyle ou octahydro-4,7-méthanoindane-2,5-diyle, où tous ces groupes peuvent être non substitués ou mono- ou poly-substitués par L,
L représente P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})₂, silyle en option substitué, aryle en option substitué comportant de 6 à 20 atomes de C, ou alkyle, alcoxy, alkylcarbonyle, alcoxy-carbonyle, alkylcarbonyloxy ou alcoxycarbonyloxy en chaîne droite ou ramifié comportant de 1 à 25 atomes de C, où, en outre, un ou plusieurs atomes de H peut/peuvent être remplacé(s) par F, Cl, P ou P-Sp-,
P représente un groupe polymérisable,
Y¹ représente halogène,
R^{x} représente P, P-Sp-, H, halogène, alkyle en chaîne droite, ramifié ou cyclique comportant de 1 à 25 atomes de C, où, en outre, un ou plusieurs groupes CH₂ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres, et où, en outre, un ou plusieurs atomes de H peut/peuvent être remplacé(s) par F, Cl, P ou P-Sp-, un groupe aryle ou aryloxy en option substitué comportant de 6 à 40 atomes de C, ou un groupe hétéroaryle ou hétéroaryloxy en option substitué comportant de 2 à 40 atomes de C.

22. Utilisation, milieu LC ou affichage LC selon une ou plusieurs des revendications 19 à 21, caractérisé(e) en ce que les composés de la formule I* sont choisis parmi les sous-formules qui suivent : 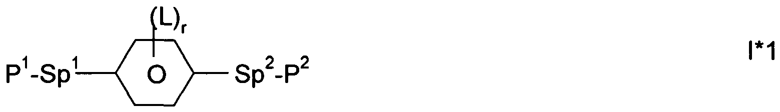 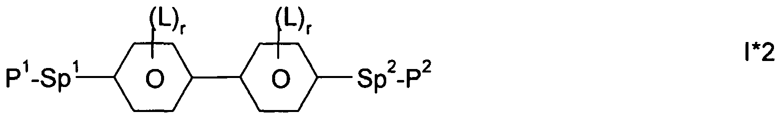 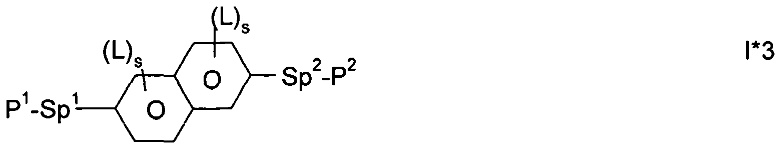 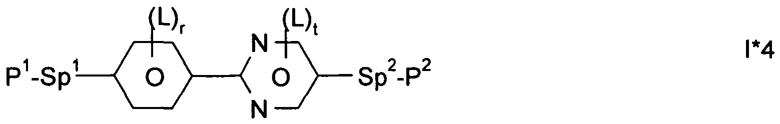 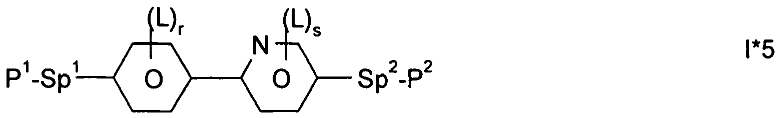 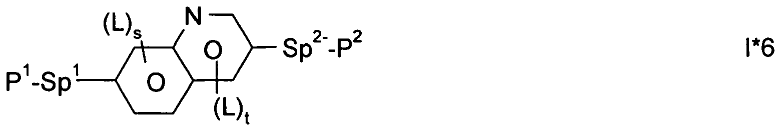 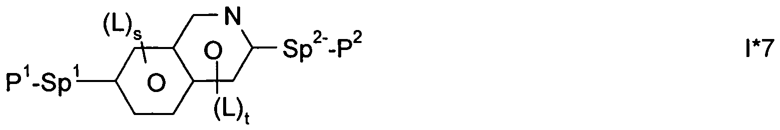 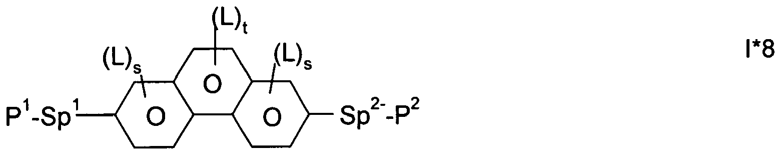 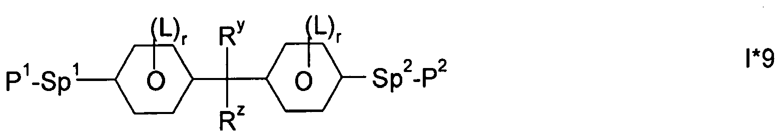 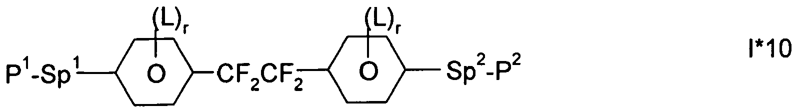 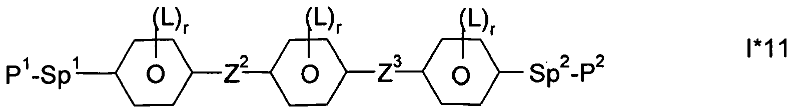 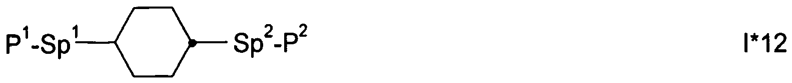 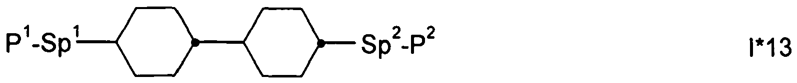 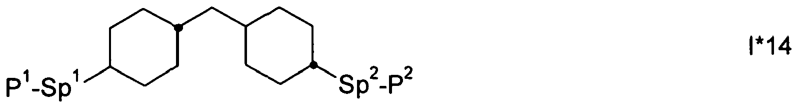 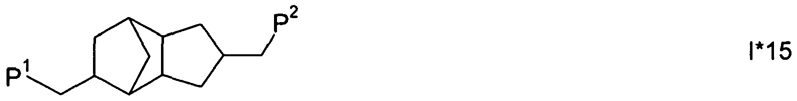 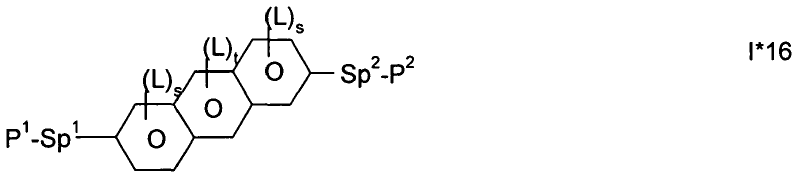 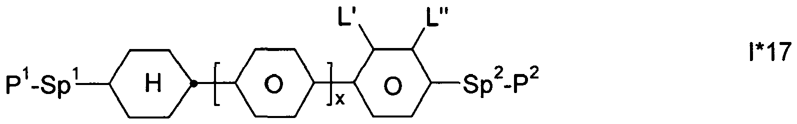 dans lesquelles
P¹ et P² présentent l'une des significations indiquées pour P selon la revendication 19 et de préférence, représentent acrylate ou méthacrylate,
Sp¹ et Sp² présentent l'une des significations indiquées pour Sp selon la revendication 19 ou représentent une liaison simple,
Z² et Z³ représentent, chacun indépendamment de l'autre, -COO- ou -OCO-,
L présente la signification indiquée selon la revendication 19,
L' et L" représentent, chacun indépendamment de l'autre, H, F ou Cl,
r représente 0, 1, 2, 3 ou 4,
s représente 0, 1, 2 ou 3,
t représente 0, 1 ou 2,
x représente 0 ou 1, et
R^{y} et R^{z} représentent, chacun indépendamment de l'autre, H, CH₃ ou CF₃.
